# EUROPEAN PATENT APPLICATION

(11) **EP 4 564 880 A1**
(43) Date of publication of application: **04.06.2025**
(21) Application number: 23845360.9
(22) Date of filing: 17.07.2023
(51) Int. Cl.: H04W 24/02

(54) **POSITIONING METHOD, TERMINAL, NETWORK SIDE DEVICE, LMF, AND STORAGE MEDIUM**

(30) Priority: 25.07.2022 CN 202210879283
(71) Applicant: Datang Mobile Communications Equipment Co., Ltd., Beijing 100085 (CN)
(72) Inventor: REN, Bin, Beijing 100085 (CN); DA, Ren, Beijing 100085 (CN); REN, Xiaotao, Beijing 100085 (CN)
(74) Representative: Studio Torta S.p.A.
(86) International application number: PCT/CN2023/107704
(87) International publication number: WO 2024/022148

(57) **Abstract**

The present disclosure provides a positioning method, a terminal, a network-side device, an LMF, and a storage medium. The method comprises: obtaining, by a first terminal, configuration information of a positioning reference signal (PRS), wherein the PRS comprises a first PRS, and the configuration information comprises at least one of a first time-domain configuration and a first bandwidth configuration of the first PRS, wherein the first time-domain configuration comprises at least one of the following: for a periodic first PRS, a maximum of 14 symbols are occupied in one period; for a non-periodic first PRS, consecutive N slots are occupied, where N is an integer greater than or equal to 1; and wherein the first bandwidth configuration indicates that the number of physical resource block (PRB) resources occupied by the first PRS is less than 24. The first terminal performs positioning operation based on the configuration information.

## Description

### CROSS-REFERENCE TO RELATED APPLICATIONS

This application claims priority to Chinese Patent Application No. 202210879283.6, filed on July 25, 2022, in China, the entirety of which is incorporated herein by reference.

### TECHNICAL FIELD

The present disclosure relates to the field of communication technologies, and more particularly to a positioning method, terminal, network-side device, Location Management Function (LMF), and storage medium.

### BACKGROUND

In current communications system, Positioning Reference Signal (PRS) is primarily used for positioning. However, the maximum symbol quantity occupied by PRS in the current communications system is 12, and the minimum bandwidth of resources occupied by PRS is 24 Physical Resource Blocks (PRBs), resulting in poor transmission reliability of PRS.

### SUMMARY

Embodiments of the present disclosure provide a positioning method, a terminal, a network-side device, an LMF, and a storage medium, to solve the problem of poor transmission reliability of PRS.

The embodiments of the present disclosure provide a positioning method, including:
obtaining, by a first terminal, configuration information of a PRS, wherein the PRS includes a first PRS, and the configuration information includes at least one of a first time-domain configuration and a first bandwidth configuration of the first PRS, and wherein the first time-domain configuration includes at least one of the following: a maximum number of symbols occupied by one cycle of the periodic first PRS being 14, the non-periodic first PRS occupying N consecutive time slots, where N is an integer greater than or equal to 1, and the first bandwidth configuration is used to indicate that PRB resources occupied by the first PRS include PRB resources of fewer than 24 PRBs;
performing, by the first terminal, positioning operations based on the configuration information.

Optionally, the configuration information further includes at least one of the following:
a first subcarrier spacing number of the first PRS, where the first subcarrier spacing number includes a subcarrier spacing number greater than 12, and the subcarrier spacing number refers to the number of subcarriers between two adjacent subcarriers in the frequency domain occupied by the first PRS on the same symbol;
first periodicity information of the first PRS, where the first periodicity information includes at least one of periodic, semi-persistent, and aperiodic;
first pattern information of the first PRS, where the first pattern information includes at least one of:
   non-staggered pattern, staggered pattern, and partially staggered pattern.

Optionally, the PRS further includes a second PRS, and the configuration information further includes at least one of a second time-domain configuration and a second bandwidth configuration of the second PRS, and wherein the second time-domain configuration includes at least one of the following: a maximum number of symbols occupied by one cycle of the periodic second PRS being 14, the non-periodic second PRS occupying N consecutive time slots; and the second bandwidth configuration is used to indicate that PRB resources occupied by the second PRS include fewer than 24 PRBs.

Optionally, the configuration information further includes at least one of the following:
a second subcarrier spacing number of the second PRS, where the second subcarrier spacing number includes a subcarrier spacing number greater than 12, and the subcarrier spacing number refers to the number of subcarriers between two adjacent subcarriers in the frequency domain occupied by the second PRS on the same symbol;
second periodicity information of the second PRS, where the second periodicity information includes at least one of periodic, semi-persistent, and aperiodic;
second pattern information of the second PRS, where the second pattern information includes at least one of:
   non-staggered pattern, staggered pattern, and partially staggered pattern.

Optionally, at least one difference exists between the first PRS and the second PRS, including:
size of frequency domain resources occupied, periodicity, or type of time-domain resources occupied.

Optionally, the size of frequency domain resources occupied by the first PRS is smaller than that of the second PRS; and/or
if both the first PRS and the second PRS are periodic signals, the periodicity of the first PRS is smaller than that of the second PRS; or the first PRS is a periodic signal, and the second PRS is a semi-persistent or aperiodic signal; or the first PRS is an aperiodic signal, and the second PRS is a semi-persistent or periodic signal.

Optionally, performing, by the first terminal, positioning operations based on the configuration information includes:
measuring, by the first terminal, at least one of the first PRS and the second PRS to obtain first measurement information, and transmitting the first measurement information to a location management function (LMF) or a second terminal, wherein at least one of the first PRS and the second PRS is transmitted by the network-side device or the second terminal;
transmitting, by the first terminal, one of the first PRS and the second PRS to the network-side device, and measuring the other of the first PRS and the second PRS transmitted by the network-side device to obtain second measurement information, and transmitting the second measurement information to the LMF or the second terminal;
transmitting, by the first terminal, at least one of the first PRS and the second PRS to the network-side device.

Optionally, the first measurement information is used to report at least one of the following:
first positioning measurement values, first positioning measurement qualities;
or, the second measurement information is used to report at least one of the following:
   second positioning measurement values, second positioning measurement qualities.

Optionally, the first positioning measurement values include at least one of the following:
phase measurements obtained based on the first PRS, delay measurements obtained based on the second PRS, angle measurements obtained based on the second PRS, power measurements obtained based on the second PRS;
or, the first positioning measurement values include at least one of the following:
   phase measurements obtained based on both the first PRS and the second PRS, delay measurements obtained based on both the first PRS and the second PRS, angle measurements obtained based on both the first PRS and the second PRS, power measurements obtained based on both the first PRS and the second PRS;
   or, the first positioning measurement values include at least one of the following:
      third measurement values obtained by smoothing second measurement values based on first measurement values, where the first measurement values are measurements obtained based on the first PRS, and the second measurement values include at least one of: delay measurements obtained based on the second PRS, angle measurements obtained based on the second PRS, power measurements obtained based on the second PRS;
      or, the second positioning measurement values include at least one of the following:
         based on the phase measurement obtained from the first PRS measurement, the delay measurement obtained from the first PRS measurement, the angle measurement obtained from the first PRS measurement, and the power measurement obtained from the first PRS measurement;
         alternatively, the second positioning measurement includes at least one of the following:
            based on the phase measurement obtained from the second PRS measurement, the delay measurement obtained from the second PRS measurement, the angle measurement obtained from the second PRS measurement, and the power measurement obtained from the second PRS measurement.

Embodiments of the present disclosure further provide a positioning method, including:
sending, by network-side equipment, configuration information of positioning reference signal (PRS) to a first terminal, where the PRS includes a first PRS, the configuration information includes at least one of a first time-domain configuration and a first bandwidth configuration of the first PRS, the first time-domain configuration includes at least one of the following: the maximum number of symbols occupied by one period of the periodic first PRS is 14, the non-periodic first PRS occupies N consecutive slots, where N is an integer greater than or equal to 1, and the first bandwidth configuration is used to indicate that the number of physical resource block (PRB) resources occupied by the first PRS is less than 24;
performing, by the network-side equipment, positioning operations based on the configuration information.

Optionally, the configuration information further includes at least one of the following:
the first subcarrier spacing number of the first PRS, where the first subcarrier spacing number includes a subcarrier spacing number greater than 12, and the subcarrier spacing number is the number of subcarriers spaced between two adjacent subcarriers in the frequency domain occupied by the first PRS in the same symbol;
the first period information of the first PRS, where the first period information includes at least one of the following: periodic, semi-persistent, and aperiodic;
the first pattern information of the first PRS, where the first pattern information includes at least one of the following:
   non-staggered pattern, staggered pattern, and partially staggered pattern.

Optionally, the PRS further includes a second PRS, and the configuration information further includes at least one of a second time-domain configuration and a second bandwidth configuration of the second PRS, where the second time-domain configuration includes at least one of the following: the maximum number of symbols occupied by one period of the periodic second PRS is 14, the non-periodic second PRS occupies N consecutive slots, and the second bandwidth configuration is used to indicate that the number of PRB resources occupied by the second PRS is less than 24.

Optionally, the configuration information further includes at least one of the following:
the second subcarrier spacing number of the second PRS, where the second subcarrier spacing number includes a subcarrier spacing number greater than 12, and the subcarrier spacing number is the number of subcarriers spaced between two adjacent subcarriers in the frequency domain occupied by the second PRS in the same symbol;
the second period information of the second PRS, where the second period information includes at least one of the following: periodic, semi-persistent, and aperiodic;
the second pattern information of the second PRS, where the second pattern information includes at least one of the following:
   non-crossed staggered pattern, staggered pattern, and partially staggered pattern.

Optionally, the first PRS and the second PRS differ in at least one of the following:
the resource size of the frequency-domain resources occupied, the period, and the resource type of the time-domain resources occupied.

Optionally, the resource size of the frequency-domain resources occupied by the first PRS is smaller than the resource size of the frequency-domain resources occupied by the second PRS; and/or
in the case where the first PRS and the second PRS are periodic signals, the period of the first PRS is shorter than the period of the second PRS; or the first PRS is a periodic signal, and the second PRS is a semi-persistent or aperiodic signal; or the first PRS is an aperiodic signal, and the second PRS is a semi-persistent or periodic signal.

Optionally, the network-side equipment performs positioning operations based on the configuration information, including one of the following:
the network-side equipment measures at least one of the first PRS and the second PRS transmitted by the first terminal, obtains first measurement information, and transmits the first measurement information to the Location Management Function (LMF);
the network-side equipment transmits one of the first PRS and the second PRS to the first terminal and measures the other of the first PRS and the second PRS transmitted by the first terminal, obtains second measurement information, and transmits the second measurement information to the LMF;
the network-side equipment transmits at least one of the first PRS and the second PRS to the first terminal.

Optionally, the first measurement information is used to report at least one of the following:
the first positioning measurement, the first positioning measurement quality;
or, the second measurement information is used to report at least one of the following:
   the second positioning measurement, the second positioning measurement quality.

Optionally, the first positioning measurement includes at least one of the following:
based on the phase measurement obtained from the first PRS measurement, the delay measurement obtained from the second PRS measurement, the angle measurement obtained from the second PRS measurement, and the power measurement obtained from the second PRS measurement;
or, the first positioning measurement includes at least one of the following:
   based on the phase measurement obtained from the first PRS and the second PRS measurement, the delay measurement obtained from the first PRS and the second PRS measurement, the angle measurement obtained from the first PRS and the second PRS measurement, and the power measurement obtained from the first PRS and the second PRS measurement;
   or, the first positioning measurement includes at least one of the following:
      based on the first measurement for smoothing the second measurement to obtain a third measurement, where the first measurement is the measurement obtained based on the first PRS measurement, and the second measurement includes at least one of the following: the delay measurement obtained from the second PRS measurement, the angle measurement obtained from the second PRS measurement, and the power measurement obtained from the second PRS measurement;
      or, the second positioning measurement includes at least one of the following:
         based on the phase measurement obtained from the first PRS measurement, the delay measurement obtained from the first PRS measurement, the angle measurement obtained from the first PRS measurement, and the power measurement obtained from the first PRS measurement;
         or, the second positioning measurement includes at least one of the following:
            based on the phase measurement obtained from the second PRS measurement, the delay measurement obtained from the second PRS measurement, the angle measurement obtained from the second PRS measurement, and the power measurement obtained from the second PRS measurement.

Embodiments of the present disclosure further provide a positioning method, including:
sending, by the second terminal, PRS to the first terminal based on the configuration information of the positioning reference signal (PRS), where the PRS includes a first PRS, the configuration information includes at least one of the first time-domain configuration and the first bandwidth configuration of the first PRS, the first time-domain configuration includes at least one of the following: the maximum number of symbols occupied by one period of the periodic first PRS is 14, the non-periodic first PRS occupies N consecutive slots, where N is an integer greater than or equal to 1, and the first bandwidth configuration is used to indicate that the number of physical resource block (PRB) resources occupied by the first PRS is less than 24.

The second terminal receives the measurement information sent by the first terminal.

Optionally, the configuration information further includes at least one of the following:
the first subcarrier spacing number of the first PRS, where the first subcarrier spacing number includes a subcarrier spacing number greater than 12, and the subcarrier spacing number is the number of subcarriers spaced between two adjacent subcarriers in the frequency domain occupied by the first PRS in the same symbol;
the first period information of the first PRS, where the first period information includes at least one of the following: periodic, semi-persistent, and aperiodic;
the first pattern information of the first PRS, where the first pattern information includes at least one of the following:
   non-staggered pattern, staggered pattern, and partially staggered pattern.

Optionally, the PRS further includes a second PRS, and the configuration information further includes at least one of the second time-domain configuration and the second bandwidth configuration of the second PRS, where the second time-domain configuration includes at least one of the following: the maximum number of symbols occupied by one period of the periodic second PRS is 14, the non-periodic second PRS occupies N consecutive slots, and the second bandwidth configuration is used to indicate that the number of PRB resources occupied by the second PRS is less than 24.

Optionally, the configuration information further includes at least one of the following:
the second subcarrier spacing number of the second PRS, where the second subcarrier spacing number includes a subcarrier spacing number greater than 12, and the subcarrier spacing number is the number of subcarriers spaced between two adjacent subcarriers in the frequency domain occupied by the second PRS in the same symbol;
the second period information of the second PRS, where the second period information includes at least one of the following: periodic, semi-persistent, and aperiodic;
the second pattern information of the second PRS, where the second pattern information includes at least one of the following:
   non-crossed staggered pattern, staggered pattern, and partially staggered pattern.

Optionally, the first PRS and the second PRS differ in at least one of the following:
the resource size of the frequency-domain resources occupied, the period, and the resource type of the time-domain resources occupied.

Optionally, the resource size of the frequency-domain resources occupied by the first PRS is smaller than the resource size of the frequency-domain resources occupied by the second PRS; and/or
in the case where the first PRS and the second PRS are periodic signals, the period of the first PRS is shorter than the period of the second PRS; or the first PRS is a periodic signal, and the second PRS is a semi-persistent or aperiodic signal; or the first PRS is an aperiodic signal, and the second PRS is a semi-persistent or periodic signal.

Optionally, the second terminal sends PRS to the first terminal based on the configuration information of PRS, including one of the following:
the second terminal sends at least one of the first PRS and the second PRS to the first terminal;
the measurement information is the measurement information obtained by the first terminal measuring at least one of the first PRS and the second PRS.

Optionally, the measurement information is used to report at least one of the following:
positioning measurement, positioning measurement quality.

Optionally, the positioning measurement includes at least one of the following:
based on the phase measurement obtained from the first PRS measurement, the delay measurement obtained from the second PRS measurement, the angle measurement obtained from the second PRS measurement, and the power measurement obtained from the second PRS measurement;
or, the positioning measurement includes at least one of the following:
   based on the phase measurement obtained from the first PRS and the second PRS measurement, the delay measurement obtained from the first PRS and the second PRS measurement, the angle measurement obtained from the first PRS and the second PRS measurement, and the power measurement obtained from the first PRS and the second PRS measurement;
   or, the positioning measurement includes at least one of the following:
      based on the first measurement for smoothing the second measurement to obtain a third measurement, where the first measurement is the measurement obtained based on the first PRS measurement, and the second measurement includes at least one of the following: the delay measurement obtained from the second PRS measurement, the angle measurement obtained from the second PRS measurement, and the power measurement obtained from the second PRS measurement.

The present disclosure also provides a positioning method, including:
the LMF sends configuration information of the positioning reference signal (PRS) to the first terminal, where the PRS includes a first PRS, the configuration information includes at least one of the first time-domain configuration and the first bandwidth configuration of the first PRS, and the first time-domain configuration includes at least one of the following: the maximum number of symbols occupied by one period of the periodic first PRS is 14, the non-periodic first PRS occupies N consecutive slots, where N is an integer greater than or equal to 1, and the first bandwidth configuration is used to indicate that the number of physical resource block (PRB) resources occupied by the first PRS is less than 24;
the LMF obtains measurement information and resolves the location of the first terminal based on the measurement information.

Optionally, the configuration information further includes at least one of the following:
the first subcarrier spacing number of the first PRS, where the first subcarrier spacing number includes a subcarrier spacing number greater than 12, and the subcarrier spacing number is the number of subcarriers spaced between two adjacent subcarriers in the frequency domain occupied by the first PRS in the same symbol;
the first period information of the first PRS, where the first period information includes at least one of the following: periodic, semi-persistent, and aperiodic;
the first pattern information of the first PRS, where the first pattern information includes at least one of the following:
   non-crossed staggered pattern, staggered pattern, and partially staggered pattern.

Optionally, the PRS further includes a second PRS, and the configuration information further includes at least one of the second time-domain configuration and the second bandwidth configuration of the second PRS, where the second time-domain configuration includes at least one of the following: the maximum number of symbols occupied by one period of the periodic second PRS is 14, the non-periodic second PRS occupies N consecutive slots, and the second bandwidth configuration is used to indicate that the number of PRB resources occupied by the second PRS is less than 24.

Optionally, the configuration information further includes at least one of the following:
the second subcarrier spacing number of the second PRS, where the second subcarrier spacing number includes a subcarrier spacing number greater than 12, and the subcarrier spacing number is the number of subcarriers spaced between two adjacent subcarriers in the frequency domain occupied by the second PRS in the same symbol;
the second period information of the second PRS, where the second period information includes at least one of the following: periodic, semi-persistent, and aperiodic;
the second pattern information of the second PRS, where the second pattern information includes at least one of the following:
   non-staggered pattern, staggered pattern, and partially staggered pattern.

Optionally, the first PRS and the second PRS differ in at least one of the following:
the resource size of the frequency-domain resources occupied, the period, and the resource type of the time-domain resources occupied.

Optionally, the resource size of the frequency-domain resources occupied by the first PRS is smaller than the resource size of the frequency-domain resources occupied by the second PRS; and/or
in the case where the first PRS and the second PRS are periodic signals, the period of the first PRS is shorter than the period of the second PRS; or the first PRS is a periodic signal, and the second PRS is a semi-persistent or aperiodic signal; or the first PRS is an aperiodic signal, and the second PRS is a semi-persistent or periodic signal.

Optionally, the measurement information is used to report at least one of the following:
positioning measurement, positioning measurement quality.

Optionally, the positioning measurement includes at least one of the following:
based on the phase measurement obtained from the first PRS measurement, the delay measurement obtained from the second PRS measurement, the angle measurement obtained from the second PRS measurement, and the power measurement obtained from the second PRS measurement;
or, the positioning measurement includes at least one of the following:
   based on the phase measurement obtained from the first PRS and the second PRS measurement, the delay measurement obtained from the first PRS and the second PRS measurement, the angle measurement obtained from the first PRS and the second PRS measurement, and the power measurement obtained from the first PRS and the second PRS measurement;
   or, the positioning measurement includes at least one of the following:
      based on the first measurement for smoothing the second measurement to obtain a third measurement, where the first measurement is the measurement obtained based on the first PRS measurement, and the second measurement includes at least one of the following: the delay measurement obtained from the second PRS measurement, the angle measurement obtained from the second PRS measurement, and the power measurement obtained from the second PRS measurement.

The present disclosure also provides a terminal, where the terminal is the first terminal and includes: a memory, a transceiver, and a processor, wherein:

a memory, used to store a computer program; a transceiver, used to send and receive data under the control of the processor; a processor, used to read the computer program in the memory and execute the following operations:
obtain configuration information of the positioning reference signal (PRS), where the PRS includes a first PRS, the configuration information includes at least one of the first time-domain configuration and the first bandwidth configuration of the first PRS, and the first time-domain configuration includes at least one of the following: the maximum number of symbols occupied by one period of the periodic first PRS is 14, the non-periodic first PRS occupies N consecutive slots, where N is an integer greater than or equal to 1, and the first bandwidth configuration is used to indicate that the number of physical resource block (PRB) resources occupied by the first PRS is less than 24;
perform positioning operations based on the configuration information.

Optionally, the configuration information further includes at least one of the following:
the first subcarrier spacing number of the first PRS, where the first subcarrier spacing number includes a subcarrier spacing number greater than 12, and the subcarrier spacing number is the number of subcarriers spaced between two adjacent subcarriers in the frequency domain occupied by the first PRS in the same symbol;
the first period information of the first PRS, where the first period information includes at least one of the following: periodic, semi-persistent, and aperiodic;
the first pattern information of the first PRS, where the first pattern information includes at least one of the following:
   non-crossed staggered pattern, staggered pattern, and partially staggered pattern.

The present disclosure also provides a network-side device, including: a memory, a transceiver, and a processor, wherein:
a memory, used to store a computer program; a transceiver, used to send and receive data under the control of the processor; a processor, used to read the computer program in the memory and execute the following operations:
send configuration information of the positioning reference signal (PRS) to the first terminal, where the PRS includes a first PRS, the configuration information includes at least one of the first time-domain configuration and the first bandwidth configuration of the first PRS, and the first time-domain configuration includes at least one of the following: the maximum number of symbols occupied by one period of the periodic first PRS is 14, the non-periodic first PRS occupies N consecutive slots, where N is an integer greater than or equal to 1, and the first bandwidth configuration is used to indicate that the number of physical resource block (PRB) resources occupied by the first PRS is less than 24.

Performing positioning operations based on the configuration information.

Optionally, the configuration information further includes at least one of the following:
the first subcarrier spacing number of the first PRS, where the first subcarrier spacing number includes a subcarrier spacing number greater than 12, and the subcarrier spacing number is the number of subcarriers spaced between two adjacent subcarriers in the frequency domain occupied by the first PRS in the same symbol;
the first period information of the first PRS, where the first period information includes at least one of the following: periodic, semi-persistent, and aperiodic;
the first pattern information of the first PRS, where the first pattern information includes at least one of the following:
   non-staggered pattern, staggered pattern, and partially staggered pattern.

The present disclosure also provides a terminal, where the terminal is a second terminal, including: a memory, a transceiver, and a processor, wherein:
a memory, used to store a computer program; a transceiver, used to send and receive data under the control of the processor; a processor, used to read the computer program in the memory and perform the following operations:
sending, based on the configuration information of the positioning reference signal (PRS), the PRS to a first terminal, where the PRS includes a first PRS, the configuration information includes at least one of the first time-domain configuration and the first bandwidth configuration of the first PRS, the first time-domain configuration includes at least one of the following: the maximum number of symbols occupied by one period of the periodic first PRS is 14, the non-periodic first PRS occupies N consecutive slots, where N is an integer greater than or equal to 1, and the first bandwidth configuration is used to indicate that the number of physical resource block (PRB) resources occupied by the first PRS is less than 24;
receiving the measurement information transmitted by the first terminal.

Optionally, the configuration information further includes at least one of the following:
the first subcarrier spacing number of the first PRS, where the first subcarrier spacing number includes a subcarrier spacing number greater than 12, and the subcarrier spacing number is the number of subcarriers spaced between two adjacent subcarriers in the frequency domain occupied by the first PRS in the same symbol;
the first period information of the first PRS, where the first period information includes at least one of the following: periodic, semi-persistent, and aperiodic;
the first pattern information of the first PRS, where the first pattern information includes at least one of the following:
   non-staggered pattern, staggered pattern, and partially staggered pattern.

The present disclosure also provides an LMF, including: a memory, a transceiver, and a processor, wherein:
a memory, used to store a computer program; a transceiver, used to send and receive data under the control of the processor; a processor, used to read the computer program in the memory and perform the following operations:
sending configuration information of the positioning reference signal (PRS) to the first terminal, where the PRS includes a first PRS, the configuration information includes at least one of the first time-domain configuration and the first bandwidth configuration of the first PRS, and the first time-domain configuration includes at least one of the following: the maximum number of symbols occupied by one period of the periodic first PRS is 14, the non-periodic first PRS occupies N consecutive slots, where N is an integer greater than or equal to 1, and the first bandwidth configuration is used to indicate that the number of physical resource block (PRB) resources occupied by the first PRS is less than 24;
obtaining measurement information and resolving the position of the first terminal based on the measurement information.

Optionally, the configuration information further includes at least one of the following:
the first subcarrier spacing number of the first PRS, where the first subcarrier spacing number includes a subcarrier spacing number greater than 12, and the subcarrier spacing number is the number of subcarriers spaced between two adjacent subcarriers in the frequency domain occupied by the first PRS in the same symbol;
the first period information of the first PRS, where the first period information includes at least one of the following: periodic, semi-persistent, and aperiodic;
the first pattern information of the first PRS, where the first pattern information includes at least one of the following:
   non-crossed staggered pattern, staggered pattern, and partially staggered pattern.

The present disclosure also provides a terminal, where the terminal is a first terminal, including:
an acquisition unit, configured to acquire configuration information of the positioning reference signal (PRS), where the PRS includes a first PRS, the configuration information includes at least one of the first time-domain configuration and the first bandwidth configuration of the first PRS, and the first time-domain configuration includes at least one of the following: the maximum number of symbols occupied by one period of the periodic first PRS is 14, the non-periodic first PRS occupies N consecutive slots, where N is an integer greater than or equal to 1, and the first bandwidth configuration is used to indicate that the number of physical resource block (PRB) resources occupied by the first PRS is less than 24;
an execution unit, configured to perform positioning operations based on the configuration information.

The present disclosure also provides a network-side device, including:
a sending unit, configured to send configuration information of the positioning reference signal (PRS) to a first terminal, where the PRS includes a first PRS, the configuration information includes at least one of the first time-domain configuration and the first bandwidth configuration of the first PRS, and the first time-domain configuration includes at least one of the following: the maximum number of symbols occupied by one period of the periodic first PRS is 14, the non-periodic first PRS occupies N consecutive slots, where N is an integer greater than or equal to 1, and the first bandwidth configuration is used to indicate that the number of physical resource block (PRB) resources occupied by the first PRS is less than 24;
an execution unit, configured to perform positioning operations based on the configuration information.

The present disclosure also provides a terminal, where the terminal is a second terminal, including:
a sending unit, configured to send the PRS to a first terminal based on the configuration information of the positioning reference signal (PRS), where the PRS includes a first PRS, the configuration information includes at least one of the first time-domain configuration and the first bandwidth configuration of the first PRS, and the first time-domain configuration includes at least one of the following: the maximum number of symbols occupied by one period of the periodic first PRS is 14, the non-periodic first PRS occupies N consecutive slots, where N is an integer greater than or equal to 1, and the first bandwidth configuration is used to indicate that the number of physical resource block (PRB) resources occupied by the first PRS is less than 24;
a receiving unit, configured to receive the measurement information transmitted by the first terminal.

The present disclosure also provides an LMF, including:
a sending unit, configured to send configuration information of the positioning reference signal (PRS) to a first terminal, where the PRS includes a first PRS, the configuration information includes at least one of the first time-domain configuration and the first bandwidth configuration of the first PRS, and the first time-domain configuration includes at least one of the following: the maximum number of symbols occupied by one period of the periodic first PRS is 14, the non-periodic first PRS occupies N consecutive slots, where N is an integer greater than or equal to 1, and the first bandwidth configuration is used to indicate that the number of physical resource block (PRB) resources occupied by the first PRS is less than 24;
a resolving unit, configured to obtain measurement information and resolve the location of the first terminal based on the measurement information.

The present disclosure also provides a processor-readable storage medium, where the processor-readable storage medium stores a computer program, and the computer program is configured to cause the processor to execute the positioning method on the first terminal side, or the computer program is configured to cause the processor to execute the positioning method on the network-side device, or the computer program is configured to cause the processor to execute the positioning method on the second terminal side, or the computer program is configured to cause the processor to execute the positioning method on the LMF side.

In the embodiments of the present disclosure, the first terminal obtains configuration information of the PRS, where the PRS includes a first PRS; the configuration information includes at least one of the first time-domain configuration and the first bandwidth configuration of the first PRS; the first time-domain configuration includes at least one of the following: the maximum number of symbols occupied by one period of the periodic first PRS is 14, the non-periodic first PRS occupies N consecutive slots, where N is an integer greater than or equal to 1; the first bandwidth configuration is used to indicate that the number of physical resource block (PRB) resources occupied by the first PRS is less than 24; the first terminal performs positioning operations based on the configuration information. In this way, the periodic PRS used for positioning supports a maximum of 14 symbols occupied in one period; the non-periodic PRS supports occupying N consecutive slots, enabling the PRS to occupy more symbols, thereby improving the transmission reliability of the PRS. Additionally, the PRS resources occupied by the PRS support a minimum PRB of less than 24 PRBs, allowing small-bandwidth terminals to receive the PRS; this further enhances the transmission reliability of the PRS.

### BRIEF DESCRIPTION OF THE DRAWINGS

FIG. 1 shows a schematic diagram of a network architecture applicable to the embodiments of the present disclosure;
FIG. 2 shows a first schematic flow chart of a positioning method according to an embodiment of the present disclosure;
FIG. 3 shows a schematic diagram of a signal configuration according to an embodiment of the present disclosure;
FIG. 4 shows a schematic diagram of another signal configuration according to an embodiment of the present disclosure;
FIG. 5 shows a flow chart of another signal configuration according to an embodiment of the present disclosure;
FIG. 6 shows a flow chart of another signal configuration according to an embodiment of the present disclosure;
FIG. 7 shows a flow chart of another signal configuration according to an embodiment of the present disclosure;
FIG. 8 shows a structural diagram of a terminal according to an embodiment of the present disclosure;
FIG. 9 shows a structural diagram of a network-side device according to an embodiment of the present disclosure;
FIG. 10 shows a structural diagram of another terminal according to an embodiment of the present disclosure;
FIG. 11 shows a structural diagram of an LMF according to an embodiment of the present disclosure;
FIG. 12 shows a structural diagram of another terminal according to an embodiment of the present disclosure;
FIG. 13 shows a structural diagram of another network-side device according to an embodiment of the present disclosure;
FIG. 14 shows a structural diagram of another terminal according to an embodiment of the present disclosure;
FIG. 15 shows a structural diagram of an LMF according to an embodiment of the present disclosure.

### DETAILED DESCRIPTION

To make the technical problems, technical solutions, and advantages to be solved by the present disclosure clearer, the following will be described in detail in conjunction with the accompanying drawings and specific embodiments.

In the embodiments of the present disclosure, the term "and/or" describes the relationship between associated objects and indicates three possible relationships. For example, "A and/or B" may indicate: A exists alone, A and B exist together, or B exists alone. The character "/" generally represents an "or" relationship between associated objects.

In the embodiments of the present disclosure, the term "multiple" refers to two or more, and other quantifiers are similar in meaning.

The technical solutions in the embodiments of the present disclosure will be clearly and comprehensively described below with reference to the accompanying drawings in the embodiments. It is evident that the described embodiments are only part of the embodiments of the present disclosure, not all embodiments. Based on the embodiments of the present disclosure, all other embodiments obtained by those skilled in the art without creative efforts fall within the scope of protection of the present disclosure.

The embodiments of the present disclosure provide a service data transmission method, a terminal, a network node, and a storage medium to solve the problem of reduced transmission rates of the terminal.

The method and device are based on the same application concept. Since the principles for solving the problem with the method and device are similar, the implementations of the device and the method can be cross-referenced, and repetitive content will not be elaborated further.

The technical solutions provided in the embodiments of the present disclosure can be applied to various systems, especially 6G systems. For example, applicable systems may include the Global System for Mobile Communication (GSM), Code Division Multiple Access (CDMA) systems, Wideband Code Division Multiple Access (WCDMA), General Packet Radio Service (GPRS) systems, Long Term Evolution (LTE) systems, LTE Frequency Division Duplex (FDD) systems, LTE Time Division Duplex (TDD) systems, Advanced Long Term Evolution (LTE-A) systems, Universal Mobile Telecommunications System (UMTS), Worldwide Interoperability for Microwave Access (WiMAX) systems, Fifth Generation Mobile Communication Technology (5G) New Radio (NR) systems, Sixth Generation Mobile Communication Technology (6G) systems, and others. These systems include terminal devices and network-side devices. The systems may also include core network components, such as the Evolved Packet System (EPS) and 5G System (5GS).

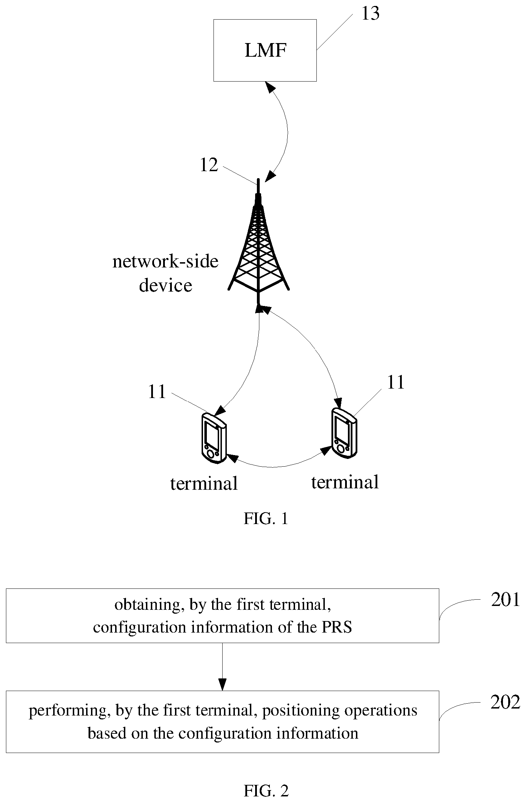

Referring to FIG. 1, FIG. 1 shows a schematic diagram of a network architecture applicable to the embodiments of the present disclosure. As shown in FIG. 1, the network architecture includes multiple terminals 11, a network-side device 12, and an LMF 13, wherein:

The terminal 11 involved in the embodiments of the present disclosure refers to a device that provides users with voice and/or data connectivity, such as handheld devices with wireless connectivity capabilities or other processing devices connected to wireless modems. In different systems, the name of the terminal device may vary. For example, in a 5G system, the terminal device may be referred to as a User Equipment (UE). Wireless terminal devices may communicate with one or more Core Networks (CN) via a Radio Access Network (RAN). Wireless terminal devices may be mobile terminal devices, such as mobile phones (or "cellular" phones) and computers with mobile terminal devices, including portable, pocket-sized, handheld, built-in computer, or vehicle-mounted mobile devices that exchange voice and/or data with the RAN. Examples include Personal Communication Service (PCS) phones, cordless phones, Session Initiation Protocol (SIP) phones, Wireless Local Loop (WLL) stations, Personal Digital Assistants (PDA), RedCap terminals, and other devices. Wireless terminal devices may also be referred to as systems, subscriber units, subscriber stations, mobile stations, remotes, access points, remote terminals, access terminals, user terminals, user agents, or user devices. The embodiments of the present disclosure do not limit the terminology.

The network-side device 12 involved in the embodiments of the present disclosure can be a base station, which may include multiple cells serving terminals. Depending on the specific application scenario, the base station may also be referred to as an access point or a device in the access network that communicates with wireless terminal devices over the air interface through one or more sectors. The network-side device can be used to exchange over-the-air frames with Internet Protocol (IP) packets, acting as a router between wireless terminal devices and the rest of the access network, where the rest of the access network may include an IP communication network. The network-side device can also coordinate attribute management of the air interface. For example, the network-side device involved in the embodiments of the present disclosure may be a Base Transceiver Station (BTS) in the Global System for Mobile Communications (GSM) or Code Division Multiple Access (CDMA), a NodeB in Wideband Code Division Multiple Access (WCDMA), an evolved NodeB (eNB or e-NodeB) in Long Term Evolution (LTE) systems, a 5G base station (gNB) in 5G network architecture, or a base station in 6G. It may also be a Home eNodeB (HeNB), relay node, femtocell base station (femto), picocell base station (pico), or other types. The embodiments of the present disclosure do not limit these terms. In some network structures, the network-side device may include a centralized unit (CU) and a distributed unit (DU), which may be geographically separated. In other network structures, the network-side device may include a Transmitting Receiving Point (TRP).

As an example, FIG. 1 illustrates communication between terminal 11 and LMF 13 through the network-side device 12.

In the embodiments of the present disclosure, the network side and the terminal can each use one or more antennas for Multi-Input Multi-Output (MIMO) transmission. MIMO transmission can be Single-User MIMO (SU-MIMO) or Multi-User MIMO (MU-MIMO). Depending on the combination and number of antennas, MIMO transmission can be Two-Dimensional MIMO (2D-MIMO), Three-Dimensional MIMO (3D-MIMO), Full-Dimension MIMO (FD-MIMO), or massive MIMO (massive-MIMO). It may also involve diversity transmission, precoding transmission, or beamforming transmission, among others.

As shown in FIG. 2, FIG. 2 shows a flowchart of a positioning method provided in an embodiment of the present disclosure, including the following steps:
step 201: obtaining, by the first terminal, configuration information of the PRS, where the PRS includes a first PRS; the configuration information includes at least one of the first time-domain configuration and the first bandwidth configuration of the first PRS; the first time-domain configuration includes at least one of the following: the maximum number of symbols occupied by one period of the periodic first PRS is 14, the non-periodic first PRS occupies N consecutive slots, where N is an integer greater than or equal to 1; the first bandwidth configuration is used to indicate that the number of physical resource block (PRB) resources occupied by the first PRS is less than 24.
step 202: performing, by the first terminal, positioning operations based on the configuration information.

The first PRS mentioned above can be a PRS newly defined in the protocol of this disclosure, which is different from the PRS defined in the protocol. In this disclosure, the first PRS can also be referred to as the first New PRS (N-PRS).

The configuration information can be the configuration information received from the network-side device, the configuration information received from the LMF, or the pre-configured information obtained, such as the configuration information obtained from a pre-configuration resource pool.

For the periodic first PRS, the maximum number of symbols occupied in one period is 14, meaning that within one slot, a period of N-PRS resources can occupy up to 14 OFDM symbols, i.e., all 14 OFDM symbols within one slot.

For the non-periodic first PRS, it can occupy N consecutive slots, meaning that for a non-periodic PRS resource, it supports occupying N consecutive slots in one trigger, where N depends on the terminal capability (UE capability).

The PRS resources occupied by the first PRS include less than 24 PRBs, meaning that the PRS resources occupied by the first PRS support resources less than 24 PRBs; for example, in addition to the number of PRBs defined in 5G NR Rel-16 for DL PRS, the PRS resources occupied by the first PRS can support less than 24 PRBs, such as 4/8/12/16/20 PRBs. In other words, the PRS resources occupied by the first PRS can be resources less than 24 PRBs or resources greater than or equal to 24 PRBs.

In the embodiments of the present disclosure, the configuration information is used to assist positioning; therefore, the configuration information can also be referred to as positioning assistance data information.

The "performing positioning operations based on the configuration information" can involve performing at least one of uplink, downlink, sidelink, or joint positioning operations on the resources corresponding to the configuration information.

In the embodiments of the present disclosure, the steps above enable the periodic PRS used for positioning to support a maximum of 14 symbols occupied in one period; the non-periodic PRS supports occupying N consecutive slots, allowing the PRS to occupy more symbols to improve the transmission reliability. Additionally, the number of PRS resources occupied by PRS is less than 24, enabling small-bandwidth terminals to receive PRS, further improving PRS transmission reliability. Moreover, positioning based on PRS is applicable to scenarios such as the Internet of Things (IoT). It should be noted that the embodiments of the present disclosure are not limited to IoT scenarios; for example, conventional terminal communications and Internet of Vehicles scenarios are also applicable.

As an optional implementation, the configuration information further includes at least one of the following:
the first subcarrier spacing number of the first PRS, where the first subcarrier spacing number includes a subcarrier spacing number greater than 12, and the subcarrier spacing number is the number of subcarriers spaced between two adjacent subcarriers in the frequency domain occupied by the first PRS in the same symbol;
the first period information of the first PRS, where the first period information includes at least one of the following: periodic, semi-persistent, and aperiodic;
the first pattern information of the first PRS, where the first pattern information includes at least one of the following:
   non-crossed staggered pattern, staggered pattern, and partially staggered pattern.

The first subcarrier spacing number of the first PRS can be the number of subcarriers spaced between two adjacent subcarriers in the PRB resources occupied by the first PRS on the same Orthogonal Frequency Division Multiplexing (OFDM). In the embodiments of the present disclosure, the subcarrier spacing number may also be referred to as the comb size. The first subcarrier spacing number includes a subcarrier spacing number greater than 12, which means that the subcarrier spacing number supports values greater than 12, such as 24, and also supports values less than 12, such as 2, 4, 6, or 12.

The first period information includes at least one of the following: periodic, semi-persistent, and aperiodic, which means that the first PRS can be a periodic PRS, semi-persistent PRS, or aperiodic PRS. For periodic PRS, it supports periods greater than 4 slots, such as {4, 8, 16, 32, 64, 5, 10, 20, 40, 80, 160, 320, 640, 1280, 2560, 5120, 10240} slots, and also supports periods less than or equal to 4 slots, such as 1, 2, or 4 slots. Additionally, when the period is 1 slot and occupies 14 OFDM symbols within the slot, continuous PRS is achieved.

The first pattern information includes at least one of non-crossed staggered pattern, staggered pattern, and partially staggered pattern, which means that the first PRS supports the following three options:
non-crossed staggered pattern, where the RE offset (RE shift) of all OFDM symbols in the same cell is the same, but different between cells;
staggered pattern, which may be the staggered pattern of the New Radio downlink positioning reference signal (NR DL PRS) and/or the uplink positioning sounding reference signal (UL SRS-Pos) defined in the protocol;
partially staggered pattern, where the RE offset (RE shift) of resource elements (REs) on some symbols occupied by a PRS resource is the same, while different on other symbols.

In the embodiments of the present disclosure, the PRS pattern may define the relationship between the subcarrier spacing number and OFDM symbols and the RE offset.

For the non-crossed staggered pattern in option 1, the RE offset (RE shift) of all OFDM symbols in the same cell is the same, but different between cells. The relative RE offset of PRS resources on adjacent OFDM symbols is shown in Table 1, where M is the number of symbols, N is the subcarrier spacing number, and N <= M. Table 1 shows the relative RE offset under the conditions of PRS-supported subcarrier spacing number N (i.e., comb size N) and OFDM symbol number M.

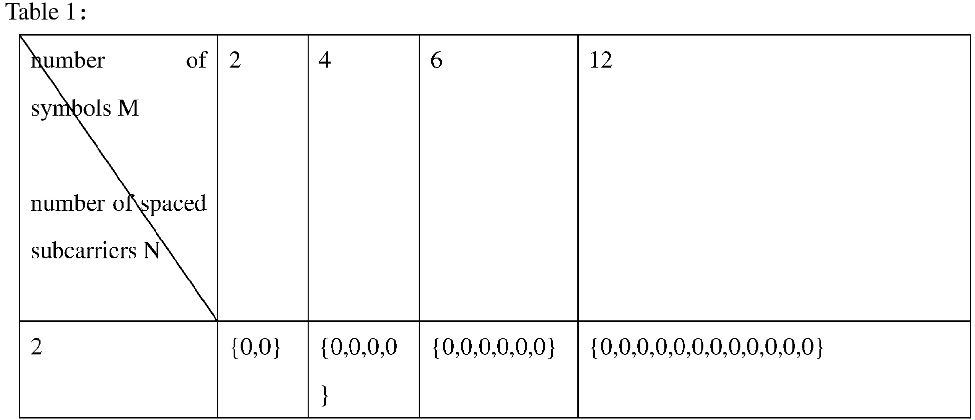

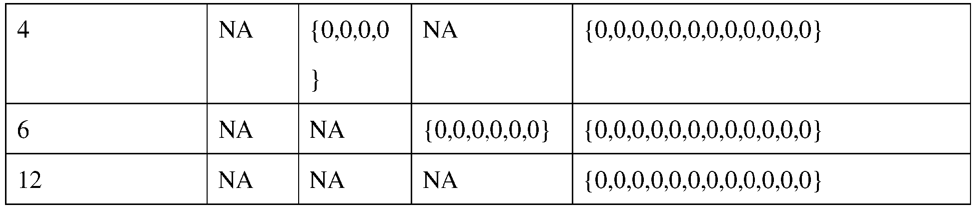

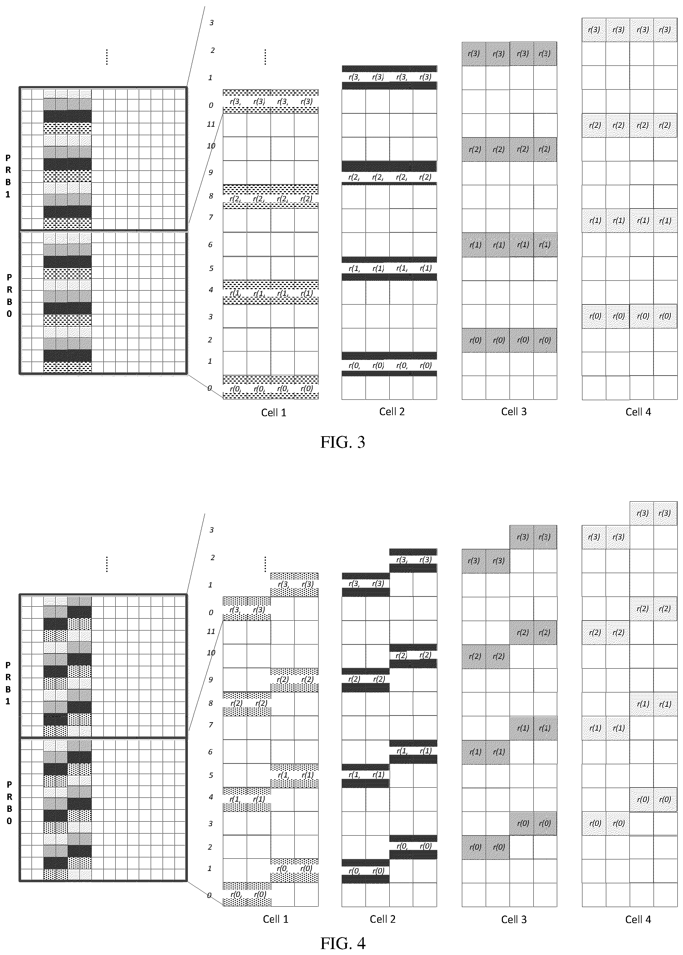

Taking the subcarrier spacing number \(N=4\) and the number of OFDM symbols \(M=4\) as an example, a schematic diagram of the N-PRS patterns for four cells in option 1 is provided, as shown in FIG. 3. As illustrated in FIG. 3, the RE offset is the same across the 4 symbols for each cell.

For option 2, the NR DL PRS staggered pattern defined in the protocol can be adopted, where the relative RE offset of NR DL PRS resources on adjacent OFDM symbols is given in a predefined table. The table is determined by the combination of the DL PRS subcarrier spacing number N and the number of OFDM symbols \(M\). Specifically, refer to Table 2, where \(N \leq M\). Table 2 shows the relative RE offset under the conditions of supported subcarrier spacing numbers N and OFDM symbol numbers \(M\) for DL PRS.

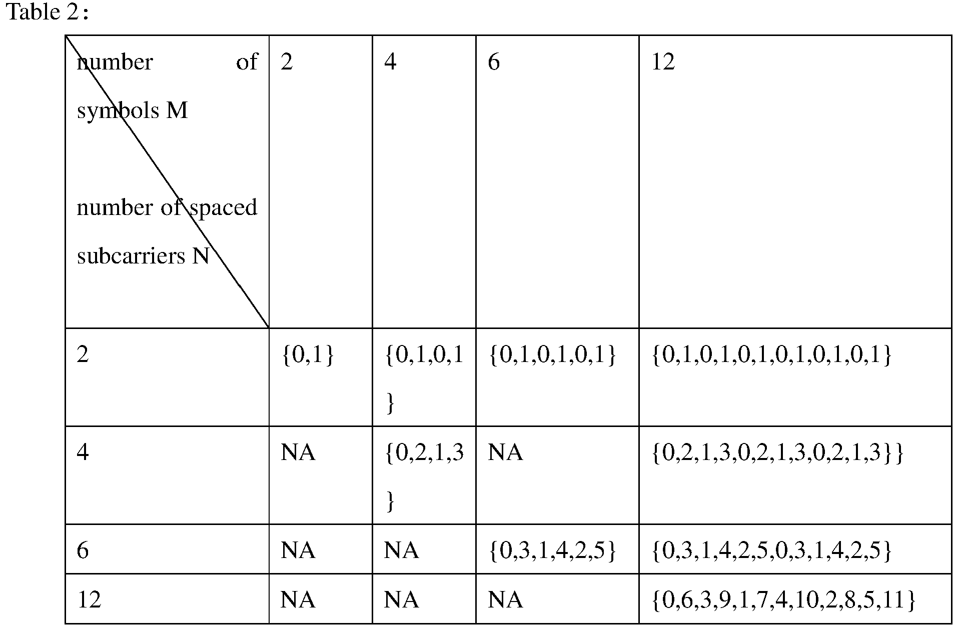

For option 3, that is, the partially staggered pattern, the RE shift of some symbols occupied by an N-PRS resource can be the same, while the RE shift on other symbols is different. The relative RE offset of N-PRS resources on adjacent OFDM symbols is shown in Table 3, where \(N \leq M\). Table 3 provides the relative RE offset under the conditions of supported subcarrier spacing numbers N and OFDM symbol numbers \(M\) for PRS.

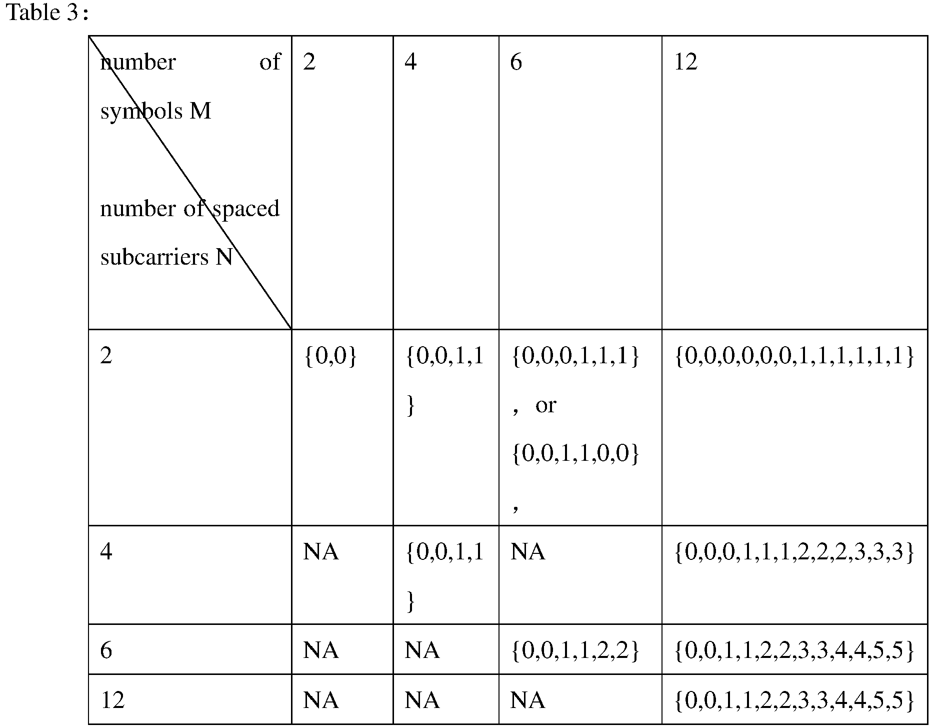

Taking the relative RE offset \{0, 0, 1, 1\} with a subcarrier spacing number \(N=4\) and OFDM symbol number \(M=4\) as an example, a schematic diagram of the N-PRS patterns for four cells in option 3 is provided, as shown in FIG. 4. In FIG. 4, the RE offset of the first two symbols in each cell is the same, while the RE offset of the last two symbols is shifted by one RE compared to the first symbol.

In the above embodiment, the comb size, period, and pattern in the configuration information allow the first PRS to support more flexible transmission.

Additionally, the purpose of using the non-staggered pattern for the first PRS may be to improve the current carrier phase measurement algorithm based on the Phase Locked Loop (PLL). Since the PRS on different OFDM symbols occupies the same RE, it avoids moving PRS resources to the same resource element (RE), such as the central carrier frequency RE, when estimating the carrier phase measurements between OFDM symbols. This ensures estimation accuracy while reducing the computational complexity of the receiver.

As an optional implementation, the PRS also includes a second PRS. The configuration information further includes at least one of the second time-domain configuration and the second bandwidth configuration of the second PRS. The second time-domain configuration includes at least one of the following: the maximum number of symbols occupied by one period of the periodic second PRS is 14; the non-periodic second PRS occupies N consecutive slots. The second bandwidth configuration is used to indicate that the number of PRB resources occupied by the second PRS is less than 24.

In this embodiment, the second PRS is either a newly defined PRS in the protocol of this disclosure or an already defined PRS in the protocol.

When the second PRS is a newly defined PRS, it can be referred to as the second N-PRS.

The PRS already defined in the protocol refers to the DL PRS and/or UL SRS-Pos defined in 5G NR Rel-16.

Optionally, the first PRS includes one of the following:
the first uplink PRS, the first downlink PRS, and the first sidelink PRS.

The second PRS includes one of the following:
the second uplink PRS, the second downlink PRS, and the second sidelink PRS.

In this embodiment, the second PRS can be a downlink PRS or an uplink PRS. For example, the second PRS can be a downlink N-PRS or an uplink N-PRS. Similarly, the first PRS can be a downlink PRS or an uplink PRS. For example, the first PRS can be a downlink N-PRS or an uplink N-PRS. Alternatively, the first PRS and the second PRS can be sidelink PRS.

The configuration information of the second PRS can refer to the corresponding description of the configuration information of the first PRS, which is not repeated here.

In this embodiment, the terminal can be configured with both the first PRS and the second PRS, enabling the terminal to perform positioning operations using at least one of the first PRS and the second PRS, thereby improving positioning accuracy.

Optionally, the configuration information further includes at least one of the following:
the second subcarrier spacing number of the second PRS, where the second subcarrier spacing number includes a subcarrier spacing number greater than 12, the subcarrier spacing number refers to the number of subcarriers spaced between two adjacent subcarriers in the frequency domain occupied by the second PRS in the same symbol;
the second period information of the second PRS, where the second period information includes at least one of the following: periodic, semi-persistent, and aperiodic;
the second pattern information of the second PRS, where the second pattern information includes at least one of the following:
   non-staggered pattern, staggered pattern, and partially staggered pattern.

The subcarrier spacing number, period information, and pattern information of the second PRS can refer to the corresponding descriptions of the first PRS, which will not be repeated here.

Additionally, the purpose of using the non-staggered pattern for the second PRS (or both the first PRS and the second PRS) may be to improve the current carrier phase measurement algorithm based on the Phase Locked Loop (PLL), since the PRS on different OFDM symbols occupies the same RE, it avoids moving PRS resources to the same resource element (RE), such as the central carrier frequency RE, when estimating the carrier phase measurements between OFDM symbols, this ensures estimation accuracy while reducing the computational complexity of the receiver.

In some embodiments, the patterns of the first PRS and the second PRS may be different; for example, the second PRS may have a staggered pattern, while the first PRS may have a non-staggered pattern or a partially staggered pattern. Alternatively, in some embodiments, the patterns of the first PRS and the second PRS may be the same; for example, both the second PRS and the first PRS may have a non-staggered pattern or a partially staggered pattern.

Optionally, at least one of the following differences exists between the first PRS and the second PRS:
the size of the frequency domain resources occupied, the period, and the type of time-domain resources occupied.

For example, the size of the frequency domain resources occupied by the first PRS is smaller than that occupied by the second PRS.

For example, in the case where both the first PRS and the second PRS are periodic signals, the period of the first PRS is shorter than that of the second PRS; alternatively, the first PRS is a periodic signal, while the second PRS is a semi-persistent signal or an aperiodic signal; alternatively, the first PRS is an aperiodic signal, while the second PRS is a semi-persistent signal or a periodic signal.

For example, when the first PRS is a non-periodic PRS, the second N-PRS can be a periodic PRS or a semi-persistent PRS. For instance, the time-domain resource type configured for the first PRS is to occupy consecutive N slots, i.e., a non-periodic PRS, assisting in high-precision carrier phase positioning (CPP) (e.g., positioning error within the centimeter range), while the time-domain resource type configured for the second N-PRS is a periodic time-domain resource, i.e., a low-overhead periodic PRS, used for coarse-precision positioning (e.g., positioning error within the meter range).

In this embodiment, as the bandwidth, period, or resource type between the first PRS and the second PRS can differ in at least one aspect, it supports more flexible positioning.

As an optional implementation, the first terminal performs positioning operations based on the configuration information, including at least one of the following:
measuring, by the first terminal, at least one of the first PRS and the second PRS, obtaining the first measurement information, and transmitting the first measurement information to the Location Management Function (LMF) or the second terminal, where at least one of the first PRS and the second PRS is transmitted by the network-side device or the second terminal;
transmitting, by the first terminal, one of the first PRS and the second PRS to the network-side device, and measuring, by the first terminal, the other one of the first PRS and the second PRS transmitted by the network-side device, obtaining the second measurement information, and transmitting the second measurement information to the LMF or the second terminal;
transmitting, by the first terminal, at least one of the first PRS and the second PRS to the network-side device.

When at least one of the first PRS and the second PRS is transmitted by the network-side device, downlink positioning can be achieved; for example, the first terminal receives and measures at least one of the first PRS and the second PRS from the network-side device, obtaining positioning measurements and positioning quality.

When at least one of the first PRS and the second PRS is transmitted by the second terminal, sidelink positioning can be achieved; for example, the first terminal receives and measures at least one of the first PRS and the second PRS from the second terminal, obtaining positioning measurements and positioning quality.

The first terminal transmitting one of the first PRS and the second PRS to the network-side device, and measuring the other of the first PRS and the second PRS transmitted by the network-side device, can achieve Uu interface uplink and downlink joint positioning.

The first terminal transmitting at least one of the first PRS and the second PRS to the network-side device can achieve uplink positioning; for example, the first terminal transmits at least one of the first PRS and the second PRS to the network-side device, which is used by the network-side device to obtain positioning measurements and positioning quality.

The first measurement information can be used to report at least one of the following:
the first positioning measurement and the first positioning measurement quality;

The second measurement information can be used to report at least one of the following:
the second positioning measurement and the second positioning measurement quality.

The first positioning measurement and the second positioning measurement may include phase-based measurements, such as phase of arrival (POA) and phase difference of arrival (PDOA); or time-based measurements, such as time of arrival (TOA) and reference signal time difference (RSTD); or angle-based measurements, such as angle-of-arrival (AOA) and angle-of-departure (AoD); or power-based measurements, such as reference signal received power (RSRP) and reference signal receiving quality (RSRQ).

The first positioning measurement quality and the second positioning measurement quality may include measurement reliability, accuracy, variance, or other quality metrics.

Additionally, in the embodiments of the present disclosure, the positioning measurements can be obtained independently or through smoothing processing based on carrier phase measurements.

This embodiment supports multiple positioning methods to enhance positioning flexibility.

Optionally, the first measurement information reports the first positioning measurement and the first positioning measurement quality in a non-differential or differential form;
the second measurement information reports the second positioning measurement and the second positioning measurement quality in a non-differential or differential form.

In this embodiment, reporting in a non-differential or differential form can be achieved, thereby enhancing reporting flexibility.

In one embodiment, the first positioning measurement includes at least one of the following:
phase measurements obtained based on the first PRS, delay measurements obtained based on the second PRS, angle measurements obtained based on the second PRS, and power measurements obtained based on the second PRS.

In another embodiment, the first positioning measurement includes at least one of the following:
phase measurements obtained based on the first PRS and the second PRS, delay measurements obtained based on the first PRS and the second PRS, angle measurements obtained based on the first PRS and the second PRS, and power measurements obtained based on the first PRS and the second PRS.

The above phase measurements, delay measurements, angle measurements, and power measurements can be the respective measurements obtained through joint measurement algorithms based on the first PRS and the second PRS, due to joint measurement, the accuracy of positioning measurements can be improved. Below are three algorithm examples: Example 1: performing frequency-domain concatenation of the first PRS and the second PRS to construct a new PRS (with the signal bandwidth of the new PRS being greater than that of the first PRS and the second PRS), and then performing measurements to obtain more accurate measurements. Example 2: performing time-domain merging of the first PRS and the second PRS to construct a new PRS (e.g., merging PRS signals across different OFDM symbols, with the signal-to-noise ratio (SNR) of the new PRS being greater than the SNR of the first PRS and the second PRS), and then performing measurements to obtain more accurate measurements. Example 3: combining Example 1 and Example 2 by performing both frequency-domain concatenation and time-domain merging of the first PRS and the second PRS to construct a new PRS (where frequency-domain concatenation results in a signal bandwidth greater than that of the first PRS and the second PRS, and time-domain merging improves the SNR of the new PRS relative to the first PRS and the second PRS), and then performing measurements to obtain more accurate measurements.

In another embodiment, the first positioning measurement includes at least one of the following:
a third measurement obtained by smoothing the second measurement using the first measurement, where the first measurement is based on measurements obtained from the first PRS, and the second measurement includes at least one of the following: delay measurements obtained based on the second PRS, angle measurements obtained based on the second PRS, and power measurements obtained based on the second PRS.

In this embodiment, the first terminal can first obtain the first measurement (e.g., phase measurement) based on the first PRS, and obtain the second measurement (e.g., delay/angle/power measurement) based on the second PRS, then perform smoothing of the second measurement based on the first measurement to obtain the third measurement, where the smoothing process can be performed using a smoother function (e.g., Hatch smoother function) or an averaging function.

In one embodiment, the second positioning measurement includes at least one of the following:
phase measurements obtained based on the first PRS, delay measurements obtained based on the first PRS, angle measurements obtained based on the first PRS, and power measurements obtained based on the first PRS.

Alternatively, the second positioning measurement includes at least one of the following:
phase measurements obtained based on the second PRS, delay measurements obtained based on the second PRS, angle measurements obtained based on the second PRS, and power measurements obtained based on the second PRS.

In this embodiment, the first terminal can obtain at least one of phase measurements, delay measurements, angle measurements, or power measurements based solely on the first PRS or the second PRS, thereby reducing computational overhead.

Optionally, the first measurement information is also used to report at least one of the following:
the calculation method of the first positioning measurement, the identifier of the configuration information of the first PRS, and the identifier of the configuration information of the second PRS.

The second measurement information is used to report at least one of the following:
the calculation method of the second positioning measurement, the identifier of the configuration information of the first PRS, and the identifier of the configuration information of the second PRS.

In this embodiment, since the measurement information transmitted to the LMF or the second terminal also reports at least one of the above, it facilitates the LMF or the second terminal in reducing the complexity of terminal positioning calculations.

As an optional implementation, the first terminal obtains the configuration information of the PRS, including at least one of the following:

The first terminal receives the configuration information of the PRS sent by the network-side device;
the first terminal receives the configuration information of the PRS sent by the LMF.

The above configuration information for the first terminal can be sent through Radio Resource Control (RRC) signaling from the network-side device or through NR positioning protocol A (NRPPa) signaling from the LMF.

For example, regarding NR Uu interface downlink positioning and NR Uu interface uplink and downlink joint positioning methods, the first terminal obtains the configuration information of the first PRS and the second PRS through NRPPa signaling from the LMF; similarly, regarding NR Uu interface uplink positioning and NR Uu interface uplink and downlink joint positioning methods, the first terminal obtains the configuration information of the first PRS and the second PRS through RRC signaling from the network-side device; additionally, regarding NR sidelink positioning methods, the first terminal obtains the configuration information of the first PRS and the second PRS through NRPPa signaling from the LMF, RRC signaling from the network-side device, or pre-configured resource pools. Alternatively, the network-side device sends the configuration information of the first PRS, and the LMF sends the configuration information of the second PRS.

In the embodiments of the present disclosure, the first terminal obtains the configuration information of the PRS, where the PRS includes the first PRS; the configuration information includes at least one of the first time-domain configuration and the first bandwidth configuration of the first PRS; the first time-domain configuration includes at least one of the following: the maximum number of symbols occupied by one period of the periodic first PRS is 14, the non-periodic first PRS occupies N consecutive slots, where N is an integer greater than or equal to 1; the first bandwidth configuration is used to indicate that the number of physical resource block (PRB) resources occupied by the first PRS is less than 24. The first terminal performs positioning operations based on the configuration information. Thus, the periodic PRS used for positioning supports a maximum of 14 symbols occupied in one period, and the non-periodic PRS supports occupying N consecutive slots, enabling the PRS to occupy more symbols to improve transmission reliability. Additionally, supporting PRS resources with a minimum of PRBs less than 24 allows small-bandwidth terminals to receive PRS, further improving PRS transmission reliability.

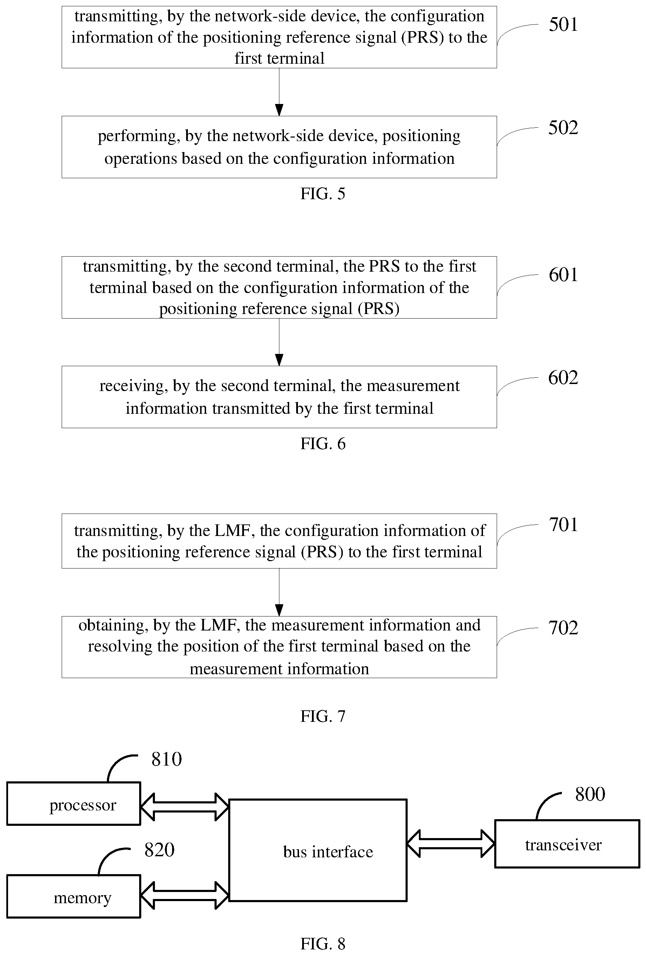

As shown in FIG. 5, FIG. 5 is a flowchart of another positioning method provided in an embodiment of the present disclosure, including the following steps:
step 501: transmitting, by the network-side device, the configuration information of the positioning reference signal (PRS) to the first terminal, where the PRS includes the first PRS; the configuration information includes at least one of the first time-domain configuration and the first bandwidth configuration of the first PRS; the first time-domain configuration includes at least one of the following: the maximum number of symbols occupied by one period of the periodic first PRS is 14, the non-periodic first PRS occupies N consecutive slots, where N is an integer greater than or equal to 1; the first bandwidth configuration is used to indicate that the number of physical resource block (PRB) resources occupied by the first PRS is less than 24.
step 502: performing, by the network-side device, positioning operations based on the configuration information.

Optionally, the configuration information further includes at least one of the following:
the first subcarrier spacing number of the first PRS, where the first subcarrier spacing number includes subcarrier spacing numbers greater than 12, and the subcarrier spacing number refers to the number of subcarriers spaced between two adjacent subcarriers in the frequency domain occupied by the first PRS in the same symbol;
the first period information of the first PRS, where the first period information includes at least one of the following: periodic, semi-persistent, and aperiodic;
the first pattern information of the first PRS, where the first pattern information includes at least one of the following:
   non-staggered pattern, staggered pattern, and partially staggered pattern.

Optionally, the PRS also includes the second PRS, and the configuration information further includes at least one of the second time-domain configuration and the second bandwidth configuration of the second PRS; the second time-domain configuration includes at least one of the following: the maximum number of symbols occupied by one period of the periodic second PRS is 14, the non-periodic second PRS occupies N consecutive slots; the second bandwidth configuration is used to indicate that the number of PRB resources occupied by the second PRS is less than 24.

Optionally, the configuration information further includes at least one of the following:
the second subcarrier spacing number of the second PRS, where the second subcarrier spacing number includes subcarrier spacing numbers greater than 12, and the subcarrier spacing number refers to the number of subcarriers spaced between two adjacent subcarriers in the frequency domain occupied by the second PRS in the same symbol;
the second period information of the second PRS, where the second period information includes at least one of the following: periodic, semi-persistent, and aperiodic;
the second pattern information of the second PRS, where the second pattern information includes at least one of the following:
   non-crossed staggered pattern, staggered pattern, and partially staggered pattern.

Optionally, at least one of the following differences exists between the first PRS and the second PRS:
the size of the frequency domain resources occupied, the period, and the type of time-domain resources occupied.

Optionally, the size of the frequency domain resources occupied by the first PRS is smaller than that occupied by the second PRS; and/or
in the case where both the first PRS and the second PRS are periodic signals, the period of the first PRS is shorter than that of the second PRS; alternatively, the first PRS is a periodic signal, while the second PRS is a semi-persistent signal or an aperiodic signal; alternatively, the first PRS is an aperiodic signal, while the second PRS is a semi-persistent signal or a periodic signal.

Optionally, the network-side device performs positioning operations based on the configuration information, including at least one of the following:
measuring, by the network-side device, at least one of the first PRS and the second PRS transmitted by the first terminal, obtaining the first measurement information, and transmitting the first measurement information to the Location Management Function (LMF);
transmitting, by the network-side device, one of the first PRS and the second PRS to the first terminal, and measuring, by the network-side device, the other one of the first PRS and the second PRS transmitted by the first terminal, obtaining the second measurement information, and transmitting the second measurement information to the LMF;
transmitting, by the network-side device, at least one of the first PRS and the second PRS to the first terminal.

Optionally, the first measurement information is used to report at least one of the following:
the first positioning measurement and the first positioning measurement quality.

Alternatively, the second measurement information is used to report at least one of the following:
the second positioning measurement and the second positioning measurement quality.

Optionally, the first measurement information reports the first positioning measurement and the first positioning measurement quality in a non-differential or differential form;
the second measurement information reports the second positioning measurement and the second positioning measurement quality in a non-differential or differential form.

Optionally, the first positioning measurement includes at least one of the following:
phase measurements obtained based on the first PRS, delay measurements obtained based on the second PRS, angle measurements obtained based on the second PRS, and power measurements obtained based on the second PRS;
alternatively, the first positioning measurement includes at least one of the following:
   phase measurements obtained based on the first PRS and the second PRS, delay measurements obtained based on the first PRS and the second PRS, angle measurements obtained based on the first PRS and the second PRS, and power measurements obtained based on the first PRS and the second PRS;
   alternatively, the first positioning measurement includes at least one of the following:
      a third measurement obtained by smoothing the second measurement using the first measurement, where the first measurement is based on measurements obtained from the first PRS, and the second measurement includes at least one of the following: delay measurements obtained based on the second PRS, angle measurements obtained based on the second PRS, and power measurements obtained based on the second PRS;
      alternatively, the second positioning measurement includes at least one of the following:
         phase measurements obtained based on the first PRS, delay measurements obtained based on the first PRS, angle measurements obtained based on the first PRS, and power measurements obtained based on the first PRS;
         alternatively, the second positioning measurement includes at least one of the following:
            phase measurements obtained based on the second PRS, delay measurements obtained based on the second PRS, angle measurements obtained based on the second PRS, and power measurements obtained based on the second PRS.

Optionally, the first measurement information is also used to report at least one of the following:
the calculation method of the first positioning measurement, the identifier of the configuration information of the first PRS, and the identifier of the configuration information of the second PRS;
the second measurement information is used to report at least one of the following:
   the calculation method of the second positioning measurement, the identifier of the configuration information of the first PRS, and the identifier of the configuration information of the second PRS.

Optionally, the first PRS includes one of the following:
the first uplink PRS, the first downlink PRS, and the first sidelink PRS;
the second PRS includes one of the following:
   the second uplink PRS, the second downlink PRS, and the second sidelink PRS.

It should be noted that this embodiment serves as a network-side device embodiment corresponding to the embodiment shown in FIG. 2, and the specific implementation can refer to the relevant descriptions of the embodiment shown in FIG. 2. To avoid redundancy, this embodiment is not elaborated further and can achieve the same beneficial effects.

As shown in FIG. 6, FIG. 6 is a flowchart of another positioning method provided in an embodiment of the present disclosure, including the following steps:
step 601: transmitting, by the second terminal, the PRS to the first terminal based on the configuration information of the positioning reference signal (PRS), where the PRS includes the first PRS; the configuration information includes at least one of the first time-domain configuration and the first bandwidth configuration of the first PRS; the first time-domain configuration includes at least one of the following: the maximum number of symbols occupied by one period of the periodic first PRS is 14, the non-periodic first PRS occupies N consecutive slots, where N is an integer greater than or equal to 1; the first bandwidth configuration is used to indicate that the number of physical resource block (PRB) resources occupied by the first PRS is less than 24;
step 606: receiving, by the second terminal, the measurement information transmitted by the first terminal.

The above measurement information can include positioning measurements and measurement quality, and the second terminal can perform the position calculation of the first UE based on the measurement information to obtain the relative or absolute positioning of the first terminal. Alternatively, the second terminal transmits the measurement information to the LMF for calculation.

Optionally, the configuration information further includes at least one of the following:
the first subcarrier spacing number of the first PRS, where the first subcarrier spacing number includes subcarrier spacing numbers greater than 12, and the subcarrier spacing number refers to the number of subcarriers spaced between two adjacent subcarriers in the frequency domain occupied by the first PRS in the same symbol;
the first period information of the first PRS, where the first period information includes at least one of the following: periodic, semi-persistent, and aperiodic;
the first pattern information of the first PRS, where the first pattern information includes at least one of the following:
   non-staggered pattern, staggered pattern, and partially staggered pattern.

Optionally, the PRS also includes the second PRS, and the configuration information further includes at least one of the second time-domain configuration and the second bandwidth configuration of the second PRS; the second time-domain configuration includes at least one of the following: the maximum number of symbols occupied by one period of the periodic second PRS is 14, the non-periodic second PRS occupies N consecutive slots, where N is an integer greater than or equal to 1; the second bandwidth configuration is used to indicate that the number of PRB resources occupied by the second PRS is less than 24.

Optionally, the configuration information further includes at least one of the following:
the second subcarrier spacing number of the second PRS, where the second subcarrier spacing number includes subcarrier spacing numbers greater than 12, and the subcarrier spacing number refers to the number of subcarriers spaced between two adjacent subcarriers in the frequency domain occupied by the second PRS in the same symbol;
the second period information of the second PRS, where the second period information includes at least one of the following: periodic, semi-persistent, and aperiodic;
the second pattern information of the second PRS, where the second pattern information includes at least one of the following:
   non-crossed staggered pattern, staggered pattern, and partially staggered pattern.

Optionally, at least one of the following differences exists between the first PRS and the second PRS:
the size of the frequency domain resources occupied, the period, and the type of time-domain resources occupied.

Optionally, the size of the frequency domain resources occupied by the first PRS is smaller than that occupied by the second PRS; and/or
in the case where both the first PRS and the second PRS are periodic signals, the period of the first PRS is shorter than that of the second PRS; alternatively, the first PRS is a periodic signal, while the second PRS is a semi-persistent signal or an aperiodic signal; alternatively, the first PRS is an aperiodic signal, while the second PRS is a semi-persistent signal or a periodic signal.

Optionally, the second terminal transmits the PRS to the first terminal based on the configuration information of the PRS, including at least one of the following:
transmitting, by the second terminal, at least one of the first PRS and the second PRS to the first terminal;
the measurement information is measurement information obtained by the first terminal measuring at least one of the first PRS and the second PRS.

Optionally, the measurement information is used to report at least one of the following:
positioning measurement and positioning quality.

Optionally, the measurement information reports the first positioning measurement and the first positioning quality in a non-differential or differential form.

Optionally, the positioning measurement includes at least one of the following:
phase measurements obtained based on the first PRS, delay measurements obtained based on the second PRS, angle measurements obtained based on the second PRS, and power measurements obtained based on the second PRS;
alternatively, the positioning measurement includes at least one of the following:
   phase measurements obtained based on the first PRS and the second PRS, delay measurements obtained based on the first PRS and the second PRS, angle measurements obtained based on the first PRS and the second PRS, and power measurements obtained based on the first PRS and the second PRS;
   alternatively, the positioning measurement includes at least one of the following:
      a third measurement obtained by smoothing the second measurement using the first measurement, where the first measurement is based on measurements obtained from the first PRS, and the second measurement includes at least one of the following: delay measurements obtained based on the second PRS, angle measurements obtained based on the second PRS, and power measurements obtained based on the second PRS.

Optionally, the measurement information is also used to report at least one of the following:
the calculation method of the positioning measurement, the identifier of the configuration information of the first PRS, and the identifier of the configuration information of the second PRS.

Optionally, the method further includes:
resolving, by the second terminal, the position of the first terminal based on the measurement information.

It should be noted that this embodiment serves as a second terminal embodiment corresponding to the embodiment shown in FIG. 2. The specific implementation can refer to the relevant descriptions of the embodiment shown in FIG. 2. To avoid redundancy, this embodiment is not elaborated further and can achieve the same beneficial effects.

As shown in FIG. 7, FIG. 7 is a flowchart of another positioning method provided in an embodiment of the present disclosure, including the following steps:
step 701: transmitting, by the LMF, the configuration information of the positioning reference signal (PRS) to the first terminal, where the PRS includes the first PRS; the configuration information includes at least one of the first time-domain configuration and the first bandwidth configuration of the first PRS; the first time-domain configuration includes at least one of the following: the maximum number of symbols occupied by one period of the periodic first PRS is 14, the non-periodic first PRS occupies N consecutive slots, where N is an integer greater than or equal to 1; the first bandwidth configuration is used to indicate that the number of physical resource block (PRB) resources occupied by the first PRS is less than 24;
step 702: obtaining, by the LMF, the measurement information and resolving the position of the first terminal based on the measurement information.

Resolving the position of the first terminal based on the measurement information can include resolving the relative position or absolute position of the first terminal.

Optionally, the configuration information further includes at least one of the following:
the first subcarrier spacing number of the first PRS, where the first subcarrier spacing number includes subcarrier spacing numbers greater than 12, and the subcarrier spacing number refers to the number of subcarriers spaced between two adjacent subcarriers in the frequency domain occupied by the first PRS in the same symbol;
the first period information of the first PRS, where the first period information includes at least one of the following: periodic, semi-persistent, and aperiodic;
the first pattern information of the first PRS, where the first pattern information includes at least one of the following:
   non-crossed staggered pattern, staggered pattern, and partially staggered pattern.

Optionally, the PRS also includes the second PRS, and the configuration information further includes at least one of the second time-domain configuration and the second bandwidth configuration of the second PRS; the second time-domain configuration includes at least one of the following: the maximum number of symbols occupied by one period of the periodic second PRS is 14, the non-periodic second PRS occupies N consecutive slots, where N is an integer greater than or equal to 1; the second bandwidth configuration is used to indicate that the number of PRB resources occupied by the second PRS is less than 24.

Optionally, the configuration information further includes at least one of the following:
the second subcarrier spacing number of the second PRS, where the second subcarrier spacing number includes subcarrier spacing numbers greater than 12, and the subcarrier spacing number refers to the number of subcarriers spaced between two adjacent subcarriers in the frequency domain occupied by the second PRS in the same symbol;
the second period information of the second PRS, where the second period information includes at least one of the following: periodic, semi-persistent, and aperiodic;
the second pattern information of the second PRS, where the second pattern information includes at least one of the following:
   non-staggered pattern, staggered pattern, and partially staggered pattern.

Optionally, at least one of the following differences exists between the first PRS and the second PRS:
the size of the frequency domain resources occupied, the period, and the type of time-domain resources occupied.

Optionally, the size of the frequency domain resources occupied by the first PRS is smaller than that occupied by the second PRS; and/or
in the case where both the first PRS and the second PRS are periodic signals, the period of the first PRS is shorter than that of the second PRS; alternatively, the first PRS is a periodic signal, while the second PRS is a semi-persistent or aperiodic signal; alternatively, the first PRS is an aperiodic signal, while the second PRS is a semi-persistent or periodic signal.

Optionally, the measurement information is used to report at least one of the following:
positioning measurement and positioning quality.

Optionally, the first measurement information reports the first positioning measurement and the first positioning quality in a non-differential or differential form.

Optionally, the positioning measurement includes at least one of the following:
phase measurements obtained based on the first PRS, delay measurements obtained based on the second PRS, angle measurements obtained based on the second PRS, and power measurements obtained based on the second PRS;
alternatively, the positioning measurement includes at least one of the following:
   phase measurements obtained based on the first PRS and the second PRS, delay measurements obtained based on the first PRS and the second PRS, angle measurements obtained based on the first PRS and the second PRS, and power measurements obtained based on the first PRS and the second PRS;
   alternatively, the positioning measurement includes at least one of the following:
      a third measurement obtained by smoothing the second measurement using the first measurement, where the first measurement is based on measurements obtained from the first PRS, and the second measurement includes at least one of the following: delay measurements obtained based on the second PRS, angle measurements obtained based on the second PRS, and power measurements obtained based on the second PRS.

Optionally, the measurement information is also used to report at least one of the following:
the calculation method of the positioning measurement, the identifier of the configuration information of the first PRS, and the identifier of the configuration information of the second PRS.

It should be noted that this embodiment serves as an LMF embodiment corresponding to the embodiment shown in FIG. 2. The specific implementation can refer to the relevant descriptions of the embodiment shown in FIG. 2. To avoid redundancy, this embodiment is not elaborated further and can achieve the same beneficial effects.

The following examples illustrate the positioning method provided by the embodiments of the present disclosure using the first PRS and the second PRS as the first N-PRS and the second N-PRS, respectively:

### Example 1:

In this example, NR Uu interface downlink positioning or NR Uu interface uplink-downlink joint positioning is illustrated. The NR Uu interface downlink positioning and NR Uu interface uplink-downlink joint positioning methods described in this example involve entities such as the first terminal, network-side device, and LMF. For non-periodic N-PRS resources, support for occupying consecutive N slots depends on the terminal capability (UE capability), and the value set is {1,2,4,8,16}, with the current value being N=4. The process specifically includes the following steps:
Step 1: receiving, by the first terminal, the PRS configuration information (also referred to as positioning assistance data) configured or pre-configured by the network (network-side device/LMF), where the information contains configuration information related to the first N-PRS and the second N-PRS.

Here, the first N-PRS is a newly defined downlink N-PRS or uplink N-PRS; the second PRS can be a newly defined downlink N-PRS or uplink N-PRS, or the DL PRS and/or UL SRS-Pos defined in 5G NR Rel-16. For the positioning method in this embodiment, the specific processing method for the first terminal can be as follows:
For the NR Uu interface downlink positioning and NR Uu interface uplink-downlink joint positioning methods, obtaining, by the first terminal, the configuration information of the first N-PRS and the second N-PRS through NRPPa signaling from the LMF.

The configuration information of the first N-PRS and the second N-PRS includes at least one of the following:
Time-domain OFDM symbol count: within one slot, a periodic N-PRS resource supports a maximum of 14 OFDM symbols, i.e., all 14 OFDM symbols within one slot; additionally, for a non-periodic N-PRS resource, it can support occupying \(N=4\) consecutive slots (triggered once, transmitted across 4 consecutive slots).
Frequency-domain Comb Size: supporting sizes greater than 12, e.g., 24;
Patterns: supporting three options, option 1: Non-staggered pattern, where the RE shifts of all OFDM symbols in the same cell are the same, and those of different cells are different; option 2: Staggered pattern, such as the staggered pattern based on the NR DL PRS and/or UL SRS-Pos defined in Rel-16; option 3: Partially staggered pattern, where the RE shifts in some symbols of an N-PRS resource are the same, but those in other symbols differ; here, Option 2 (staggered pattern) may only apply to the second N-PRS, while Option 1 (non-staggered pattern) and Option 3 (partially staggered pattern) apply to both the first N-PRS and the second N-PRS.
Period: supporting periodic N-PRS, semi-persistent N-PRS, and non-periodic N-PRS. For periodic N-PRS, supporting periods of \(\{4,8,16,32,64,5,10,20,40,80,160,320,640,1280,2560,5120,10240\}\) slots, as well as 1 and 2-slot periods; when the period is 1 slot with 14 OFDM symbols in the slot, continuous N-PRS is realized.
Bandwidth: in addition to the PRB counts defined for DL PRS in 5G NR Rel-16, supporting PRB counts less than 24, e.g., 4, 8, 12, 16, or 20.

The configuration relationship between the first N-PRS resource and the second N-PRS resource can be as follows:
Bandwidth difference: the bandwidth of the first N-PRS is smaller than that of the second N-PRS.
Period difference: when both the first N-PRS and the second N-PRS are periodic N-PRS, the period of the first N-PRS is shorter than that of the second N-PRS; when the first N-PRS is a periodic N-PRS, the second N-PRS is a semi-persistent N-PRS or a non-periodic N-PRS.
Resource type difference: when the first N-PRS is a non-periodic N-PRS, the second N-PRS can be a periodic N-PRS or a semi-persistent N-PRS. For example, the first N-PRS is configured as a non-periodic N-PRS occupying \(N=4\) consecutive slots to assist in high-accuracy CPP positioning (e.g., positioning error in the centimeter range), while the second N-PRS is a low-overhead periodic N-PRS for coarse positioning (e.g., positioning error in the meter range).

Step 2: processing, by the first terminal, the positioning method in this embodiment based on the configuration information obtained in Step 1:
For the NR Uu interface downlink positioning and NR Uu interface uplink-downlink joint positioning methods, receiving and measuring, by the first terminal, the first N-PRS and the second N-PRS from the network-side device or the second terminal to obtain the positioning measurement and positioning quality;
Here, the positioning measurement by default includes phase-based measurements such as POA and PDOA, and optionally includes one or more of the following: Delay-based measurements: TOA, RSTD; Angle-based measurements: AoA, AoD; Power-based measurements:RSRP, RSRPP, etc. These optional measurements can be obtained independently or through smoothing processing based on carrier phase measurements. Specific implementations can include the following four methods:
   method 1: obtaining, by the first terminal, phase measurements based solely on the first N-PRS and obtaining delay/angle/power measurements based on the second N-PRS.
   method 2: obtaining, by the first terminal, phase measurements based on the combination of the first N-PRS and the second N-PRS, and obtaining delay/angle/power measurements based on both the first N-PRS and the second N-PRS.
   method 3: obtaining, by the first terminal, a first measurement value (phase) based on the first N-PRS and a second measurement value (delay/angle/power) based on the second N-PRS, and then smoothing the second measurement value using the first measurement value to obtain a third measurement value.
   method 4: obtaining, by the first terminal, phase measurements as well as delay/angle/power measurements based solely on either the first N-PRS or the second N-PRS.

Step 3 is that the first terminal reports the positioning measurement values and measurement quality obtained in step 2 to the LMF or another terminal, for the LMF or the second terminal to perform position calculation of the first terminal based on the above information.

The positioning measurement values and measurement quality can be reported in a non-differential or differential form, and simultaneously include the calculation method used in step 2 and the configuration IDs of the first N-PRS and the second N-PRS.

The network-side device (base station/TRP) performs the following steps:
step 1 is that, for NR Uu uplink positioning and NR Uu uplink and downlink joint positioning, the network-side device sends configuration or pre-configuration positioning assistance data information to the first terminal via RRC signaling, where the information includes configuration information related to the first N-PRS and the second N-PRS.

The first N-PRS is a newly defined downlink N-PRS or uplink N-PRS, and the second N-PRS can be a newly defined downlink N-PRS or uplink N-PRS, or the DL PRS and/or UL SRS-Pos defined in 5G NR Rel-16.

The configuration information of the first N-PRS and the second N-PRS may include at least one of the following:
the number of OFDM symbols in the time domain: the maximum number of OFDM symbols occupied by one cycle of the N-PRS resource within one slot is 14, which includes all 14 OFDM symbols in one slot; additionally, for a non-periodic N-PRS resource, it can support occupying consecutive N = 4 slots (triggered once and transmitted across 4 consecutive slots);
comb size in the frequency domain: supporting values greater than 12, for example, 24;
patterns: supporting three options, Option 1: non-staggered pattern, where the RE shift of all OFDM symbols in the same cell is identical, and differs across cells; Option 2: staggered pattern, such as the staggered pattern of Rel-16 NR DL PRS and/or UL SRS-Pos; Option 3: partially staggered pattern, where the RE shift is identical for some symbols occupied by a PRS resource and differs for others. Among these, Option 2 (staggered pattern) applies only to the second N-PRS, while Options 1 (non-staggered pattern) and 3 (partially staggered pattern) apply to both the first N-PRS and the second N-PRS;
periodicity: supporting periodic N-PRS, semi-persistent N-PRS, and aperiodic N-PRS. For periodic N-PRS, supporting {4, 8, 16, 32, 64, 5, 10, 20, 40, 80, 160, 320, 640, 1280, 2560, 5120, 10240} slots, as well as 1-slot and 2-slot periodicities. When the periodicity is 1 slot + 14 OFDM symbols within the slot, continuous N-PRS is achieved;
bandwidth: supporting PRB numbers smaller than 24, such as 4, 8, 12, 16, and 20, in addition to the PRB numbers defined for DL PRS in 5G NR Rel-16;
the configuration relationship between the first N-PRS resource and the second N-PRS resource can include the following:
   different bandwidths: the bandwidth of the first N-PRS is smaller than that of the second N-PRS;
   different periodicities: when both the first N-PRS and the second N-PRS are periodic N-PRS, the periodicity of the first N-PRS is smaller than that of the second N-PRS; when the first N-PRS is periodic N-PRS, the second N-PRS is semi-persistent or aperiodic N-PRS;
   different resource types: when the first N-PRS is aperiodic N-PRS, the second N-PRS can be periodic or semi-persistent N-PRS. For example, the first N-PRS is configured to occupy N = 4 consecutive time slots as an aperiodic N-PRS to assist in achieving burst CPP high-precision positioning (e.g., centimeter-level positioning error), while the second N-PRS is a low-overhead periodic N-PRS used for coarse positioning (e.g., meter-level positioning error).

Step 2: for NR Uu downlink positioning and NR Uu uplink-downlink joint positioning, the network-side device transmits the first N-PRS and the second N-PRS to the first terminal, enabling the first terminal to obtain positioning measurement values and positioning measurement quality.

The default positioning measurement values include phase-based measurements such as POA and PDOA. Optionally, they may also include one or more of the following: delay-based measurements such as TOA and RSTD; angle-based measurements such as AoA and AoD; and power-based measurements such as RSRP and RSRPP. These optional measurements can be obtained independently or through smoothing processing based on carrier phase measurements. Specifically, the following four methods are included:
Method 1: obtaining, by the network-side device, phase measurements based solely on the first N-PRS and delay/angle/power measurements based on the second N-PRS;
Method 2: obtaining, by the network-side device, phase measurements based on the combination of the first N-PRS and the second N-PRS, and obtaining delay/angle/power measurements based on both the first N-PRS and the second N-PRS;
Method 3: obtaining, by the network-side device, a first measurement value (phase) based on the first N-PRS and a second measurement value (delay/angle/power) based on the second N-PRS, and then smoothing the second measurement value using the first measurement value to obtain a third measurement value.
Method 4: obtaining, by the network-side device, phase measurements as well as delay/angle/power measurements based solely on the first N-PRS or the second N-PRS.

Step 3: reporting, by the network-side device, the positioning measurement values and measurement quality obtained in Step 2 to the LMF, for the LMF to calculate the position of the first terminal based on the above information.

The positioning measurement values and measurement quality can be reported in either non-differential or differential forms and simultaneously include the calculation methods used in Step 2, as well as the configuration IDs of the first N-PRS and the second N-PRS.

The LMF performs the following steps:
Step 1: for NR Uu downlink positioning and NR Uu uplink-downlink joint positioning, notifying, by the LMF, the first terminal of the configuration information of the first N-PRS and the second N-PRS via NRPPa signaling.

The first N-PRS can be a newly defined downlink N-PRS or uplink N-PRS; the second PRS can be a newly defined downlink N-PRS or uplink N-PRS, or it can be the DL PRS and/or UL SRS-Pos as defined in 5G NR Rel-16.

The configuration information of the first N-PRS and the second N-PRS is as follows:
Number of OFDM symbols in the time domain: within one time slot, a periodic N-PRS resource supports a maximum of 14 OFDM symbols, including all 14 OFDM symbols within a slot. Additionally, for an aperiodic N-PRS resource, it can occupy N = 4 consecutive time slots (with a single trigger allowing continuous transmission across 4 time slots);
comb size in the frequency domain: supporting sizes greater than 12, for example, 24;
pattern: Supporting three options: Option 1: Non-staggered pattern, where the RE shift of all OFDM symbols in the same cell is identical, but differs between different cells; Option 2: Staggered pattern, for example, the staggered pattern based on Rel-16 NR DL PRS and/or UL SRS-Pos; Option 3: Partially staggered pattern, for example, where the RE shift is the same for part of the symbols occupied by a PRS resource, but different for other symbols. Among these, Option 2 (staggered pattern) applies only to the second N-PRS, while both Option 1 (non-staggered pattern) and Option 3 (partially staggered pattern) apply to both the first N-PRS and the second N-PRS;
Periodicity: Supporting periodic N-PRS, semi-persistent N-PRS, and aperiodic N-PRS. For periodic N-PRS, it supports periods of {4, 8, 16, 32, 64, 5, 10, 20, 40, 80, 160, 320, 640, 1280, 2560, 5120, 10240} slots, as well as periods of 1 and 2 slots. Among these, a period of 1 slot plus 14 OFDM symbols within the slot enables continuous N-PRS;
bandwidth: In addition to the PRB count defined for DL PRS in 5G NR Rel-16, it also supports PRBs fewer than 24, such as 4, 8, 12, 16, or 20;
configuration relationship: one possible configuration relationship between the first N-PRS resource and the second N-PRS resource is as follows:
   Different bandwidths: the bandwidth of the first N-PRS is smaller than that of the second N-PRS.
   Different periodicities: When both the first N-PRS and the second N-PRS are periodic N-PRS, the periodicity of the first N-PRS is smaller than that of the second N-PRS. When the first N-PRS is periodic, the second N-PRS can be semi-persistent or aperiodic;
   Different resource types: when the first N-PRS is aperiodic, the second N-PRS can be periodic or semi-persistent. For example, the first N-PRS is configured to occupy N = 4 consecutive slots as an aperiodic N-PRS, assisting in high-precision burst CPP positioning (e.g., centimeter-level positioning error), while the second N-PRS is a low-overhead periodic N-PRS used for coarse positioning (e.g., meter-level positioning error).

Step 2: The LMF receives the positioning measurements and measurement quality reported by the first terminal and calculates the location of the first terminal based on the provided information.

Among them, the positioning measurements and measurement quality can be reported in non-differential or differential forms, while also including the calculation method used in Step 2 and configuration IDs for the first N-PRS and the second N-PRS.

### Embodiment 2:

This embodiment mainly describes NR Uu uplink positioning or NR Uu uplink-downlink combined positioning. The entities involved in NR Uu uplink positioning or NR Uu uplink-downlink combined positioning as described in this embodiment include the first terminal, network-side device, and LMF. For aperiodic N-PRS resources, the parameter N, the subcarrier spacing number is the number of consecutive slots occupied, depends on the terminal capability (UE capability). The set of values for N is {1, 2, 4, 8, 16}, with the current value being N = 8. The specific process includes the following:
steps performed by the first terminal:
Step 1: receiving, by the first terminal, positioning assistance data information configured or pre-configured by the network (network-side device/LMF), where the information includes configuration information related to the first N-PRS and the second N-PRS.

Among these, the first N-PRS is a newly defined downlink N-PRS or uplink N-PRS; the second PRS can be a newly defined downlink N-PRS or uplink N-PRS, or it can be the DL PRS and/or UL SRS-Pos defined in 5G NR Rel-16.

For the positioning method described in this embodiment, the specific processing method of the terminal is as follows:
For NR Uu uplink positioning and NR Uu uplink-downlink combined positioning methods, obtaining, by the first terminal, the configuration information of the first N-PRS and the second N-PRS through RRC signaling from the serving network-side device.

Among them, the configuration information of the first N-PRS and the second N-PRS includes at least one of the following:
Number of OFDM Symbols in the time domain: Within one slot, the maximum number of OFDM symbols that a periodic N-PRS resource supports occupying is 14, meaning all 14 OFDM symbols in one slot are included. Furthermore, for an aperiodic N-PRS resource, it also supports occupying N = 8 consecutive slots (triggered once, with transmission over 8 consecutive slots);
comb size in the frequency domain: Supporting values greater than 12, for example, 24;
Pattern: supporting three options: option 1: Non-staggered pattern, where the RE shift of all OFDM symbols in the same cell is identical, but differs between different cells. Option 2: Staggered pattern, for example, the staggered pattern based on Rel-16 NR DL PRS and/or UL SRS-Pos. Option 3: Partially staggered pattern, where the RE shift is the same for part of the symbols occupied by a PRS resource but differs for other symbols. Among these, Option 2 (staggered pattern) applies only to the second N-PRS, while both Option 1 (non-staggered pattern) and Option 3 (partially staggered pattern) apply to both the first N-PRS and the second N-PRS;
Periodicity: supporting periodic N-PRS, semi-persistent N-PRS, and aperiodic N-PRS. For periodic N-PRS, supporting {4, 8, 16, 32, 64, 5, 10, 20, 40, 80, 160, 320, 640, 1280, 2560, 5120, 10240} slots, as well as periods of 1 and 2 slots. Specifically, when the periodicity is 1 slot plus 14 OFDM symbols within 1 slot, continuous N-PRS can be achieved.

Bandwidth: in addition to the number of PRBs defined for DL PRS in 5G NR Rel-16, supporting fewer than 24 PRBs, such as 4, 8, 12, 16, and 20.
configuration relationships between the first N-PRS resource and the second N-PRS resource include:
Different bandwidths: The bandwidth of the first N-PRS is smaller than that of the second N-PRS.

Different periodicities: when both the first N-PRS and the second N-PRS are periodic N-PRS, the periodicity of the first N-PRS is smaller than that of the second N-PRS. When the first N-PRS is a periodic N-PRS, the second N-PRS can be a semi-persistent N-PRS or an aperiodic N-PRS.

Different resource types: when the first N-PRS is an aperiodic N-PRS, the second N-PRS can be a periodic N-PRS or a semi-persistent N-PRS. For example, the first N-PRS can be configured to occupy N = 8 consecutive slots of an aperiodic N-PRS to assist in bursty high-precision CPP positioning (e.g., centimeter-level positioning error), while the second N-PRS is a low-overhead periodic N-PRS used for coarse positioning (e.g., meter-level positioning error).

Step 2: based on the positioning assistance data information obtained in Step 1, the first terminal performs processing for the positioning method described in this embodiment, as follows:
for NR Uu uplink positioning and NR Uu uplink-downlink combined positioning methods, transmitting, by the first terminal, the first N-PRS and the second N-PRS to the network-side device to enable the network-side device to obtain positioning measurement values and positioning measurement quality.

Among these, the default positioning measurement values include phase measurement values POA and PDOA. Optionally, they may also include one or more of the following measurement values: Delay-related measurement values: TOA, RSTD. Angle-related measurement values: AoA, AoD. Power-related measurement values: RSRP, RSRPP. These three types of optional measurement values can be independently obtained or can be obtained based on smoothed carrier phase measurement values. Specifically, the following three methods are supported:
method 1: obtaining, by the first terminal, phase measurement values based solely on the first N-PRS and delay/angle/power measurement values based on the second N-PRS;
method 2: obtaining, by the first terminal, phase measurement values jointly based on the first N-PRS and the second N-PRS, and delay/angle/power measurement values based on the first N-PRS and the second N-PRS;
method 3: obtaining, by the first terminal, first measurement values (phase) based on the first N-PRS, and obtaining second measurement values (delay/angle/power) based on the second N-PRS; then smoothing the second measurement values based on the first measurement values to obtain third measurement values;
Method 4: obtaining, by the first terminal, phase measurement values and delay/angle/power measurement values based solely on the first N-PRS or the second N-PRS.

Step 3: reporting, by the first terminal, the positioning measurement values and measurement quality obtained in step 2 to the LMF for position calculation of the first terminal based on the reported information.

Among these, the positioning measurement values and measurement quality can be reported in a non-differential or differential form, and simultaneously include the calculation method used in step 2 as well as configuration ids of the first N-PRS and the second N-PRS.

Among these, the network-side device (base station/TRP) performs the following steps:
Step 1: for NR Uu uplink positioning and NR Uu uplink-downlink combined positioning methods, receiving, by the network-side device, the first N-PRS and the second N-PRS sent by the first terminal, and obtaining positioning measurement values and positioning measurement quality.

Among these, the default positioning measurement values include phase measurement values POA and PDOA. Optionally, they may also include one or more of the following measurement values: Delay-related measurement values: TOA, RSTD. Angle-related measurement values: AoA, AoD. Power-related measurement values: RSRP, RSRPP. These three types of optional measurement values can be independently obtained or can be obtained based on smoothed carrier phase measurement values. Specifically, the following methods are supported:
Method 1: obtaining, by the network-side device, phase measurement values based solely on the first N-PRS and delay/angle/power measurement values based on the second N-PRS.
Method 2: obtaining, by the network-side device, phase measurement values jointly based on the first N-PRS and the second N-PRS, and delay/angle/power measurement values based on the first N-PRS and the second N-PRS.
method 3: obtaining, by the network-side device, first measurement values (phase) based on the first N-PRS, and obtaining second measurement values (delay/angle/power) based on the second N-PRS; then smoothing the second measurement values based on the first measurement values to obtain third measurement values.
Method 4: obtaining, by the network-side device, phase measurement values and delay/angle/power measurement values based solely on the first N-PRS or the second N-PRS.

Step 2: reporting, by the network-side device, the positioning measurement values and measurement quality obtained in step 1 to the LMF for position calculation of the first terminal based on the reported information.

Among these, the positioning measurement values and measurement quality can be reported in a non-differential or differential form, and simultaneously include the calculation method used in step 2 as well as configuration IDs of the first N-PRS and the second N-PRS.

Among these, the LMF performs the following steps:
Step 1: receiving, by the LMF, the positioning measurement values and measurement quality reported by the first terminal, and performing position calculation of the first terminal based on the reported information.

Among these, the positioning measurement values and measurement quality can be reported in a non-differential or differential form, and simultaneously include the calculation method used in step 2 as well as configuration identifiers (IDs) of the first N-PRS and the second N-PRS.

### Embodiment 3:

This embodiment primarily describes the NR sidelink positioning method. The NR sidelink positioning method described in this embodiment involves entities such as the first terminal, network-side device, LMF, and second terminal. For non-periodic N-PRS resources, parameter N, which represents the number of consecutive time slots occupied, depends on the terminal capability (UE capability). The value set is {1, 2, 4, 8, 16}, and the current value is N=2. The specific process includes the following:
among these, the first terminal performs the following steps:
Step 1: receiving, by the first terminal, positioning assistance data information configured or preconfigured by the network (network-side device/LMF), wherein the information includes configuration information related to the first N-PRS and the second N-PRS.

Among these, the first N-PRS is a newly defined downlink N-PRS or uplink N-PRS. The second PRS can be a newly defined downlink N-PRS or uplink N-PRS, or it can be the DL PRS and/or UL SRS-Pos defined in 5G NR Rel-16.

For the positioning method in this embodiment, the specific processing method of the first terminal is as follows:
For the NR sidelink positioning method, obtaining, by the first terminal, configuration information of the first N-PRS and the second N-PRS through NRPPa signaling of the LMF, RRC signaling of the serving network-side device, or preconfigured resource pools.

Among these, the configuration information of the first N-PRS and the second N-PRS includes at least one of the following:
number of OFDM symbols in the time domain: supporting a maximum of 14 OFDM symbols occupied by a periodic N-PRS resource within one time slot, which includes all 14 OFDM symbols within one slot; and for a non-periodic N-PRS resource, supporting occupancy of N=2 consecutive time slots (triggered once, allowing transmission across 2 consecutive time slots).
comb size in the frequency domain: supporting values greater than 12, such as 24;
Pattern: supporting three options: option 1: non-staggered pattern, where the RE shifts of all OFDM symbols within the same cell are the same, and the RE shifts of different cells are different. Option 2: staggered pattern, such as the staggered pattern based on Rel-16 NR DL PRS and/or UL SRS-Pos. Option 3: partially staggered pattern, where the RE shifts of some symbols occupied by a PRS resource are the same, and the RE shifts of other symbols are different. Among these, option 2 (staggered pattern) is only applicable to the second N-PRS, while option 1 (non-staggered pattern) and option 3 (partially staggered pattern) are applicable to both the first N-PRS and the second N-PRS;
Periodicity: supporting periodic N-PRS, semi-persistent N-PRS, and non-periodic N-PRS. For periodic N-PRS, supporting {4, 8, 16, 32, 64, 5, 10, 20, 40, 80, 160, 320, 640, 1280, 2560, 5120, 10240} slots, as well as 1 and 2-slot periodicities. Among these, a periodicity of 1 slot + 14 OFDM symbols within 1 slot achieves continuous N-PRS;
Bandwidth: supporting fewer than 24 PRBs in addition to the PRB numbers defined for DL PRS in 5G NR Rel-16, such as 4, 8, 12, 16, and 20.

Among these, one configuration relationship between the first N-PRS resource and the second N-PRS resource is as follows:
different bandwidth: the bandwidth of the first N-PRS is smaller than that of the second N-PRS;
Different periodicities: when both the first N-PRS and the second N-PRS are periodic N-PRS, the periodicity of the first N-PRS is smaller than that of the second N-PRS; when the first N-PRS is a periodic N-PRS, the second N-PRS is a semi-persistent or non-periodic N-PRS.
Different resource types: when the first N-PRS is a non-periodic N-PRS, the second N-PRS can be a periodic N-PRS or a semi-persistent N-PRS. For example, configuring the first N-PRS as a non-periodic N-PRS occupying N=2 consecutive time slots helps achieve burst high-precision CPP positioning (e.g., positioning error at centimeter level), while the second N-PRS, being a low-overhead periodic N-PRS, is used for coarse positioning (e.g., positioning error at meter level).

Step 2: processing, by the first terminal, the positioning auxiliary data information obtained in step 1, according to the positioning method in this embodiment, specifically as follows:
For the NR sidelink positioning method, receiving and measuring, by the first terminal, the first N-PRS and the second N-PRS from the second terminal, to obtain positioning measurement values and positioning measurement quality.

The positioning measurement values by default include phase-related measurement values such as POA and PDOA, optionally also including one or more of the following: delay-related measurement values such as TOA and RSTD, angle-related measurement values such as AoA and AoD, and power-related measurement values such as RSRP and RSRPP. These optional measurement values can either be independently obtained or derived through smoothing based on carrier phase measurement values. specifically, the following four methods can be included:
Method 1: obtaining, by the first terminal, phase measurement values based solely on the first N-PRS, and obtaining delay/angle/power measurement values based on the second N-PRS.
Method 2: obtaining, by the first terminal, phase measurement values jointly based on the first N-PRS and the second N-PRS, and obtaining delay/angle/power measurement values based on the first N-PRS and the second N-PRS.
Method 3: obtaining, by the first terminal, a first measurement value (phase) based on the first N-PRS, and obtaining a second measurement value (delay/angle/power) based on the second N-PRS; then smoothing the second measurement value based on the first measurement value to obtain a third measurement value.
Method 4: obtaining, by the first terminal, phase measurement values and delay/angle/power measurement values based solely on either the first N-PRS or the second N-PRS.

Step 3: reporting, by the first terminal, the positioning measurement values and measurement quality obtained in step 2 to the second terminal, for the second terminal to calculate the position of the first terminal based on the above information.

The positioning measurement values and measurement quality can be reported in non-differential or differential formats, and simultaneously include the calculation method adopted in step 2 and configuration IDs of the first N-PRS and the second N-PRS.

Among them, the second terminal performs the following steps:
step 1: for the NR sidelink positioning method, transmitting, by the second terminal, the first N-PRS and the second N-PRS to the first terminal, for the first terminal to receive and obtain positioning measurement values and positioning measurement quality.

The first N-PRS can be a newly defined downlink N-PRS or uplink N-PRS; the second PRS can be a newly defined downlink N-PRS or uplink N-PRS, or 5G NR Rel-16 defined DL PRS and/or UL SRS-Pos.
the configuration information of the first N-PRS and the second N-PRS includes at least one of the following:
number of OFDM symbols in the time domain: supporting a maximum of 14 OFDM symbols occupied by a periodic N-PRS resource within one time slot, which includes all 14 OFDM symbols within one slot; for a non-periodic N-PRS resource, supporting occupancy of N=2 consecutive time slots (triggered once, allowing transmission across 2 consecutive time slots).

Comb size in the frequency domain: supporting values greater than 12, such as 24.

Pattern: supporting three options: option 1: non-staggered pattern, where the RE shifts of all OFDM symbols within the same cell are the same, and the RE shifts of different cells are different.
Option 2: staggered pattern, such as the staggered pattern based on Rel-16 NR DL PRS and/or UL SRS-Pos. Option 3: partially staggered pattern, where the RE shifts of some symbols occupied by a PRS resource are the same, and the RE shifts of other symbols are different. Among these, option 2 (staggered pattern) is only applicable to the second N-PRS, while option 1 (non-staggered pattern) and option 3 (partially staggered pattern) are applicable to both the first N-PRS and the second N-PRS.

Periodicity: supporting periodic N-PRS, semi-persistent N-PRS, and non-periodic N-PRS. for periodic N-PRS, supporting {4, 8, 16, 32, 64, 5, 10, 20, 40, 80, 160, 320, 640, 1280, 2560, 5120, 10240} slots, as well as 1 and 2-slot periodicities. among these, a periodicity of 1 slot + 14 OFDM symbols within 1 slot achieves continuous N-PRS.

Bandwidth: supporting fewer than 24 PRBs in addition to the PRB numbers defined for DL PRS in 5G NR Rel-16, such as 4, 8, 12, 16, and 20.

Among them, a configuration relationship between the first N-PRS resource and the second N-PRS resource can be as follows:
Bandwidth difference: the bandwidth of the first N-PRS is smaller than that of the second N-PRS.

Periodicity difference: when both the first N-PRS and the second N-PRS are periodic N-PRS, the periodicity of the first N-PRS is smaller than that of the second N-PRS. When the first N-PRS is periodic N-PRS, the second N-PRS can be semi-persistent N-PRS or non-periodic N-PRS.

Resource type difference: when the first N-PRS is non-periodic N-PRS, the second N-PRS can be periodic N-PRS or semi-persistent N-PRS. For example, the first N-PRS is configured to occupy consecutive N=2 time slots of non-periodic N-PRS to assist in achieving burst CPP high-precision positioning (e.g., positioning error at the centimeter level). In contrast, the second N-PRS is a low-overhead periodic N-PRS used to achieve coarse-precision positioning (e.g., positioning error at the meter level).

Step 2: receiving, by the second terminal, the positioning measurement values and positioning measurement quality reported by the first terminal, and resolving the position of the first terminal based on the above information to obtain relative positioning or absolute positioning.

Among them, the positioning measurement values and positioning measurement quality can be reported in non-differential or differential forms, and include the calculation method adopted in step 2 and the configuration IDs of the first N-PRS and the second N-PRS.

Among them, the network-side device (base station/TRP) performs the following steps:
Step 1: for the NR sidelink positioning method, notifying, by the serving network-side device, the first terminal of the configuration information of the first N-PRS and the second N-PRS through RRC signaling.

The first N-PRS can be a newly defined downlink N-PRS or uplink N-PRS; the second PRS can be a newly defined downlink N-PRS or uplink N-PRS, or 5G NR Rel-16 defined DL PRS and/or UL SRS-Pos.

The configuration information of the first N-PRS and the second N-PRS resources includes at least one of the following:
Number of OFDM symbols in the time domain: supporting a maximum of 14 OFDM symbols occupied by a periodic N-PRS resource within one time slot, which includes all 14 OFDM symbols within one slot. For a non-periodic N-PRS resource, supporting occupancy of N=2 consecutive time slots (triggered once, allowing transmission across 2 consecutive time slots).

Comb size in the frequency domain: supporting values greater than 12, such as 24.

Patterns: supporting three options. Option 1: non-staggered pattern, meaning the RE shift of all OFDM symbols in the same cell is identical, but different across cells; option 2: staggered pattern, such as the staggered pattern based on Rel-16 NR DL PRS and/or UL SRS-Pos; option 3: partially staggered pattern, for instance, the RE shift is identical for part of the symbols occupied by a PRS resource, but differs for other symbols. Among these, option 2 (staggered pattern) applies only to the second N-PRS, while option 1 (non-staggered pattern) and option 3 (partially staggered pattern) apply to both the first N-PRS and the second N-PRS.

Periodicity: supporting periodic N-PRS, semi-persistent N-PRS, and non-periodic N-PRS. for periodic N-PRS, supporting {4,8,16,32,64,5,10,20,40,80,160,320,640,1280,2560,5120,10240} slots, as well as periodicities of 1 and 2 slots. When the periodicity is 1 slot plus 14 OFDM symbols within the slot, continuous N-PRS is achieved.

Bandwidth: in addition to the number of PRBs defined by Rel-16 NR DL PRS, supporting fewer than 24 PRBs, such as 4/8/12/16/20.

Among them, a configuration relationship between the first N-PRS resource and the second N-PRS resource can be as follows:
bandwidth difference: the bandwidth of the first N-PRS is smaller than that of the second N-PRS;
Periodicity difference: when both the first N-PRS and the second N-PRS are periodic N-PRS, the periodicity of the first N-PRS is smaller than that of the second N-PRS. when the first N-PRS is periodic N-PRS, the second N-PRS can be semi-persistent N-PRS or non-periodic N-PRS;
Resource type difference: when the first N-PRS is non-periodic N-PRS, the second N-PRS can be periodic N-PRS or semi-persistent N-PRS. For example, the first N-PRS is configured to occupy consecutive N=2 time slots of non-periodic N-PRS to assist in achieving burst CPP high-precision positioning (e.g., positioning error at the centimeter level). In contrast, the second N-PRS is a low-overhead periodic N-PRS used to achieve coarse-precision positioning (e.g., positioning error at the meter level).

Among them, the LMF performs the following steps:
Step 1: for the sidelink positioning method, notifying, by the LMF, the first terminal of the configuration information of the first N-PRS and the second N-PRS through LPP signaling.

The first N-PRS can be a newly defined downlink N-PRS or uplink N-PRS; the second PRS can be a newly defined downlink N-PRS or uplink N-PRS, or 5G NR Rel-16 defined DL PRS and/or UL SRS-Pos.

Referring to figure 8, figure 8 is a structural diagram of a terminal provided in an embodiment of the present disclosure. the terminal is a first terminal, as shown in figure 8, and includes a memory 820, a transceiver 800, and a processor 810:
the memory 820 is configured to store computer programs; the transceiver 800 is configured to send and receive data under the control of the processor 810; the processor 810 is configured to read the computer programs in the memory 820 and execute the following operations:
obtaining configuration information of a PRS, where the PRS includes a first PRS, the configuration information includes at least one of a first time-domain configuration and a first bandwidth configuration of the first PRS, and the first time-domain configuration includes at least one of the following: a maximum number of symbols occupied by one cycle of the periodic first PRS being 14, the non-periodic first PRS occupying N consecutive time slots, where N is an integer greater than or equal to 1; and the first bandwidth configuration is used to indicate that PRB resources occupied by the first PRS include PRB resources of fewer than 24 PRBs;
performing positioning operations based on the configuration information.

In figure 8, the bus architecture may include any number of interconnected buses and bridges, linking various circuits such as one or more processors represented by the processor 810 and the memory represented by the memory 820. the bus architecture may also link various other circuits such as peripherals, voltage regulators, and power management circuits, which are well known in the art and are not described further herein. The bus interface provides the interface. The transceiver 800 may consist of multiple elements, including a transmitter and a receiver, and provides the unit for communication with various other devices over transmission media, including wireless channels, wired channels, optical cables, and other transmission media. For different user devices, the user interface may also be an interface capable of connecting external or internal required devices, including but not limited to keypads, displays, speakers, microphones, joysticks, etc.

The processor 810 is responsible for managing the bus architecture and general processing, while the memory 820 can store data used by the processor 810 during operation execution.

Optionally, the processor 810 may be a central processing unit (CPU), an application-specific integrated circuit (ASIC), a field-programmable gate array (FPGA), or a complex programmable logic device (CPLD). The processor may also adopt a multi-core architecture.

The processor is configured to execute any of the methods provided in the embodiments of the present disclosure by calling the computer program stored in the memory according to obtained executable instructions. The processor and the memory may also be physically arranged separately.

Optionally, the configuration information further includes at least one of the following:
a first subcarrier spacing number of the first PRS, where the first subcarrier spacing number includes a subcarrier spacing number greater than 12, and the subcarrier spacing number refers to the number of subcarriers between two adjacent subcarriers in the frequency domain occupied by the first PRS on the same symbol;
first periodicity information of the first PRS, where the first periodicity information includes at least one of the following: periodic, semi-persistent, aperiodic;
first pattern information of the first PRS, where the first pattern information includes at least one of the following:
   non-staggered pattern, staggered pattern, partially staggered pattern.

Optionally, the PRS further includes a second PRS, and the configuration information further includes at least one of a second time-domain configuration and a second bandwidth configuration of the second PRS, where the second time-domain configuration includes at least one of the following: a maximum number of symbols occupied by one cycle of the periodic second PRS being 14, the non-periodic second PRS occupying N consecutive time slots; and the second bandwidth configuration is used to indicate that PRB resources occupied by the second PRS include fewer than 24 PRBs.

Optionally, the configuration information further includes at least one of the following:
a second subcarrier spacing number of the second PRS, where the second subcarrier spacing number includes a subcarrier spacing number greater than 12, and the subcarrier spacing number refers to the number of subcarriers between two adjacent subcarriers in the frequency domain occupied by the second PRS on the same symbol;
second periodicity information of the second PRS, where the second periodicity information includes at least one of the following: periodic, semi-persistent, aperiodic.
second pattern information of the second PRS, where the second pattern information includes at least one of the following:
   non-staggered pattern, staggered pattern, partially staggered pattern.

Optionally, at least one difference exists between the first PRS and the second PRS, including:
size of frequency domain resources occupied, periodicity, or type of time-domain resources occupied.

Optionally, the size of frequency domain resources occupied by the first PRS is smaller than that of the second PRS; and/or
in a case where both the first PRS and the second PRS are periodic signals, the periodicity of the first PRS is smaller than that of the second PRS; or the first PRS is a periodic signal, and the second PRS is a semi-persistent or aperiodic signal; or the first PRS is an aperiodic signal, and the second PRS is a semi-persistent or periodic signal.

Optionally, performing positioning operations based on the configuration information includes:
measuring at least one of the first PRS and the second PRS to obtain first measurement information and transmitting the first measurement information to a location management function (LMF) or a second terminal, where at least one of the first PRS and the second PRS is transmitted by the network-side device or the second terminal;
transmitting one of the first PRS and the second PRS to the network-side device, and measuring the other of the first PRS and the second PRS transmitted by the network-side device to obtain second measurement information and transmitting the second measurement information to the LMF or the second terminal;
transmitting at least one of the first PRS and the second PRS to the network-side device.

Optionally, the first measurement information is used to report at least one of the following:
first positioning measurement values, first positioning measurement qualities;
or, the second measurement information is used to report at least one of the following:
   second positioning measurement values, second positioning measurement qualities.

Optionally, the first measurement information is reported in a non-differential or differential manner to include the first positioning measurement values and the first positioning measurement qualities;
the second measurement information is reported in a non-differential or differential manner to include the second positioning measurement values and the second positioning measurement qualities.

Optionally, the first positioning measurement values include at least one of the following:
phase measurements obtained based on the first PRS, delay measurements obtained based on the second PRS, angle measurements obtained based on the second PRS, power measurements obtained based on the second PRS;
or, the first positioning measurement values include at least one of the following:
   phase measurements obtained based on both the first PRS and the second PRS, delay measurements obtained based on both the first PRS and the second PRS, angle measurements obtained based on both the first PRS and the second PRS, power measurements obtained based on both the first PRS and the second PRS;
   or, the first positioning measurement values include at least one of the following:
      third measurements obtained by smoothing second measurements based on first measurements, where the first measurements are measurements obtained based on the first PRS, and the second measurements include at least one of the following: delay measurements obtained based on the second PRS, angle measurements obtained based on the second PRS, power measurements obtained based on the second PRS;
      or, the second positioning measurement values include at least one of the following:
         phase measurements obtained based on the first PRS, delay measurements obtained based on the first PRS, angle measurements obtained based on the first PRS, power measurements obtained based on the first PRS;
         or, the second positioning measurement values include at least one of the following:
            phase measurements obtained based on the second PRS, delay measurements obtained based on the second PRS, angle measurements obtained based on the second PRS, power measurements obtained based on the second PRS.

Optionally, the first measurement information is further used to report at least one of the following:
calculation methods of the first positioning measurement values, identification of configuration information of the first PRS, identification of configuration information of the second PRS;
the second measurement information is used to report at least one of the following:
the calculation method of the second positioning measurement values, the identification of configuration information of the first PRS, and the identification of configuration information of the second PRS.

Optionally, the first terminal obtains configuration information of the PRS, including at least one of the following:
the first terminal receives the configuration information of the PRS sent by the network-side device;
the first terminal receives the configuration information of the PRS sent by the LMF.

Optionally, the first PRS includes one of the following:
first uplink PRS, first downlink PRS, first sidelink PRS;
the second PRS includes one of the following:
   second uplink PRS, second downlink PRS, second sidelink PRS.

It should be noted that the first terminal provided in the embodiments of the present disclosure can implement all the steps of the method embodiments described above and achieve the same technical effects. Therefore, the identical parts and beneficial effects in this embodiment and the method embodiments will not be described in detail here.

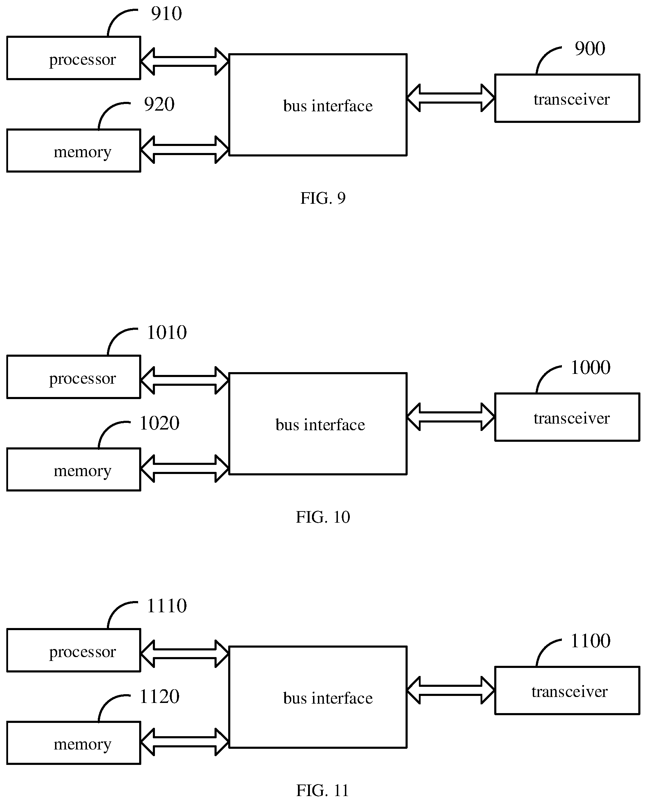

Refer to figure 9, which shows a structural diagram of a network-side device provided in the embodiments of the present disclosure. as shown in figure 9, it includes a memory 920, a transceiver 900, and a processor 910:
the memory 920 is used to store a computer program; the transceiver 900 is used to send and receive data under the control of the processor 910; the processor 910 is used to read the computer program stored in the memory 920 and perform the following operations:
Sending configuration information of the positioning reference signal PRS to the first terminal, wherein the PRS includes a first PRS, and the configuration information includes at least one of a first time-domain configuration and a first bandwidth configuration of the first PRS. The first time-domain configuration includes at least one of the following: the maximum number of symbols occupied by one cycle of the periodic first PRS being 14, the non-periodic first PRS occupying N consecutive time slots, where N is an integer greater than or equal to 1. the first bandwidth configuration is used to indicate that the number of physical resource blocks PRBs occupied by the first PRS includes fewer than 24 PRBs;
based on the configuration information, performing positioning operations.

In figure 9, the bus architecture may include any number of interconnected buses and bridges, specifically linking various circuits represented by one or more processors denoted as processor 910 and the memory denoted as memory 920. The bus architecture can also connect various other circuits, such as peripheral devices, voltage regulators, and power management circuits, which are well-known in the art and will not be further described herein. The bus interface provides an interface. The transceiver 900 may include multiple components, such as a transmitter and a receiver, providing units for communicating with various other devices over transmission media, including wireless channels, wired channels, optical cables, and the like. For different user equipment, the user interface may also serve as an interface capable of connecting external or internal devices, including but not limited to keypads, displays, speakers, microphones, and joysticks.

The processor 910 is responsible for managing the bus architecture and general processing, while the memory 920 may store data used by the processor 900 during operation.

Optionally, the processor 910 may be a central processing unit (CPU), an application-specific integrated circuit (ASIC), a field-programmable gate array (FPGA), or a complex programmable logic device (CPLD). The processor may also adopt a multi-core architecture.

The processor, by invoking the computer program stored in the memory, executes any of the methods provided by the embodiments of the present disclosure according to the obtained executable instructions. The processor and the memory may also be physically arranged separately.

Optionally, the configuration information further includes at least one of the following:
the first subcarrier spacing number of the first PRS, which includes subcarrier spacing numbers greater than 12. the subcarrier spacing number refers to the number of subcarriers spaced between two adjacent subcarriers in the frequency domain occupied by the first PRS on the same symbol;
the first periodicity information of the first PRS, which includes at least one of the following: periodic, semi-persistent, and aperiodic;
the first pattern information of the first PRS, which includes at least one of the following:
   non-staggered pattern, staggered pattern, and partially staggered pattern.

Optionally, the PRS further includes a second PRS, and the configuration information further includes at least one of the second time-domain configuration and the second bandwidth configuration of the second PRS, where the second time-domain configuration includes at least one of the following: the maximum number of symbols occupied by one cycle of the periodic second PRS is 14, and the non-periodic second PRS occupies N consecutive time slots; the second bandwidth configuration indicates that the PRB resources occupied by the second PRS include fewer than 24 PRBs.

Optionally, the configuration information further includes at least one of the following:
the second subcarrier spacing number of the second PRS, which includes subcarrier spacing numbers greater than 12. the subcarrier spacing number refers to the number of subcarriers spaced between two adjacent subcarriers in the frequency domain occupied by the second PRS on the same symbol;
the second periodicity information of the second PRS, which includes at least one of the following: periodic, semi-persistent, and aperiodic;
the second pattern information of the second PRS, which includes at least one of the following:
   non-staggered pattern, staggered pattern, and partially staggered pattern.

Optionally, at least one difference exists between the first PRS and the second PRS, including:
the size of frequency-domain resources occupied, periodicity, or the type of time-domain resources occupied.

Optionally, the size of frequency-domain resources occupied by the first PRS is smaller than that of the second PRS; and/or
if both the first PRS and the second PRS are periodic signals, the periodicity of the first PRS is smaller than that of the second PRS; or the first PRS is a periodic signal and the second PRS is a semi-persistent or aperiodic signal; or the first PRS is an aperiodic signal and the second PRS is a semi-persistent or periodic signal.

Optionally, executing the positioning operation based on the configuration information includes at least one of the following:
measuring at least one of the first PRS and the second PRS transmitted by the first terminal to obtain first measurement information and transmitting the first measurement information to the location management function (LMF);
transmitting one of the first PRS and the second PRS to the first terminal and measuring the other of the first PRS and the second PRS transmitted by the first terminal to obtain second measurement information and transmitting the second measurement information to the LMF;
transmitting at least one of the first PRS and the second PRS to the first terminal.

Optionally, the first measurement information is used to report at least one of the following:
first positioning measurement values and first positioning measurement qualities;
or the second measurement information is used to report at least one of the following:
   second positioning measurement values and second positioning measurement qualities.

Optionally, the first measurement information is reported in a non-differential or differential form to indicate the first positioning measurement values and the first positioning measurement qualities;
the second measurement information is reported in a non-differential or differential form to indicate the second positioning measurement values and the second positioning measurement qualities.

Optionally, the first positioning measurement values include at least one of the following:
phase measurements obtained based on the first PRS, delay measurements obtained based on the second PRS, angle measurements obtained based on the second PRS, and power measurements obtained based on the second PRS;
or the first positioning measurement values include at least one of the following:
   phase measurements obtained based on both the first PRS and the second PRS, delay measurements obtained based on both the first PRS and the second PRS, angle measurements obtained based on both the first PRS and the second PRS, and power measurements obtained based on both the first PRS and the second PRS;
   or the first positioning measurement values include at least one of the following:
      third measurement values obtained by smoothing second measurement values based on first measurement values, where the first measurement values are measurements obtained based on the first PRS, and the second measurement values include at least one of: delay measurements obtained based on the second PRS, angle measurements obtained based on the second PRS, and power measurements obtained based on the second PRS;
      or the second positioning measurement values include at least one of the following:
         phase measurement values obtained based on the first PRS, delay measurement values obtained based on the first PRS, angle measurement values obtained based on the first PRS, or power measurement values obtained based on the first PRS;
         or the second positioning measurement values include at least one of the following:
            phase measurement values obtained based on the second PRS, delay measurement values obtained based on the second PRS, angle measurement values obtained based on the second PRS, or power measurement values obtained based on the second PRS.

Optionally, the first measurement information is further used to report at least one of the following:
the computation method of the first positioning measurement values, the configuration identification of the first PRS, and the configuration identification of the second PRS;
the second measurement information is used to report at least one of the following:
   the computation method of the second positioning measurement values, the configuration identification of the first PRS, and the configuration identification of the second PRS.

Optionally, the first PRS includes one of the following:
first uplink PRS, first downlink PRS, or first sidelink PRS;
the second PRS includes one of the following:
   second uplink PRS, second downlink PRS, or second sidelink PRS.

It should be noted that the above-described network-side device provided in embodiments of the present disclosure can execute all the method steps performed in the method embodiments described above, and can achieve the same technical effects. The details that are identical to the method embodiments and their beneficial effects will not be redundantly described here.

Referring to FIG. 10, FIG. 10 is a structural diagram of a terminal provided in an embodiment of the present disclosure. This terminal is the second terminal. as shown in FIG. 10, the terminal includes a memory 1020, a transceiver 1000, and a processor 1010:
the memory 1020 is configured to store computer programs; the transceiver 1000 is configured to send and receive data under the control of the processor 1010; and the processor 1010 is configured to read the computer programs in the memory 1020 and perform the following operations:
sending the PRS to the first terminal based on the configuration information of the positioning reference signal PRS, where the PRS includes the first PRS, and the configuration information includes at least one of the first time-domain configuration and the first bandwidth configuration of the first PRS. the first time-domain configuration includes at least one of the following: the maximum number of symbols occupied by one cycle of the periodic first PRS being 14, and the non-periodic first PRS occupying N consecutive time slots, where N is an integer greater than or equal to 1; the first bandwidth configuration indicates that the physical resource block PRB resources occupied by the first PRS include fewer than 24 PRBs;
receiving measurement information sent by the first terminal.

In FIG. 10, the bus architecture may include any number of interconnected buses and bridges that connect various circuits, represented specifically by the processor 1010 as one or more processors and the memory 1020 as a storage system. The bus architecture may also connect various other circuits, such as peripheral devices, voltage regulators, and power management circuits, all of which are well known in the art and will not be further described herein. The bus interface provides an interface. The transceiver 1000 may comprise multiple components, such as a transmitter and a receiver, providing a unit for communicating with various other devices over transmission media, including wireless channels, wired channels, optical cables, and other transmission media. For different user equipment, the user interface may also include interfaces capable of external or internal connections to required devices, including but not limited to keyboards, displays, speakers, microphones, and joysticks.

The processor 1010 is responsible for managing the bus architecture and general processing, and the memory 1020 can store data used by the processor 1000 during operations.

Optionally, the processor 1010 may be a central processing unit (CPU), an application-specific integrated circuit (ASIC), a field-programmable gate array (FPGA), or a complex programmable logic device (CPLD). the processor may also adopt a multi-core architecture.

The processor executes the computer programs stored in the memory to perform any of the methods provided in the embodiments of the present disclosure according to the obtained executable instructions. the processor and the memory may also be physically arranged separately.

Optionally, the configuration information further includes at least one of the following:
the number of first subcarrier spacings of the first PRS, where the number of first subcarrier spacings includes subcarrier spacings greater than 12, and the number of subcarrier spacings represents the number of subcarriers between two adjacent subcarriers in the frequency domain occupied by the first PRS on the same symbol;
the first periodicity information of the first PRS, where the first periodicity information includes at least one of the following: periodic, semi-persistent, non-periodic;
the first pattern information of the first PRS, where the first pattern information includes at least one of the following:
   non-staggered pattern, staggered pattern, partially staggered pattern.

Optionally, the PRS further includes a second PRS, and the configuration information further includes at least one of the second time-domain configuration and the second bandwidth configuration of the second PRS, where the second time-domain configuration includes at least one of the following: the maximum number of symbols occupied by one cycle of the periodic second PRS being 14, and the non-periodic second PRS occupying N consecutive time slots; the second bandwidth configuration indicates that the PRB resources occupied by the second PRS include fewer than 24 PRBs.

Optionally, the configuration information further includes at least one of the following:
the number of second subcarrier spacings of the second PRS, where the number of second subcarrier spacings includes subcarrier spacings greater than 12, and the number of subcarrier spacings represents the number of subcarriers between two adjacent subcarriers in the frequency domain occupied by the second PRS on the same symbol;
the second periodicity information of the second PRS, where the second periodicity information includes at least one of the following: periodic, semi-persistent, non-periodic;
the second pattern information of the second PRS, where the second pattern information includes at least one of the following:
   non-staggered pattern, staggered pattern, partially staggered pattern.

Optionally, at least one of the following differences exists between the first PRS and the second PRS:
size of frequency-domain resources occupied, periodicity, or type of time-domain resources occupied.

Optionally, the size of the frequency-domain resources occupied by the first PRS is smaller than that of the second PRS; and/or
if the first PRS and the second PRS are periodic signals, the periodicity of the first PRS is smaller than that of the second PRS; or the first PRS is a periodic signal, and the second PRS is a semi-persistent or non-periodic signal; or the first PRS is a non-periodic signal, and the second PRS is a semi-persistent or periodic signal.

Optionally, the second terminal sends the PRS to the first terminal based on the configuration information of the PRS, including at least one of the following:
the second terminal sends at least one of the first PRS and the second PRS to the first terminal;
the measurement information is obtained by the first terminal by measuring at least one of the first PRS and the second PRS.

Optionally, the measurement information is used to report at least one of the following:
positioning measurement values, positioning measurement qualities.

Optionally, the measurement information is reported in either a non-differential form or a differential form, including the first positioning measurement values and the first positioning measurement qualities.

Optionally, the positioning measurement values include at least one of the following:
phase measurement values obtained based on the first PRS, delay measurement values obtained based on the second PRS, angle measurement values obtained based on the second PRS, power measurement values obtained based on the second PRS;
or the positioning measurement values include at least one of the following:
   phase measurement values obtained based on both the first PRS and the second PRS, delay measurement values obtained based on both the first PRS and the second PRS, angle measurement values obtained based on both the first PRS and the second PRS, power measurement values obtained based on both the first PRS and the second PRS;
   or the positioning measurement values include at least one of the following:
      third measurement values obtained by smoothing the second measurement values based on the first measurement values, where the first measurement values are measurements obtained based on the first PRS, and the second measurement values include at least one of: delay measurement values obtained based on the second PRS, angle measurement values obtained based on the second PRS, power measurement values obtained based on the second PRS.

Optionally, the measurement information is further used to report at least one of the following:
the computation method of the positioning measurement values, the configuration identification of the first PRS, the configuration identification of the second PRS.

Optionally, the processor 1010 is further configured to:
resolving the position of the first terminal based on the measurement information.

It should be noted that the second terminal provided in the embodiments of this disclosure can implement all the method steps realized in the method embodiments and achieve the same technical effects. therefore, the identical parts and beneficial effects between this embodiment and the method embodiments are not further described here.

Referring to figure 11, figure 11 illustrates a structural diagram of an lmf provided in the embodiments of this disclosure. as shown in figure 11, the lmf includes a memory 1120, a transceiver 1100, and a processor 1110:
the memory 1120 is configured to store computer programs; the transceiver 1100 is configured to send and receive data under the control of the processor 1110; the processor 1110 is configured to read the computer programs in the memory 1120 and execute the following operations:
sending configuration information of positioning reference signal (prs) to the first terminal, wherein the prs includes a first prs, and the configuration information includes at least one of a first time-domain configuration and a first bandwidth configuration of the first prs. the first time-domain configuration includes at least one of the following: the maximum number of symbols occupied by one cycle of the periodic first prs is 14, the non-periodic first prs occupies n consecutive time slots, where n is an integer greater than or equal to 1; the first bandwidth configuration indicates that the physical resource blocks (prb) occupied by the first prs include prb resources fewer than 24 prbs;
acquiring measurement information and resolving the position of the first terminal based on the measurement information.

In figure 11, the bus architecture can include any number of interconnected buses and bridges, linking the circuits represented by the processor 1110 and the memory 1120. the bus architecture may also interconnect various other circuits, such as peripheral devices, regulators, and power management circuits, all of which are well-known in the art and are not further described here. the bus interface provides interconnection. the transceiver 1100 may comprise multiple components, including a transmitter and a receiver, providing communication units for various other devices over transmission media, such as wireless channels, wired channels, optical fibers, etc. for different user equipment, the user interface may also include interfaces capable of externally or internally connecting necessary devices, such as keyboards, displays, speakers, microphones, joysticks, etc.

The processor 1110 manages the bus architecture and typical processing, while the memory 1120 can store data used by the processor 1100 during operations.

Optionally, the processor 1110 may be a central processing unit (cpu), application-specific integrated circuit (asic), field-programmable gate array (fpga), or complex programmable logic device (cpld), and may employ a multi-core architecture.

The processor, by invoking computer programs stored in the memory, executes any of the methods provided in the embodiments of this disclosure according to the obtained executable instructions. the processor and memory may also be physically arranged separately.

Optionally, the configuration information further includes at least one of the following:
the number of first subcarrier spacings of the first prs, wherein the number of first subcarrier spacings includes subcarrier spacings greater than 12, and the number of subcarrier spacings represents the number of subcarriers between two adjacent subcarriers in the frequency domain occupied by the first prs on the same symbol;
the first periodicity information of the first prs, wherein the first periodicity information includes at least one of the following: periodic, semi-persistent, non-periodic;
the first pattern information of the first prs, wherein the first pattern information includes at least one of the following:
   non-staggered pattern, staggered pattern, partially staggered pattern.

Optionally, the prs further includes a second prs, and the configuration information further includes at least one of a second time-domain configuration and a second bandwidth configuration of the second prs, wherein the second time-domain configuration includes at least one of the following: the maximum number of symbols occupied by one cycle of the periodic second prs is 14, the non-periodic second prs occupies n consecutive time slots; the second bandwidth configuration indicates that the prb resources occupied by the second prs include fewer than 24 prbs.

Optionally, the configuration information further includes at least one of the following:
a second subcarrier spacing number of the second PRS, where the second subcarrier spacing number includes subcarrier spacings greater than 12, and the number represents the count of subcarriers between two adjacent subcarriers in the frequency domain occupied by the second PRS on the same symbol;
second periodicity information of the second PRS, where the second periodicity information includes at least one of the following: periodic, semi-persistent, or non-periodic;
second pattern information of the second PRS, where the second pattern information includes at least one of the following:
   non-staggered pattern, staggered pattern, partially staggered pattern.

Optionally, the first PRS and the second PRS differ in at least one of the following:
the size of frequency-domain resources, periodicity, or the type of time-domain resources.

Optionally, the frequency-domain resource size of the first PRS is smaller than that of the second PRS; and/or
if the first PRS and the second PRS are both periodic signals, the periodicity of the first PRS is less than that of the second PRS; or, the first PRS is a periodic signal while the second PRS is a semi-persistent or non-periodic signal; or, the first PRS is a non-periodic signal while the second PRS is a semi-persistent or periodic signal.

Optionally, the measurement information is used to report at least one of the following:
positioning measurement values, positioning measurement quality.

Optionally, the first measurement information reports the first positioning measurement values and quality in either differential or non-differential form.

Optionally, the positioning measurement values include at least one of the following:
phase measurements obtained based on the first PRS, delay measurements obtained based on the second PRS, angle measurements obtained based on the second PRS, or power measurements obtained based on the second PRS;
or, the positioning measurement values include at least one of the following:
   phase measurements obtained based on both the first PRS and the second PRS, delay measurements obtained based on both the first PRS and the second PRS, angle measurements obtained based on both the first PRS and the second PRS, or power measurements obtained based on both the first PRS and the second PRS;
   or, the positioning measurement values include at least one of the following:
      third measurement values obtained by smoothing second measurement values based on first measurement values, where the first measurement values are measurements obtained based on the first PRS, and the second measurement values include at least one of the following: delay measurements obtained based on the second PRS, angle measurements obtained based on the second PRS, or power measurements obtained based on the second PRS.

Optionally, the measurement information is further used to report at least one of the following:
the computation method of the positioning measurement values, the configuration identifier of the first PRS, or the configuration identifier of the second PRS.

It should be noted that the LMF provided in this disclosure can implement all the method steps achieved by the method embodiments and achieve the same technical effects. Therefore, the identical parts and beneficial effects between this embodiment and the method embodiments are not further elaborated.

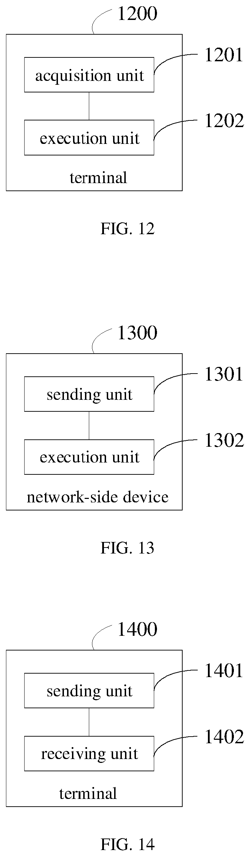

Referring to figure 12, figure 12 illustrates a structural diagram of a terminal provided in this disclosure, the terminal being the first terminal. as shown in figure 12, the terminal 1200 includes:
An acquisition unit 1201, configured to acquire configuration information of a positioning reference signal (PRS), wherein the PRS includes a first PRS. The configuration information includes at least one of a first time-domain configuration and a first bandwidth configuration of the first PRS. The first time-domain configuration includes at least one of the following: the maximum number of symbols occupied by one cycle of the periodic first PRS is 14, the non-periodic first PRS occupies n consecutive time slots, where n is an integer greater than or equal to 1. the first bandwidth configuration indicates that the physical resource block (PRB) resources occupied by the first PRS include fewer than 24 PRBs;
an execution unit 1202, configured to perform positioning operations based on the configuration information.

Optionally, the configuration information further includes at least one of the following:
the first subcarrier spacing number of the first PRS, where the first subcarrier spacing number includes subcarrier spacings greater than 12, and the number represents the count of subcarriers between two adjacent subcarriers in the frequency domain occupied by the first PRS on the same symbol;
the first periodicity information of the first PRS, where the first periodicity information includes at least one of the following: periodic, semi-persistent, or non-periodic;
the first pattern information of the first PRS, where the first pattern information includes at least one of the following:
   non-staggered pattern, staggered pattern, partially staggered pattern.

Optionally, the PRS further includes a second PRS, and the configuration information further includes at least one of the second time-domain configuration and the second bandwidth configuration of the second PRS, where the second time-domain configuration includes at least one of the following: the maximum number of symbols occupied by one cycle of the periodic second PRS is 14, the non-periodic second PRS occupies N consecutive time slots; and the second bandwidth configuration indicates that the PRB resources occupied by the second PRS include fewer than 24 PRBs.

Optionally, the configuration information further includes at least one of the following:
the second subcarrier spacing number of the second PRS, where the second subcarrier spacing number includes subcarrier spacings greater than 12, and the number represents the count of subcarriers between two adjacent subcarriers in the frequency domain occupied by the second PRS on the same symbol;
the second periodicity information of the second PRS, where the second periodicity information includes at least one of the following: periodic, semi-persistent, or non-periodic;
the second pattern information of the second PRS, where the second pattern information includes at least one of the following:
   non-staggered pattern, staggered pattern, partially staggered pattern.

Optionally, the first PRS and the second PRS differ in at least one of the following:
the size of the frequency-domain resources, periodicity, or the type of time-domain resources.

Optionally, the frequency-domain resource size of the first PRS is smaller than that of the second PRS; and/or
if the first PRS and the second PRS are both periodic signals, the periodicity of the first PRS is less than that of the second PRS; or, the first PRS is a periodic signal while the second PRS is a semi-persistent or non-periodic signal; or, the first PRS is a non-periodic signal while the second PRS is a semi-persistent or periodic signal.

Optionally, the first terminal performs positioning operations based on the configuration information, including at least one of the following:
measuring at least one of the first PRS and the second PRS to obtain first measurement information and transmitting the first measurement information to the LMF or a second terminal, where at least one of the first PRS and the second PRS is transmitted by a network-side device or the second terminal;
transmitting one of the first PRS and the second PRS to a network-side device, and measuring the other of the first PRS and the second PRS transmitted by the network-side device to obtain second measurement information and transmitting the second measurement information to the LMF or the second terminal;
transmitting at least one of the first PRS and the second PRS to the network-side device.

Optionally, the first measurement information is used to report at least one of the following:
first positioning measurement values, first positioning measurement quality;
or, the second measurement information is used to report at least one of the following:
   second positioning measurement values, second positioning measurement quality.

Optionally, the first measurement information reports the first positioning measurement values and quality in either non-differential or differential form;
the second measurement information reports the second positioning measurement values and quality in either non-differential or differential form.

Optionally, the first positioning measurement values include at least one of the following:
phase measurements obtained based on the first PRS, delay measurements obtained based on the second PRS, angle measurements obtained based on the second PRS, power measurements obtained based on the second PRS;
or, the first positioning measurement values include at least one of the following:
   phase measurements obtained based on both the first PRS and the second PRS, delay measurements obtained based on both the first PRS and the second PRS, angle measurements obtained based on both the first PRS and the second PRS, power measurements obtained based on both the first PRS and the second PRS;
   or, the first positioning measurement values include at least one of the following:
      third measurement values obtained by smoothing second measurement values based on first measurement values, where the first measurement values are measurements obtained based on the first PRS, and the second measurement values include at least one of the following: delay measurements obtained based on the second PRS, angle measurements obtained based on the second PRS, power measurements obtained based on the second PRS;
      or, the second positioning measurement values include at least one of the following:
         phase measurements obtained based on the first PRS, delay measurements obtained based on the first PRS, angle measurements obtained based on the first PRS, power measurements obtained based on the first PRS;
         or, the second positioning measurement values include at least one of the following:
            phase measurements obtained based on the second PRS, delay measurements obtained based on the second PRS, angle measurements obtained based on the second PRS, power measurements obtained based on the second PRS.

Optionally, the first measurement information further reports at least one of the following:
the computation method of the first positioning measurement values, the configuration identifier of the first PRS, the configuration identifier of the second PRS;
the second measurement information reports at least one of the following:
   the computation method of the second positioning measurement values, the configuration identifier of the first PRS, the configuration identifier of the second PRS.

Optionally, the first terminal obtains configuration information of the PRS, including at least one of the following:
the first terminal receives the configuration information of the PRS sent by a network-side device;
the first terminal receives the configuration information of the PRS sent by the LMF.

Optionally, the first PRS includes one of the following:
a first uplink PRS, a first downlink PRS, or a first sidelink PRS;
the second PRS includes one of the following:
   a second uplink PRS, a second downlink PRS, or a second sidelink PRS.

It should be noted that the first terminal provided in the present disclosure can implement all the method steps achieved by the method embodiments described above and can achieve the same technical effects. Therefore, no additional description of the same parts and beneficial effects in this embodiment as those in the method embodiments will be repeated.

Referring to figure 13, figure 13 is a structural diagram of a network-side device provided in an embodiment of the present disclosure. as shown in figure 13, the network-side device 1300 includes:
a sending unit 1301, configured to send configuration information of a positioning reference signal (PRS) to a first terminal, where the PRS includes a first PRS, and the configuration information includes at least one of a first time-domain configuration and a first bandwidth configuration of the first PRS. the first time-domain configuration includes at least one of the following: a maximum number of symbols occupied by one cycle of the periodic first PRS being 14, the non-periodic first PRS occupying N consecutive time slots, where N is an integer greater than or equal to 1. the first bandwidth configuration indicates that the physical resource block (PRB) resources occupied by the first PRS include fewer than 24 PRBs;
an execution unit 1302, configured to execute positioning operations based on the configuration information.

Optionally, the configuration information further includes at least one of the following:
the first subcarrier spacing number of the first PRS, where the first subcarrier spacing number includes subcarrier spacings greater than 12, and the number represents the count of subcarriers between two adjacent subcarriers in the frequency domain occupied by the first PRS on the same symbol;
the first periodicity information of the first PRS, where the first periodicity information includes at least one of the following: periodic, semi-persistent, or non-periodic;
the first pattern information of the first PRS, where the first pattern information includes at least one of the following:
   non-staggered pattern, staggered pattern, partially staggered pattern.

Optionally, the PRS further includes a second PRS, and the configuration information further includes at least one of the second time-domain configuration and the second bandwidth configuration of the second PRS, where the second time-domain configuration includes at least one of the following: a maximum number of symbols occupied by one cycle of the periodic second PRS being 14, the non-periodic second PRS occupying N consecutive time slots. The second bandwidth configuration indicates that the PRB resources occupied by the second PRS include fewer than 24 PRBs.

Optionally, the configuration information further includes at least one of the following:
the second subcarrier spacing number of the second PRS, where the second subcarrier spacing number includes subcarrier spacings greater than 12, and the number represents the count of subcarriers between two adjacent subcarriers in the frequency domain occupied by the second PRS on the same symbol;
the second periodicity information of the second PRS, where the second periodicity information includes at least one of the following: periodic, semi-persistent, or non-periodic;
the second pattern information of the second PRS, where the second pattern information includes at least one of the following:
   non-staggered pattern, staggered pattern, partially staggered pattern.

Optionally, the first PRS and the second PRS differ in at least one of the following:
the size of frequency-domain resources, periodicity, or the type of time-domain resources.

Optionally, the frequency-domain resource size of the first PRS is smaller than that of the second PRS; and/or
if the first PRS and the second PRS are both periodic signals, the periodicity of the first PRS is less than that of the second PRS; or, the first PRS is a periodic signal while the second PRS is a semi-persistent or non-periodic signal; or, the first PRS is a non-periodic signal while the second PRS is a semi-persistent or periodic signal.

Optionally, the network-side device performs positioning operations based on the configuration information, including at least one of the following:
measuring at least one of the first PRS and the second PRS transmitted by the first terminal to obtain first measurement information and transmitting the first measurement information to the LMF;
transmitting one of the first PRS and the second PRS to the first terminal, and measuring the other of the first PRS and the second PRS transmitted by the first terminal to obtain second measurement information and transmitting the second measurement information to the LMF;
transmitting at least one of the first PRS and the second PRS to the first terminal.

Optionally, the first measurement information is used to report at least one of the following:
first positioning measurement values, first positioning measurement quality;
or, the second measurement information is used to report at least one of the following:
   second positioning measurement values, second positioning measurement quality.

Optionally, the first measurement information reports the first positioning measurement values and quality in either non-differential or differential form;
the second measurement information reports the second positioning measurement values and quality in either non-differential or differential form.

Optionally, the first positioning measurement values include at least one of the following:
phase measurements obtained based on the first PRS, delay measurements obtained based on the second PRS, angle measurements obtained based on the second PRS, power measurements obtained based on the second PRS;
or, the first positioning measurement values include at least one of the following:
   phase measurements obtained based on both the first PRS and the second PRS, delay measurements obtained based on both the first PRS and the second PRS, angle measurements obtained based on both the first PRS and the second PRS, power measurements obtained based on both the first PRS and the second PRS;
   or, the first positioning measurement values include at least one of the following:
      third measurement values obtained by smoothing second measurement values based on first measurement values, where the first measurement values are measurements obtained based on the first PRS, and the second measurement values include at least one of the following: delay measurements obtained based on the second PRS, angle measurements obtained based on the second PRS, power measurements obtained based on the second PRS;
      or, the second positioning measurement values include at least one of the following:
         phase measurements obtained based on the first PRS, delay measurements obtained based on the first PRS, angle measurements obtained based on the first PRS, power measurements obtained based on the first PRS;
         or, the second positioning measurement values include at least one of the following:
            phase measurement obtained based on the second PRS, delay measurement obtained based on the second PRS, angle measurement obtained based on the second PRS, or power measurement obtained based on the second PRS.

Optionally, the first measurement information is further used to report at least one of the following:
the calculation method of the first positioning measurement, the configuration identification of the first PRS, or the configuration identification of the second PRS.
the second measurement information is used to report at least one of the following:
   the calculation method of the second positioning measurement, the configuration identification of the first PRS, or the configuration identification of the second PRS.

Optionally, the first PRS includes one of the following:
first uplink PRS, first downlink PRS, or first sidelink PRS.
the second PRS includes one of the following:
   second uplink PRS, second downlink PRS, or second sidelink PRS.

It should be noted that the above-described network-side device provided by the present disclosure can implement all the method steps achieved by the method embodiments described above and can achieve the same technical effects. therefore, no additional description of the same parts and beneficial effects in this embodiment as those in the method embodiments will be repeated.

Referring to figure 14, figure 14 is a structural diagram of another terminal provided in the present disclosure, which is the second terminal. as shown in figure 14, the terminal 1400 includes:
a sending unit 1401, configured to send the PRS to the first terminal based on the configuration information of the positioning reference signal PRS. the PRS includes a first PRS, and the configuration information includes at least one of the first time-domain configuration and the first bandwidth configuration of the first PRS. the first time-domain configuration includes at least one of the following: the maximum number of symbols occupied by one cycle of the periodic first PRS being 14, the non-periodic first PRS occupying N consecutive time slots, where N is an integer greater than or equal to 1. the first bandwidth configuration indicates that the PRB resources occupied by the first PRS include fewer than 24 PRBs;
a receiving unit 1402, configured to receive the measurement information sent by the first terminal.

Optionally, the configuration information further includes at least one of the following:
the first subcarrier spacing number of the first PRS, where the first subcarrier spacing number includes subcarrier spacings greater than 12, and the number represents the count of subcarriers between two adjacent subcarriers in the frequency domain occupied by the first PRS on the same symbol;
the first periodicity information of the first PRS, where the first periodicity information includes at least one of the following: periodic, semi-persistent, or non-periodic;
the first pattern information of the first PRS, where the first pattern information includes at least one of the following:
   non-staggered pattern, staggered pattern, partially staggered pattern.

Optionally, the PRS further includes a second PRS, and the configuration information further includes at least one of the second time-domain configuration and the second bandwidth configuration of the second PRS. the second time-domain configuration includes at least one of the following: the maximum number of symbols occupied by one cycle of the periodic second PRS being 14, the non-periodic second PRS occupying N consecutive time slots. the second bandwidth configuration indicates that the PRB resources occupied by the second PRS include fewer than 24 PRBs.

Optionally, the configuration information further includes at least one of the following:
the second subcarrier spacing number of the second PRS, where the second subcarrier spacing number includes subcarrier spacings greater than 12, and the number represents the count of subcarriers between two adjacent subcarriers in the frequency domain occupied by the second PRS on the same symbol;
the second periodicity information of the second PRS, where the second periodicity information includes at least one of the following: periodic, semi-persistent, or non-periodic;
the second pattern information of the second PRS, where the second pattern information includes at least one of the following:
   non-staggered pattern, staggered pattern, partially staggered pattern.

Optionally, the first PRS and the second PRS differ in at least one of the following:
the size of frequency-domain resources, periodicity, or the type of time-domain resources.

Optionally, the frequency-domain resource size of the first PRS is smaller than that of the second PRS; and/or
if the first PRS and the second PRS are both periodic signals, the periodicity of the first PRS is less than that of the second PRS; or, the first PRS is a periodic signal while the second PRS is a semi-persistent or non-periodic signal; or, the first PRS is a non-periodic signal while the second PRS is a semi-persistent or periodic signal.

Optionally, the second terminal sends the PRS to the first terminal based on the configuration information of the PRS, including:
the second terminal sends at least one of the first PRS and the second PRS to the first terminal;
the measurement information is obtained by the first terminal measuring at least one of the first PRS and the second PRS.

Optionally, the measurement information is used to report at least one of the following:
positioning measurement values, positioning measurement quality.

Optionally, the measurement information reports the first positioning measurement values and quality in either non-differential or differential form.

Optionally, the positioning measurement values include at least one of the following:
phase measurement obtained based on the first PRS, delay measurement obtained based on the second PRS, angle measurement obtained based on the second PRS, or power measurement obtained based on the second PRS;
or, the positioning measurement values include at least one of the following:
   phase measurement obtained based on both the first PRS and the second PRS, delay measurement obtained based on both the first PRS and the second PRS, angle measurement obtained based on both the first PRS and the second PRS, or power measurement obtained based on both the first PRS and the second PRS;
   or, the positioning measurement values include at least one of the following:
      third measurement values obtained by smoothing second measurement values based on first measurement values, where the first measurement values are obtained based on the first PRS, and the second measurement values include at least one of the following: delay measurement obtained based on the second PRS, angle measurement obtained based on the second PRS, or power measurement obtained based on the second PRS.

Optionally, the measurement information is further used to report at least one of the following:
the calculation method of the positioning measurement values, the configuration identification of the first PRS, or the configuration identification of the second PRS.

Optionally, the terminal further includes:
a resolution unit, configured to calculate the position of the first terminal based on the measurement information.

It should be noted that the second terminal provided by the present disclosure can implement all the method steps achieved by the method embodiments described above and can achieve the same technical effects. Therefore, no additional description of the same parts and beneficial effects in this embodiment as those in the method embodiments will be repeated.

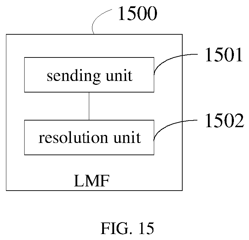

Referring to figure 15, figure 15 is a structural diagram of another LMF provided by the present disclosure. as shown in figure 15, the LMF 1500 includes:
a sending unit 1501, configured to send the configuration information of the positioning reference signal PRS to the first terminal. The PRS includes a first PRS, and the configuration information includes at least one of the first time-domain configuration and the first bandwidth configuration of the first PRS. The first time-domain configuration includes at least one of the following: the maximum number of symbols occupied by one cycle of the periodic first PRS being 14, the non-periodic first PRS occupying N consecutive time slots, where N is an integer greater than or equal to 1. the first bandwidth configuration indicates that the PRB resources occupied by the first PRS include fewer than 24 PRBs;
a resolution unit 1502, configured to obtain the measurement information and calculate the position of the first terminal based on the measurement information.

Optionally, the configuration information further includes at least one of the following:
the first subcarrier spacing number of the first PRS, where the first subcarrier spacing number includes subcarrier spacings greater than 12, and the number represents the count of subcarriers between two adjacent subcarriers in the frequency domain occupied by the first PRS on the same symbol;
the first periodicity information of the first PRS, where the first periodicity information includes at least one of the following: periodic, semi-persistent, or non-periodic;
the first pattern information of the first PRS, where the first pattern information includes at least one of the following:
   non-staggered pattern, staggered pattern, partially staggered pattern.

Optionally, the PRS further includes a second PRS, and the configuration information further includes at least one of the second time-domain configuration and the second bandwidth configuration of the second PRS. The second time-domain configuration includes at least one of the following: the maximum number of symbols occupied by one cycle of the periodic second PRS being 14, the non-periodic second PRS occupying N consecutive time slots. The second bandwidth configuration indicates that the PRB resources occupied by the second PRS include fewer than 24 PRBs.

Optionally, the configuration information further includes at least one of the following:
the second subcarrier spacing number of the second PRS, where the second subcarrier spacing number includes subcarrier spacings greater than 12, and the number represents the count of subcarriers between two adjacent subcarriers in the frequency domain occupied by the second PRS on the same symbol;
the second periodicity information of the second PRS, where the second periodicity information includes at least one of the following: periodic, semi-persistent, or non-periodic;
the second pattern information of the second PRS, where the second pattern information includes at least one of the following:
   non-staggered pattern, staggered pattern, or partially staggered pattern.

Optionally, the first PRS and the second PRS differ in at least one of the following:
the size of frequency-domain resources, periodicity, or the type of time-domain resources.

Optionally, the frequency-domain resource size of the first PRS is smaller than that of the second PRS; and/or
if the first PRS and the second PRS are both periodic signals, the periodicity of the first PRS is less than that of the second PRS; or, the first PRS is a periodic signal while the second PRS is a semi-persistent or non-periodic signal; or, the first PRS is a non-periodic signal while the second PRS is a semi-persistent or periodic signal.

Optionally, the measurement information is used to report at least one of the following:
positioning measurement values or positioning measurement quality.

Optionally, the measurement information reports the positioning measurement values and quality in either non-differential or differential form.

Optionally, the positioning measurement values include at least one of the following:
phase measurement obtained based on the first PRS, delay measurement obtained based on the second PRS, angle measurement obtained based on the second PRS, or power measurement obtained based on the second PRS;
or, the positioning measurement values include at least one of the following:
   phase measurement obtained based on both the first PRS and the second PRS, delay measurement obtained based on both the first PRS and the second PRS, angle measurement obtained based on both the first PRS and the second PRS, or power measurement obtained based on both the first PRS and the second PRS;
   or, the positioning measurement values include at least one of the following:
      third measurement values obtained by smoothing second measurement values based on first measurement values, where the first measurement values are obtained based on the first PRS, and the second measurement values include at least one of the following: delay measurement obtained based on the second PRS, angle measurement obtained based on the second PRS, or power measurement obtained based on the second PRS.

Optionally, the measurement information is further used to report at least one of the following:
the calculation method of the positioning measurement values, the configuration identification of the first PRS, or the configuration identification of the second PRS.

It should be noted that the LMF provided by the present disclosure can implement all the method steps achieved by the method embodiments described above and can achieve the same technical effects. Therefore, no additional description of the same parts and beneficial effects in this embodiment as those in the method embodiments will be repeated.

It should be noted that the division of units in this disclosure is illustrative and merely represents one logical function division. In actual implementation, other division methods may be adopted. Additionally, the functional units in each embodiment of this disclosure may be integrated into a processing unit, may physically exist as separate units, or may be integrated into one or more units. The integrated units can be implemented in the form of hardware or as software functional units.

If the integrated units are implemented as software functional units and sold or used as independent products, they can be stored in a processor-readable storage medium. Based on this understanding, the technical solutions of this disclosure, essentially or partially contributing to the prior art, or in their entirety, may be embodied in the form of software products. These computer software products are stored in a storage medium and include several instructions that enable a computer device (such as a personal computer, server, or network device) or a processor to execute all or part of the steps of the methods described in the embodiments of this disclosure. The aforementioned storage mediums include USB drives, mobile hard drives, read-only memory (ROM), random-access memory (RAM), magnetic disks, optical disks, and other mediums capable of storing program codes.

This disclosure also provides a processor-readable storage medium. The processor-readable storage medium stores a computer program, which is used to enable the processor to execute a positioning method on the first terminal side, the network-side equipment side, the second terminal side, or the LMF side.

The processor-readable storage medium can be any available medium or data storage device accessible to the processor, including but not limited to magnetic storage devices (such as floppy disks, hard disks, magnetic tapes, magneto-optical disks), optical storage devices (such as compact discs (CDs), digital versatile discs (DVDs), Blu-ray discs (BDs), high-definition versatile discs (HVDs)), and semiconductor storage devices (such as read-only memory (ROM), erasable programmable read-only memory (EPROM), electrically erasable programmable read-only memory (EEPROM), non-volatile memory (NAND FLASH), solid-state drives (SSDs)).

Those skilled in the art should understand that the embodiments of this disclosure can be provided as methods, systems, or computer program products. Therefore, this disclosure can be implemented as fully hardware embodiments, fully software embodiments, or embodiments combining software and hardware. Moreover, this disclosure can be implemented as a computer program product that is embodied on one or more computer-usable storage mediums containing computer-usable program code (including but not limited to magnetic storage and optical storage).

This disclosure is described with reference to flowcharts and/or block diagrams of methods, devices (systems), and computer program products according to embodiments of this disclosure. It should be understood that each flow and/or block in the flowcharts and/or block diagrams and combinations of flows and/or blocks in the flowcharts and/or block diagrams can be implemented by computer-executable instructions. These computer-executable instructions can be provided to a general-purpose computer, a special-purpose computer, an embedded processor, or another programmable data processing device to generate a machine such that the instructions executed by the computer or other programmable data processing device's processor create means for implementing the specified functions in one or more flows or blocks in the flowcharts and/or block diagrams.

These processor-executable instructions can also be stored in a processor-readable memory that directs a computer or other programmable data processing device to operate in a specific manner. The instructions stored in the processor-readable memory thus produce an article of manufacture containing instruction means that implement the specified functions in one or more flows or blocks in the flowcharts and/or block diagrams.

These processor-executable instructions can also be loaded onto a computer or other programmable data processing device to perform a series of operational steps to produce a computer-implemented process. These instructions, executed on the computer or other programmable device, provide steps for implementing the functions specified in one or more flows or blocks in the flowcharts and/or block diagrams.

It is evident that those skilled in the art can make various modifications and variations to this disclosure without departing from its spirit and scope. Thus, if these modifications and variations of this disclosure fall within the scope of the claims and their equivalent technical solutions, this disclosure intends to include these modifications and variations.

## Claims

1. A positioning method, comprising:
obtaining, by a first terminal, configuration information of a positioning reference signal (PRS), wherein the PRS comprises a first PRS, the configuration information comprises at least one of a first time-domain configuration and a first bandwidth configuration of the first PRS, wherein the first time-domain configuration comprises at least one of the following:
for a periodic first PRS, a maximum of 14 symbols are occupied in one period, for a non-periodic first PRS, consecutive n slots are occupied, where n is an integer greater than or equal to 1;
and wherein the first bandwidth configuration indicates that the number of physical resource block (PRB) resources occupied by the first PRS is less than 24;
and performing, by the first terminal, a positioning operation based on the configuration information.

2. The method according to claim 1, wherein the configuration information further comprises at least one of the following:
a first subcarrier spacing number of the first PRS, wherein the first subcarrier spacing number comprises a subcarrier spacing number greater than 12, the subcarrier spacing number is the number of subcarriers between two adjacent subcarriers in the frequency domain occupied by the first PRS within the same symbol;
first period information of the first PRS, wherein the first period information comprises at least one of the following: periodic, semi-persistent, and aperiodic; and
first pattern information of the first PRS, wherein the first pattern information comprises at least one of the following: non-staggered pattern, staggered pattern, and partially staggered pattern.

3. The method according to claim 1, wherein the PRS further comprises a second PRS, and the configuration information further comprises at least one of a second time-domain configuration and a second bandwidth configuration of the second PRS, wherein the second time-domain configuration comprises at least one of the following: for a periodic second PRS, a maximum of 14 symbols are occupied in one period, for a non-periodic second PRS, consecutive n slots are occupied, where n is an integer greater than or equal to 1; and wherein the second bandwidth configuration indicates that the number of PRB resources occupied by the second PRS is less than 24.

4. The method according to claim 3, wherein the configuration information further comprises at least one of the following:
a second subcarrier spacing number of the second PRS, wherein the second subcarrier spacing number comprises a subcarrier spacing number greater than 12, the subcarrier spacing number is the number of subcarriers between two adjacent subcarriers in the frequency domain occupied by the second PRS within the same symbol;
second period information of the second PRS, wherein the second period information comprises at least one of the following: periodic, semi-persistent, and aperiodic; and
second pattern information of the second PRS, wherein the second pattern information comprises at least one of the following: non-staggered pattern, staggered pattern, and partially staggered pattern.

5. The method according to claim 3, wherein the first PRS is differed from the second PRS by at least one of the following:
resource size of occupied frequency-domain resources, period, and resource type of occupied time-domain resources.

6. The method according to claim 5, wherein the resource size of frequency-domain resources occupied by the first PRS is smaller than that of the second PRS; and/or
if the first PRS and the second PRS are periodic signals, the period of the first PRS is shorter than the period of the second PRS; or the first PRS is a periodic signal, and the second PRS is a semi-persistent signal or aperiodic signal; or the first PRS is an aperiodic signal, and the second PRS is a semi-persistent signal or periodic signal.

7. The method according to any one of claims 3 to 6, wherein performing the positioning operation based on the configuration information comprises at least one of the following:
measuring, by the first terminal, at least one of the first PRS and the second PRS to obtain first measurement information, and transmitting the first measurement information to a location management function (LMF) or a second terminal, wherein at least one of the first PRS and the second PRS is transmitted by a network-side device or the second terminal;
transmitting, by the first terminal, one of the first PRS and the second PRS to the network-side device, and measuring the other of the first PRS and the second PRS transmitted by the network-side device to obtain second measurement information, and transmitting the second measurement information to the LMF or the second terminal; and
transmitting, by the first terminal, at least one of the first PRS and the second PRS to the network-side device.

8. The method according to claim 7, wherein the first measurement information is used to report at least one of the following:
first positioning measurement quantity, and first positioning measurement quality;
or the second measurement information is used to report at least one of the following:
second positioning measurement quantity, and second positioning measurement quality.

9. The method according to claim 8, wherein the first positioning measurement quantity comprises at least one of the following:
a phase measurement quantity measured based on the first PRS; a time delay measurement quantity measured based on the second PRS; an angle measurement quantity measured based on the second PRS; and a power measurement quantity measured based on the second PRS;
or the first positioning measurement quantity comprises at least one of the following:
a phase measurement quantity measured based on the first PRS and the second PRS; a time delay measurement quantity measured based on the first PRS and the second PRS; an angle measurement quantity measured based on the first PRS and the second PRS; and a power measurement quantity measured based on the first PRS and the second PRS;
or the first positioning measurement quantity comprises at least one of the following:
a third measurement quantity obtained by smoothing a second measurement quantity using a first measurement quantity, wherein the first measurement quantity is a measurement quantity measured based on the first PRS, and the second measurement quantity comprises at least one of the following: a time delay measurement quantity measured based on the second PRS; an angle measurement quantity measured based on the second PRS; and a power measurement quantity measured based on the second PRS;
or the second positioning measurement quantity comprises at least one of the following:
a phase measurement quantity measured based on the first PRS; a time delay measurement quantity measured based on the first PRS; an angle measurement quantity measured based on the first PRS; and a power measurement quantity measured based on the first PRS;
or the second positioning measurement quantity comprises at least one of the following:
a phase measurement quantity measured based on the second PRS; a time delay measurement quantity measured based on the second PRS; an angle measurement quantity measured based on the second PRS; and a power measurement quantity measured based on the second PRS.

10. A positioning method, comprising:
sending, by a network-side device, configuration information of a positioning reference signal (PRS) to a first terminal, wherein the PRS comprises a first PRS, the configuration information comprises at least one of a first time-domain configuration and a first bandwidth configuration of the first PRS, wherein the first time-domain configuration comprises at least one of the following: for a periodic first PRS, a maximum of 14 symbols are occupied in one period; for a non-periodic first PRS, consecutive n slots are occupied, where n is an integer greater than or equal to 1; and wherein the first bandwidth configuration indicates that the number of physical resource block (PRB) resources occupied by the first PRS is less than 24;
and performing, by the network-side device, a positioning operation based on the configuration information.

11. The method according to claim 10, wherein the configuration information further comprises at least one of the following:
a first subcarrier spacing number of the first PRS, wherein the first subcarrier spacing number comprises a subcarrier spacing number greater than 12, the subcarrier spacing number is the number of subcarriers between two adjacent subcarriers in the frequency domain occupied by the first PRS within the same symbol;
first period information of the first PRS, wherein the first period information comprises at least one of the following: periodic, semi-persistent, and aperiodic;
first pattern information of the first PRS, wherein the first pattern information comprises at least one of the following: non-staggered pattern, staggered pattern, and partially staggered pattern.

12. The method according to claim 10, wherein the PRS further comprises a second PRS, and the configuration information further comprises at least one of a second time-domain configuration and a second bandwidth configuration of the second PRS, wherein the second time-domain configuration comprises at least one of the following: for a periodic second PRS, a maximum of 14 symbols are occupied in one period; for a non-periodic second PRS, consecutive n slots are occupied, where n is an integer greater than or equal to 1; and wherein the second bandwidth configuration indicates that the number of physical resource block (PRB) resources occupied by the second PRS is less than 24.

13. The method according to claim 12, wherein the configuration information further comprises at least one of the following:
a second subcarrier spacing number of the second PRS, wherein the second subcarrier spacing number comprises a subcarrier spacing number greater than 12, the subcarrier spacing number is the number of subcarriers between two adjacent subcarriers in the frequency domain occupied by the second PRS within the same symbol;
second period information of the second PRS, wherein the second period information comprises at least one of the following: periodic, semi-persistent, aperiodic; and
second pattern information of the second PRS, wherein the second pattern information comprises at least one of the following: non-staggered pattern, staggered pattern, and partially staggered pattern.

14. The method according to claim 12, wherein the first PRS is differed from the second PRS by at least one of the following: resource size of occupied frequency-domain resources, period, and resource type of occupied time-domain resources.

15. The method according to claim 11, wherein the resource size of frequency-domain resources occupied by the first PRS is smaller than that of the second PRS; and/or
if the first PRS and the second PRS are periodic signals, the period of the first PRS is shorter than the period of the second PRS; or the first PRS is a periodic signal, and the second PRS is a semi-persistent signal or aperiodic signal; or the first PRS is an aperiodic signal, and the second PRS is a semi-persistent signal or periodic signal.

16. The method according to any one of claims 12 to 15, wherein performing the positioning operation based on the configuration information by the network-side device comprises at least one of the following:
measuring, by the network-side device, at least one of the first PRS and the second PRS transmitted by the first terminal to obtain first measurement information, and transmitting the first measurement information to a location management function (LMF);
transmitting, by the network-side device, one of the first PRS and the second PRS to the first terminal, and measuring the other of the first PRS and the second PRS transmitted by the first terminal to obtain second measurement information, and transmitting the second measurement information to the LMF; and
transmitting, by the network-side device, at least one of the first PRS and the second PRS to the first terminal.

17. The method according to claim 16, wherein the first measurement information is used to report at least one of the following:
first positioning measurement quantity, and first positioning measurement quality;
or the second measurement information is used to report at least one of the following:
second positioning measurement quantity, and second positioning measurement quality.

18. The method according to claim 17, wherein the first positioning measurement quantity comprises at least one of the following:
a phase measurement quantity measured based on the first PRS; a time delay measurement quantity measured based on the second PRS; an angle measurement quantity measured based on the second PRS; and a power measurement quantity measured based on the second PRS;
or the first positioning measurement quantity comprises at least one of the following:
a phase measurement quantity measured based on the first PRS and the second PRS; a time delay measurement quantity measured based on the first PRS and the second PRS; an angle measurement quantity measured based on the first PRS and the second PRS; and a power measurement quantity measured based on the first PRS and the second PRS;
or the first positioning measurement quantity comprises at least one of the following:
a third measurement quantity obtained by smoothing a second measurement quantity using a first measurement quantity, wherein the first measurement quantity is a measurement quantity measured based on the first PRS, and the second measurement quantity comprises at least one of the following: a time delay measurement quantity measured based on the second PRS; an angle measurement quantity measured based on the second PRS; and a power measurement quantity measured based on the second PRS;
or the second positioning measurement quantity comprises at least one of the following:
a phase measurement quantity measured based on the first PRS; a time delay measurement quantity measured based on the first PRS; an angle measurement quantity measured based on the first PRS; and a power measurement quantity measured based on the first PRS;
or the second positioning measurement quantity comprises at least one of the following:
a phase measurement quantity measured based on the second PRS; a time delay measurement quantity measured based on the second PRS; an angle measurement quantity measured based on the second PRS; and a power measurement quantity measured based on the second PRS.

19. A positioning method, comprising:
sending, by a second terminal, a positioning reference signal (PRS) to a first terminal based on configuration information of the PRS, wherein the PRS comprises a first PRS, the configuration information comprises at least one of a first time-domain configuration and a first bandwidth configuration of the first PRS, wherein the first time-domain configuration comprises at least one of the following: for a periodic first PRS, a maximum of 14 symbols are occupied in one period; for a non-periodic first PRS, consecutive n slots are occupied, where n is an integer greater than or equal to 1; and wherein the first bandwidth configuration indicates that the number of physical resource block (PRB) resources occupied by the first PRS is less than 24;
receiving, by the second terminal, measurement information transmitted by the first terminal.

20. The method according to claim 19, wherein the configuration information further comprises at least one of the following:
a first subcarrier spacing number of the first PRS, wherein the first subcarrier spacing number comprises a subcarrier spacing number greater than 12, the subcarrier spacing number is the number of subcarriers between two adjacent subcarriers in the frequency domain occupied by the first PRS within the same symbol;
first period information of the first PRS, wherein the first period information comprises at least one of the following: periodic, semi-persistent, aperiodic; and
first pattern information of the first PRS, wherein the first pattern information comprises at least one of the following: non-staggered pattern, staggered pattern, and partially staggered pattern.

21. The method according to claim 19, wherein the PRS further comprises a second PRS, and the configuration information further comprises at least one of a second time-domain configuration and a second bandwidth configuration of the second PRS, wherein the second time-domain configuration comprises at least one of the following: for a periodic second PRS, a maximum of 14 symbols are occupied in one period; for a non-periodic second PRS, consecutive n slots are occupied, where n is an integer greater than or equal to 1; and wherein the second bandwidth configuration indicates that the number of physical resource block (PRB) resources occupied by the second PRS is less than 24.

22. The method according to claim 21, wherein the configuration information further comprises at least one of the following:
a second subcarrier spacing number of the second PRS, wherein the second subcarrier spacing number comprises a subcarrier spacing number greater than 12, the subcarrier spacing number is the number of subcarriers between two adjacent subcarriers in the frequency domain occupied by the second PRS within the same symbol;
second period information of the second PRS, wherein the second period information comprises at least one of the following: periodic, semi-persistent, and aperiodic; and
second pattern information of the second PRS, wherein the second pattern information comprises at least one of the following: non-cross-staggered pattern, staggered pattern, and partially staggered pattern.

23. The method according to claim 21, wherein at least one of the following differences exists between the first PRS and the second PRS: resource size of occupied frequency-domain resources, period, and resource type of occupied time-domain resources.

24. The method according to claim 23, wherein the resource size of frequency-domain resources occupied by the first PRS is smaller than that of the second PRS; and/or
if the first PRS and the second PRS are periodic signals, the period of the first PRS is shorter than the period of the second PRS; or the first PRS is a periodic signal, and the second PRS is a semi-persistent signal or aperiodic signal; or the first PRS is an aperiodic signal, and the second PRS is a semi-persistent signal or periodic signal.

25. The method according to any one of claims 21 to 24, wherein sending the PRS from the second terminal to the first terminal based on the configuration information of the PRS comprises at least one of the following:
sending, by the second terminal, at least one of the first PRS and the second PRS to the first terminal; and
wherein the measurement information is obtained by the first terminal measuring at least one of the first PRS and the second PRS.

26. The method according to claim 25, wherein the measurement information is used to report at least one of the following:
positioning measurement quantity, and positioning measurement quality.

27. The method according to claim 25, wherein the positioning measurement quantity comprises at least one of the following:
a phase measurement quantity measured based on the first PRS; a time delay measurement quantity measured based on the second PRS; an angle measurement quantity measured based on the second PRS; and a power measurement quantity measured based on the second PRS;
or the positioning measurement quantity comprises at least one of the following:
a phase measurement quantity measured based on the first PRS and the second PRS; a time delay measurement quantity measured based on the first PRS and the second PRS; an angle measurement quantity measured based on the first PRS and the second PRS; and a power measurement quantity measured based on the first PRS and the second PRS;
or the positioning measurement quantity comprises at least one of the following:
a third measurement quantity obtained by smoothing a second measurement quantity using a first measurement quantity, wherein the first measurement quantity is a measurement quantity measured based on the first PRS, and the second measurement quantity comprises at least one of the following: a time delay measurement quantity measured based on the second PRS; an angle measurement quantity measured based on the second PRS; and a power measurement quantity measured based on the second PRS.

28. A positioning method, comprising:
sending, by a location management function (LMF), configuration information of positioning reference signal (PRS) to a first terminal, wherein the PRS comprises a first PRS, the configuration information comprises at least one of a first time-domain configuration and a first bandwidth configuration of the first PRS, wherein the first time-domain configuration comprises at least one of the following: for a periodic first PRS, a maximum of 14 symbols are occupied in one period; for a non-periodic first PRS, consecutive n slots are occupied, where n is an integer greater than or equal to 1; and wherein the first bandwidth configuration indicates that the number of physical resource block (PRB) resources occupied by the first PRS is less than 24;
obtaining, by the LMF, measurement information, and performing positioning calculation for the location of the first terminal based on the measurement information.

29. The method according to claim 28, wherein the configuration information further comprises at least one of the following:
a first subcarrier spacing number of the first PRS, wherein the first subcarrier spacing number comprises a subcarrier spacing number greater than 12, the subcarrier spacing number is the number of subcarriers between two adjacent subcarriers in the frequency domain occupied by the first PRS within the same symbol;
first period information of the first PRS, wherein the first period information comprises at least one of the following: periodic, semi-persistent, and aperiodic; and
first pattern information of the first PRS, wherein the first pattern information comprises at least one of the following: non-cross-staggered pattern, staggered pattern, and partially staggered pattern.

30. The method according to claim 28, wherein the PRS further comprises a second PRS, and the configuration information further comprises at least one of a second time-domain configuration and a second bandwidth configuration of the second PRS, wherein the second time-domain configuration comprises at least one of the following: for a periodic second PRS, a maximum of 14 symbols are occupied in one period; for a non-periodic second PRS, consecutive n slots are occupied, where n is an integer greater than or equal to 1; and wherein the second bandwidth configuration indicates that the number of physical resource block (PRB) resources occupied by the second PRS is less than 24.

31. The method according to claim 30, wherein the configuration information further comprises at least one of the following:
a second subcarrier spacing number of the second PRS, wherein the second subcarrier spacing number comprises a subcarrier spacing number greater than 12, the subcarrier spacing number is the number of subcarriers between two adjacent subcarriers in the frequency domain occupied by the second PRS within the same symbol;
second period information of the second PRS, wherein the second period information comprises at least one of the following: periodic, semi-persistent, and aperiodic;
second pattern information of the second PRS, wherein the second pattern information comprises at least one of the following: non-cross-staggered pattern, staggered pattern, and partially staggered pattern.

32. The method according to claim 30, wherein at least one of the following differences exists between the first PRS and the second PRS: resource size of occupied frequency-domain resources, period, and resource type of occupied time-domain resources.

33. The method according to claim 32, wherein the resource size of frequency-domain resources occupied by the first PRS is smaller than that of the second PRS; and/or
if the first PRS and the second PRS are periodic signals, the period of the first PRS is shorter than the period of the second PRS; or the first PRS is a periodic signal, and the second PRS is a semi-persistent signal or aperiodic signal; or the first PRS is an aperiodic signal, and the second PRS is a semi-persistent signal or periodic signal.

34. The method according to any one of claims 30 to 33, wherein the measurement information is used to report at least one of the following:
positioning measurement quantity, and positioning measurement quality.

35. The method according to claim 34, wherein the positioning measurement quantity comprises at least one of the following:
a phase measurement quantity measured based on the first PRS; a time delay measurement quantity measured based on the second PRS; an angle measurement quantity measured based on the second PRS; and a power measurement quantity measured based on the second PRS;
or the positioning measurement quantity comprises at least one of the following:
a phase measurement quantity measured based on the first PRS and the second PRS; a time delay measurement quantity measured based on the first PRS and the second PRS; an angle measurement quantity measured based on the first PRS and the second PRS; and a power measurement quantity measured based on the first PRS and the second PRS;
or the positioning measurement quantity comprises at least one of the following:
a third measurement quantity obtained by smoothing a second measurement quantity using a first measurement quantity, wherein the first measurement quantity is a measurement quantity measured based on the first PRS, and the second measurement quantity comprises at least one of the following: a time delay measurement quantity measured based on the second PRS; an angle measurement quantity measured based on the second PRS; and a power measurement quantity measured based on the second PRS.

36. A terminal, being a first terminal, comprising:
a memory, a transceiver, and a processor, wherein:
the memory is configured to store a computer program;
the transceiver is configured to transmit and receive data under the control of the processor;
the processor is configured to read the computer program stored in the memory and execute the following operations:
obtaining configuration information of a positioning reference signal (PRS), wherein the PRS comprises a first PRS, and the configuration information comprises at least one of a first time-domain configuration and a first bandwidth configuration of the first PRS, wherein the first time-domain configuration comprises at least one of the following: for a periodic first PRS, a maximum of 14 symbols are occupied in one period; for a non-periodic first PRS, consecutive n slots are occupied, where n is an integer greater than or equal to 1; and wherein the first bandwidth configuration indicates that the number of physical resource block (PRB) resources occupied by the first PRS is less than 24;
performing positioning operation based on the configuration information.

37. The terminal according to claim 36, wherein the configuration information further comprises at least one of the following:
a first subcarrier spacing number of the first PRS, wherein the first subcarrier spacing number comprises a subcarrier spacing number greater than 12, the subcarrier spacing number is the number of subcarriers between two adjacent subcarriers in the frequency domain occupied by the first PRS within the same symbol;
first period information of the first PRS, wherein the first period information comprises at least one of the following: periodic, semi-persistent, and aperiodic; and
first pattern information of the first PRS, wherein the first pattern information comprises at least one of the following: non-cross-staggered pattern, staggered pattern, and partially staggered pattern.

38. The terminal according to claim 36, wherein the PRS further comprises a second PRS, and the configuration information further comprises at least one of a second time-domain configuration and a second bandwidth configuration of the second PRS, wherein the second time-domain configuration comprises at least one of the following: for a periodic second PRS, a maximum of 14 symbols are occupied in one period; for a non-periodic second PRS, consecutive n slots are occupied, where n is an integer greater than or equal to 1; and wherein the second bandwidth configuration indicates that the number of physical resource block (PRB) resources occupied by the second PRS is less than 24.

39. The terminal according to claim 38, wherein the configuration information further comprises at least one of the following:
a second subcarrier spacing number of the second PRS, wherein the second subcarrier spacing number comprises a subcarrier spacing number greater than 12, the subcarrier spacing number is the number of subcarriers between two adjacent subcarriers in the frequency domain occupied by the second PRS within the same symbol;
second period information of the second PRS, wherein the second period information comprises at least one of the following: periodic, semi-persistent, and aperiodic; and
second pattern information of the second PRS, wherein the second pattern information comprises at least one of the following: non-staggered pattern, staggered pattern, and partially staggered pattern.

40. The terminal according to claim 38, wherein at least one of the following differences exists between the first PRS and the second PRS: resource size of occupied frequency-domain resources, period, and resource type of occupied time-domain resources.

41. The terminal according to claim 40, wherein the resource size of frequency-domain resources occupied by the first PRS is smaller than that of the second PRS; and/or
if the first PRS and the second PRS are periodic signals, the period of the first PRS is shorter than the period of the second PRS; or the first PRS is a periodic signal, and the second PRS is a semi-persistent signal or aperiodic signal; or the first PRS is an aperiodic signal, and the second PRS is a semi-persistent signal or periodic signal.

42. The terminal according to any one of claims 38 to 41, wherein performing the positioning operation based on the configuration information comprises at least one of the following:
measuring at least one of the first PRS and the second PRS to obtain first measurement information and transmitting the first measurement information to a location management function (LMF) or a second terminal, wherein at least one of the first PRS and the second PRS is transmitted by a network-side device or the second terminal;
transmitting one of the first PRS and the second PRS to the network-side device, measuring the other of the first PRS and the second PRS transmitted by the network-side device to obtain second measurement information, and transmitting the second measurement information to the LMF or the second terminal; and
transmitting at least one of the first PRS and the second PRS to the network-side device.

43. The terminal according to claim 42, wherein the first measurement information is used to report at least one of the following:
first positioning measurement quantity, first positioning measurement quality; or the second measurement information is used to report at least one of the following: second positioning measurement quantity, and second positioning measurement quality.

44. The terminal according to claim 43, wherein the first positioning measurement quantity comprises at least one of the following:
a phase measurement quantity measured based on the first PRS; a time delay measurement quantity measured based on the second PRS; an angle measurement quantity measured based on the second PRS; a power measurement quantity measured based on the second PRS;
or the first positioning measurement quantity comprises at least one of the following:
a phase measurement quantity measured based on the first PRS and the second PRS; a time delay measurement quantity measured based on the first PRS and the second PRS; an angle measurement quantity measured based on the first PRS and the second PRS; and a power measurement quantity measured based on the first PRS and the second PRS;
or the first positioning measurement quantity comprises at least one of the following:
a third measurement quantity obtained by smoothing a second measurement quantity using a first measurement quantity, wherein the first measurement quantity is a measurement quantity measured based on the first PRS, and the second measurement quantity comprises at least one of the following: a time delay measurement quantity measured based on the second PRS; an angle measurement quantity measured based on the second PRS; and a power measurement quantity measured based on the second PRS;
or the second positioning measurement quantity comprises at least one of the following:
a phase measurement quantity measured based on the first PRS; a time delay measurement quantity measured based on the first PRS; an angle measurement quantity measured based on the first PRS; and a power measurement quantity measured based on the first PRS;
or the second positioning measurement quantity comprises at least one of the following:
a phase measurement quantity measured based on the second PRS; a time delay measurement quantity measured based on the second PRS; an angle measurement quantity measured based on the second PRS; and a power measurement quantity measured based on the second PRS.

45. A network-side device comprising: a memory, a transceiver, and a processor, wherein:
the memory is configured to store a computer program;
the transceiver is configured to transmit and receive data under the control of the processor;
the processor is configured to read the computer program stored in the memory and execute the following operations:
sending configuration information of a positioning reference signal (PRS) to a first terminal, wherein the PRS comprises a first PRS, and the configuration information comprises at least one of a first time-domain configuration and a first bandwidth configuration of the first PRS, wherein the first time-domain configuration comprises at least one of the following: for a periodic first PRS, a maximum of 14 symbols are occupied in one period; for a non-periodic first PRS, consecutive n slots are occupied, where n is an integer greater than or equal to 1; and wherein the first bandwidth configuration indicates that the number of physical resource block (PRB) resources occupied by the first PRS is less than 24;
performing positioning operation based on the configuration information.

46. The network-side device according to claim 45, wherein the configuration information further comprises at least one of the following:
a first subcarrier spacing number of the first PRS, wherein the first subcarrier spacing number comprises a subcarrier spacing number greater than 12, the subcarrier spacing number is the number of subcarriers between two adjacent subcarriers in the frequency domain occupied by the first PRS within the same symbol;
first period information of the first PRS, wherein the first period information comprises at least one of the following: periodic, semi-persistent, and aperiodic; and
first pattern information of the first PRS, wherein the first pattern information comprises at least one of the following: non-cross-staggered pattern, staggered pattern, and partially staggered pattern.

47. The network-side device according to claim 45, wherein the PRS further comprises a second PRS, and the configuration information further comprises at least one of a second time-domain configuration and a second bandwidth configuration of the second PRS, wherein the second time-domain configuration comprises at least one of the following: for a periodic second PRS, a maximum of 14 symbols are occupied in one period; for a non-periodic second PRS, consecutive n slots are occupied, where n is an integer greater than or equal to 1; and wherein the second bandwidth configuration indicates that the number of physical resource block (PRB) resources occupied by the second PRS is less than 24.

48. The network-side device according to claim 47, wherein the configuration information further comprises at least one of the following:
a second subcarrier spacing number of the second PRS, wherein the second subcarrier spacing number comprises a subcarrier spacing number greater than 12, the subcarrier spacing number is the number of subcarriers between two adjacent subcarriers in the frequency domain occupied by the second PRS within the same symbol;
second period information of the second PRS, wherein the second period information comprises at least one of the following: periodic, semi-persistent, and aperiodic; and
second pattern information of the second PRS, wherein the second pattern information comprises at least one of the following: non-cross-staggered pattern, staggered pattern, and partially staggered pattern.

49. The network-side device according to claim 47, wherein at least one of the following differences exists between the first PRS and the second PRS: resource size of occupied frequency-domain resources, period, and resource type of occupied time-domain resources.

50. The network-side device according to claim 46, wherein the resource size of frequency-domain resources occupied by the first PRS is smaller than that of the second PRS; and/or
if the first PRS and the second PRS are periodic signals, the period of the first PRS is shorter than the period of the second PRS; or the first PRS is a periodic signal, and the second PRS is a semi-persistent signal or aperiodic signal; or the first PRS is an aperiodic signal, and the second PRS is a semi-persistent signal or periodic signal.

51. The network-side device according to any one of claims 47 to 50, wherein performing the positioning operation based on the configuration information comprises at least one of the following:
measuring at least one of the first PRS and the second PRS transmitted by the first terminal to obtain first measurement information and transmitting the first measurement information to a location management function (LMF);
transmitting one of the first PRS and the second PRS to the first terminal, measuring the other of the first PRS and the second PRS transmitted by the first terminal to obtain second measurement information, and transmitting the second measurement information to the LMF; and
transmitting at least one of the first PRS and the second PRS to the first terminal.

52. The network-side device according to claim 51, wherein the first measurement information is used to report at least one of the following:
first positioning measurement quantity, and first positioning measurement quality; or the second measurement information is used to report at least one of the following: second positioning measurement quantity, and second positioning measurement quality.

53. The network-side device according to claim 52, wherein the first positioning measurement quantity comprises at least one of the following:
a phase measurement quantity measured based on the first PRS;
a time delay measurement quantity measured based on the second PRS;
an angle measurement quantity measured based on the second PRS; and
a power measurement quantity measured based on the second PRS;
or the first positioning measurement quantity comprises at least one of the following:
a phase measurement quantity measured based on the first PRS and the second PRS;
a time delay measurement quantity measured based on the first PRS and the second PRS;
an angle measurement quantity measured based on the first PRS and the second PRS; and
a power measurement quantity measured based on the first PRS and the second PRS;
or the first positioning measurement quantity comprises at least one of the following:
a third measurement quantity obtained by smoothing a second measurement quantity using a first measurement quantity, wherein the first measurement quantity is a measurement quantity measured based on the first PRS, and the second measurement quantity comprises at least one of the following: a time delay measurement quantity measured based on the second PRS; an angle measurement quantity measured based on the second PRS; and a power measurement quantity measured based on the second PRS;
or the second positioning measurement quantity comprises at least one of the following:
a phase measurement quantity measured based on the first PRS;
a time delay measurement quantity measured based on the first PRS;
an angle measurement quantity measured based on the first PRS; and
a power measurement quantity measured based on the first PRS;
or the second positioning measurement quantity comprises at least one of the following:
a phase measurement quantity measured based on the second PRS;
a time delay measurement quantity measured based on the second PRS;
an angle measurement quantity measured based on the second PRS; and
a power measurement quantity measured based on the second PRS.

54. A terminal, being a second terminal, comprising:
a memory for storing a computer program;
a transceiver for transmitting and receiving data under the control of the processor;
a processor for reading the computer program stored in the memory and executing the following operations:
transmitting a PRS to a first terminal based on configuration information of the positioning reference signal (PRS), wherein the PRS comprises a first PRS, and the configuration information comprises at least one of a first time-domain configuration and a first bandwidth configuration of the first PRS, wherein the first time-domain configuration comprises at least one of the following: for a periodic first PRS, a maximum of 14 symbols are occupied in one period; for a non-periodic first PRS, consecutive n slots are occupied, where n is an integer greater than or equal to 1; and wherein the first bandwidth configuration indicates that the number of physical resource block (PRB) resources occupied by the first PRS is less than 24;
receiving measurement information transmitted by the first terminal.

55. The terminal according to claim 54, wherein the configuration information further comprises at least one of the following:
a first subcarrier spacing number of the first PRS, wherein the first subcarrier spacing number comprises a subcarrier spacing number greater than 12, the subcarrier spacing number is the number of subcarriers between two adjacent subcarriers in the frequency domain occupied by the first PRS within the same symbol;
first period information of the first PRS, wherein the first period information comprises at least one of the following: periodic, semi-persistent, and aperiodic; and
first pattern information of the first PRS, wherein the first pattern information comprises at least one of the following: non-cross-staggered pattern, staggered pattern, and partially staggered pattern.

56. The terminal according to claim 54, wherein the PRS further comprises a second PRS, and the configuration information further comprises at least one of a second time-domain configuration and a second bandwidth configuration of the second PRS, wherein the second time-domain configuration comprises at least one of the following: for a periodic second PRS, a maximum of 14 symbols are occupied in one period; for a non-periodic second PRS, consecutive n slots are occupied, where n is an integer greater than or equal to 1; and wherein the second bandwidth configuration indicates that the number of physical resource block (PRB) resources occupied by the second PRS is less than 24.

57. The terminal according to claim 56, wherein the configuration information further comprises at least one of the following:
a second subcarrier spacing number of the second PRS, wherein the second subcarrier spacing number comprises a subcarrier spacing number greater than 12, the subcarrier spacing number is the number of subcarriers between two adjacent subcarriers in the frequency domain occupied by the second PRS within the same symbol;
second period information of the second PRS, wherein the second period information comprises at least one of the following: periodic, semi-persistent, and aperiodic; and
second pattern information of the second PRS, wherein the second pattern information comprises at least one of the following: non-cross-staggered pattern, staggered pattern, and partially staggered pattern.

58. The terminal according to claim 56, wherein at least one of the following differences exists between the first PRS and the second PRS: resource size of occupied frequency-domain resources, period, and resource type of occupied time-domain resources.

59. The terminal according to claim 58, wherein the resource size of the frequency-domain resources occupied by the first PRS is smaller than that of the second PRS; and/or
if the first PRS and the second PRS are periodic signals, the period of the first PRS is shorter than the period of the second PRS; or the first PRS is a periodic signal, and the second PRS is a semi-persistent signal or aperiodic signal; or the first PRS is an aperiodic signal, and the second PRS is a semi-persistent signal or periodic signal.

60. The terminal according to any one of claims 56 to 59, wherein transmitting the PRS to the first terminal based on the configuration information of the PRS comprises at least one of the following: transmitting at least one of the first PRS and the second PRS to the first terminal; and the measurement information is measurement information obtained by the first terminal measuring at least one of the first PRS and the second PRS.

61. The terminal according to claim 60, wherein the measurement information is used to report at least one of the following: positioning measurement quantity, and positioning measurement quality.

62. The terminal according to claim 60, wherein the positioning measurement quantity comprises at least one of the following:
a phase measurement quantity measured based on the first PRS, a time delay measurement quantity measured based on the second PRS, an angle measurement quantity measured based on the second PRS, and a power measurement quantity measured based on the second PRS;
or the positioning measurement quantity comprises at least one of the following:
a phase measurement quantity measured based on the first PRS and the second PRS, a time delay measurement quantity measured based on the first PRS and the second PRS, an angle measurement quantity measured based on the first PRS and the second PRS, and a power measurement quantity measured based on the first PRS and the second PRS;
or the positioning measurement quantity comprises at least one of the following:
a third measurement quantity obtained by smoothing a second measurement quantity using a first measurement quantity, wherein the first measurement quantity is a measurement quantity measured based on the first PRS, and the second measurement quantity comprises at least one of the following: a time delay measurement quantity measured based on the second PRS, an angle measurement quantity measured based on the second PRS, and a power measurement quantity measured based on the second PRS.

63. A location management function (LMF), comprising:
a memory for storing a computer program;
a transceiver for transmitting and receiving data under the control of a processor;
a processor for reading the computer program stored in the memory and executing the following operations:
transmitting configuration information of the positioning reference signal (PRS) to a first terminal, wherein the PRS comprises a first PRS, and the configuration information comprises at least one of a first time-domain configuration and a first bandwidth configuration of the first PRS, wherein the first time-domain configuration comprises at least one of the following: for a periodic first PRS, a maximum of 14 symbols are occupied in one period; for a non-periodic first PRS, consecutive n slots are occupied, where n is an integer greater than or equal to 1; and wherein the first bandwidth configuration indicates that the number of physical resource block (PRB) resources occupied by the first PRS is less than 24;
obtaining measurement information and resolving the location of the first terminal based on the measurement information.

64. The LMF according to claim 63, wherein the configuration information further comprises at least one of the following:
a first subcarrier spacing number of the first PRS, wherein the first subcarrier spacing number comprises a subcarrier spacing number greater than 12, the subcarrier spacing number is the number of subcarriers between two adjacent subcarriers in the frequency domain occupied by the first PRS within the same symbol; and
first period information of the first PRS, wherein the first period information comprises at least one of the following: periodic, semi-persistent, and aperiodic; and
first pattern information of the first PRS, wherein the first pattern information comprises at least one of the following: non-cross-staggered pattern, staggered pattern, and partially staggered pattern.

65. The LMF according to claim 63, wherein the PRS further comprises a second PRS, and the configuration information further comprises at least one of a second time-domain configuration and a second bandwidth configuration of the second PRS, wherein the second time-domain configuration comprises at least one of the following: for a periodic second PRS, a maximum of 14 symbols are occupied in one period; for a non-periodic second PRS, consecutive n slots are occupied, where n is an integer greater than or equal to 1; and wherein the second bandwidth configuration indicates that the number of physical resource block (PRB) resources occupied by the second PRS is less than 24.

66. The LMF according to claim 65, wherein the configuration information further comprises at least one of the following:
a second subcarrier spacing number of the second PRS, wherein the second subcarrier spacing number comprises a subcarrier spacing number greater than 12, the subcarrier spacing number is the number of subcarriers between two adjacent subcarriers in the frequency domain occupied by the second PRS within the same symbol;
second period information of the second PRS, wherein the second period information comprises at least one of the following: periodic, semi-persistent, and aperiodic; and
second pattern information of the second PRS, wherein the second pattern information comprises at least one of the following: non-cross-staggered pattern, staggered pattern, and partially staggered pattern.

67. The LMF according to claim 65, wherein at least one of the following differences exists between the first PRS and the second PRS: resource size of occupied frequency-domain resources, period, and resource type of occupied time-domain resources.

68. The LMF according to claim 67, wherein the resource size of the frequency-domain resources occupied by the first PRS is smaller than that of the second PRS; and/or
if the first PRS and the second PRS are periodic signals, the period of the first PRS is shorter than the period of the second PRS; or the first PRS is a periodic signal, and the second PRS is a semi-persistent signal or aperiodic signal; or the first PRS is an aperiodic signal, and the second PRS is a semi-persistent signal or periodic signal.

69. The LMF according to any one of claims 65 to 68, wherein the measurement information is used to report at least one of the following: positioning measurement quantity, and positioning measurement quality.

70. The LMF according to claim 69, wherein the positioning measurement quantity comprises at least one of the following:
a phase measurement quantity measured based on the first PRS, a time delay measurement quantity measured based on the second PRS, an angle measurement quantity measured based on the second PRS, and a power measurement quantity measured based on the second PRS;
or the positioning measurement quantity comprises at least one of the following:
a phase measurement quantity measured based on the first PRS and the second PRS, a time delay measurement quantity measured based on the first PRS and the second PRS, an angle measurement quantity measured based on the first PRS and the second PRS, and a power measurement quantity measured based on the first PRS and the second PRS;
or the positioning measurement quantity comprises at least one of the following:
a third measurement quantity obtained by smoothing a second measurement quantity using a first measurement quantity, wherein the first measurement quantity is a measurement quantity measured based on the first PRS, and the second measurement quantity comprises at least one of the following: a time delay measurement quantity measured based on the second PRS, an angle measurement quantity measured based on the second PRS, and a power measurement quantity measured based on the second PRS.

71. A terminal, which is a first terminal, comprising:
an obtaining unit, configured to obtain configuration information of a positioning reference signal (PRS), wherein the PRS comprises a first PRS, and the configuration information comprises at least one of a first time-domain configuration and a first bandwidth configuration of the first PRS, wherein the first time-domain configuration comprises at least one of the following: for a periodic first PRS, a maximum of 14 symbols are occupied in one period; for a non-periodic first PRS, consecutive n slots are occupied, where n is an integer greater than or equal to 1; and wherein the first bandwidth configuration indicates that the number of physical resource block (PRB) resources occupied by the first PRS is less than 24;
an execution unit, configured to perform positioning operation based on the configuration information.

72. A network-side device, comprising:
a transmitting unit, configured to transmit configuration information of a positioning reference signal (PRS) to a first terminal, wherein the PRS comprises a first PRS, and the configuration information comprises at least one of a first time-domain configuration and a first bandwidth configuration of the first PRS, wherein the first time-domain configuration comprises at least one of the following: for a periodic first PRS, a maximum of 14 symbols are occupied in one period; for a non-periodic first PRS, consecutive n slots are occupied, where n is an integer greater than or equal to 1; and wherein the first bandwidth configuration indicates that the number of physical resource block (PRB) resources occupied by the first PRS is less than 24;
an execution unit, configured to perform positioning operation based on the configuration information.

73. A terminal, which is a second terminal, comprising:
a transmitting unit, configured to transmit a PRS to a first terminal based on the configuration information of the PRS, wherein the PRS comprises a first PRS, and the configuration information comprises at least one of a first time-domain configuration and a first bandwidth configuration of the first PRS, wherein the first time-domain configuration comprises at least one of the following: for a periodic first PRS, a maximum of 14 symbols are occupied in one period; for a non-periodic first PRS, consecutive n slots are occupied, where n is an integer greater than or equal to 1; and wherein the first bandwidth configuration indicates that the number of physical resource block (PRB) resources occupied by the first PRS is less than 24;
a receiving unit, configured to receive measurement information transmitted by the first terminal.

74. A location management function (LMF), comprising:
a transmitting unit, configured to transmit configuration information of a positioning reference signal (PRS) to a first terminal, wherein the PRS comprises a first PRS, and the configuration information comprises at least one of a first time-domain configuration and a first bandwidth configuration of the first PRS, wherein the first time-domain configuration comprises at least one of the following: for a periodic first PRS, a maximum of 14 symbols are occupied in one period; for a non-periodic first PRS, consecutive n slots are occupied, where n is an integer greater than or equal to 1; and wherein the first bandwidth configuration indicates that the number of physical resource block (PRB) resources occupied by the first PRS is less than 24;
a resolving unit, configured to obtain measurement information and resolve the location of the first terminal based on the measurement information.

75. A processor-readable storage medium, storing a computer program, wherein the computer program is configured to cause the processor to execute the positioning method according to any one of claims 1 to 9, or the positioning method according to any one of claims 10 to 18, or the positioning method according to any one of claims 19 to 27, or the positioning method according to any one of claims 28 to 35.
